# EUROPEAN PATENT APPLICATION

(11) **EP 2 200 161 A1**
(43) Date of publication of application: **23.06.2010**
(21) Application number: 08764682.4
(22) Date of filing: 26.05.2008
(51) Int. Cl.: H02K 21/16, H02K 1/22, H02K 1/27, H02K 16/02

(54) **FLUX SHUNT CONTROL ROTARY ELECTRIC MACHINE SYSTEM**

(30) Priority: 26.07.2007 JP 2007194043; 17.08.2007 JP 2007212690; 29.10.2007 JP 2007279975; 29.10.2007 JP 2007280003; 04.12.2007 JP 2007313140; 24.01.2008 JP 2008013500; 24.01.2008 JP 2008013524; 24.03.2008 JP 2008074842; 24.03.2008 JP 2008074863; 28.04.2008 JP 2008116940; 09.05.2008 JP 2008122990
(71) Applicant: Kura Laboratory Corporation, 35-1 Urayanagi-cho Sagasyakadomonzen Ukyo-ku Kyoto-shi, Kyoto 6168423 (JP); T.N.G. Technologies Co., Ltd., Kyoto-city, Kyoto 600-8468 (JP)
(72) Inventor: ICHIYAMA, Yoshikazu, Kyoto-shi Kyoto 616-8423 (JP)
(74) Representative: Winter, Brandl, Fürniss, Hübner Röss, Kaiser, Polte Partnerschaft Patent- und Rechtsanwaltskanzlei
(86) International application number: PCT/JP2008/059649
(87) International publication number: WO 2009/013934

(57) **Abstract**

[Purpose] To provide a magnetic flux shunt control type rotary electric machine system having a good energy efficiency, in a magnet excited rotary electric machine.

[Solving Means] In a magnet excited rotary electric machine system in accordance with the present invention, a field portion opposed to an armature is divided into two so as to be constructed in such a manner as to be capable of relatively displacing, and a magnetic flux amount of a main magnetic flux path is changed by distributing a magnetic flux from a field magnet into the main magnetic flux path which passes in an armature side and a bypass magnetic flux path which does not pass in the armature, in correspondence to a relative displacement. There is provided a rotary electric machine system which has a minimum magnetic force condition setting magnetic resistances of the main magnetic flux path and the bypass magnetic flux path in such a manner as to keep a magnetic flux total amount from the field magnet constant, and can control a magnetic flux amount by suppressing a magnetic force preventing the displacement or utilizing a magnetic force appearing so as to deflect from the minimum magnetic force condition, and a magnetic flux amount control method.

## Description

### TECHNICAL FIELD

The present invention relates to a rotary electric machine system including a generator and an electric motor, having a permanent magnet field.

### BACKGROUND ART

A rotary electric machine device such as a generator extracting an electric power electromagnetically generated by a relative rotation between a permanent magnet field and an armature, or an electric motor generating a relative rotation between the permanent magnet field and the armature on the basis of an interaction between a magnetic field generated by an electric current fed to the armature and the permanent magnet field is excellent in an energy efficiency, and is widely used routinely with a technical progress of a permanent magnet. However, since the rotary electric machine has a fixed magnetic flux from a field magnet, the rotary electric machine cannot always obtain an optimum output in a wide range of a rotating speed even if it is used as the electric motor or as the generator.

In other words, in the case of the electric motor, a back electromotive force (a generated voltage) results in being too high in a high-speed rotating region, and it becomes hard to control, so that various means for weakening a field intensity have been proposed as field weakening control. Further, in the case of the generator, a constant voltage generator in accordance with field current control or a constant voltage forming circuit of a generated voltage in accordance with a semiconductor is exclusively used for setting the generated voltage to a predetermined level in the wide rotating speed range.

In the electric motor, the field weakening control in accordance with a leading phase current is widely employed; however, an energy loss is enlarged for circulating an electric current which does not contribute directly to the rotation. In the case of using an electric current excitation for control together for a permanent magnet excitation, a structure of the rotary electric machine is complicated, and an energy loss is additionally accompanied. Further, in the case of the generator, there has been a problem that a cost burden of a constant voltage forming electronic circuit is great in a large electric power. Under the environment mentioned above, a strategy devising the structure of the rotary electric machine device so as to minimize the electronic circuit control and reduce the cost as a whole of the device has been demanded, and various proposals have been carried out.

U.S.Pat. No. 3713015 discloses an alternating current generator in which a field rotor is divided into two and two field rotors are relatively displaced in a circumferential direction to effectively control a field intensity. Since the relative displacement can be mechanically held, there is an advantage that an energy loss for control is small, however, since a magnetic flux amount flowing into an armature is not changed, there is a disadvantage that an eddy current loss is large in a high-speed rotation region. Japanese Unexamined Patent Publication No. 2004-320864 and Japanese Unexamined Patent Publication No. 2004-328944 disclose a device of controlling a magnetic flux by changing the magnetic resistance of a magnetic circuit including a field magnet. Further, U.S.Pat. No. 4885493, Japanese Unexamined Patent Publication No. 2004-357357 and Japanese Unexamined Patent Publication No. 2006-246662 disclose a device of short-circuit controlling a field magnet. Generally, in the case that a movable portion exists in a magnetic circuit including a magnet, there is a magnetic force intending to displace the movable portion in a direction of enlarging a magnetic flux flowing through the magnetic circuit (a direction of reducing a magnetic resistance). The field magnet is a source for generating a force or generating an electric power in the rotary electric machine device. In a proposed example of the rotary electric machine device of controlling the magnetic resistance of a magnetic circuit or short circuiting the field magnet on the basis of a mechanical displacement, the magnetic force mentioned above is in proportion to the output of the rotary electric machine, and a large force is requested for displacement control and a vibration, a hunting or the like is caused, thereby making precise control hard. Further, an actuator having a large output, a mechanism accompanying an excessive mechanical strength or the like is necessary, and a realization accompanies difficulty.
Patent Document 1: U.S.Pat. No. 3713015
Patent Document 2: U.S.Pat. No. 4885493
Patent Document 3: Japanese Unexamined Patent Publication No. 2004-320864
Patent Document 4: Japanese Unexamined Patent Publication No. 2004-328944
Patent Document 5: Japanese Unexamined Patent Publication No. 2004-357357
Patent Document 6: Japanese Unexamined Patent Publication No. 2006-246662

### DISCLOSURE OF THE INVENTION

### SUBJECT OF THE INVENTION

Accordingly, subject of the present invention is to provide a rotary electric machine system in which magnetic flux amount weakening control is facilitated and an output can be appropriately controlled under the conditions where (1) a risk of demagnetizing a field magnet is small, and (2) a force necessary for magnetic flux amount control is held down, and a magnetic flux amount control method.

### MEANS FOR ACHIEVING THE SUBJECT

A rotary electric machine system in accordance with the present invention is constructed as follows. It has a field portion and an armature which are arranged so as to be relatively rotatable, the armature has an armature coil, the field portion is constructed by being comparted into a surface magnetic pole portion and an excitation portion. The surface magnetic pole portion has a plurality of magnetic material salient poles which are arranged in a circumferential direction in an opposite side to the armature, and has a magnetic material salient pole extension portion extended from the magnetic material salient pole and a bypass magnetic pole in an opposite side to the excitation portion. The excitation portion has a field magnet in an opposite side to the surface magnetic pole, and is arranged in such a manner as to magnetize the adjacent magnetic material salient poles to an opposite pole by opposing one magnetic pole of the field magnet to the magnetic material salient pole extension portion and the bypass magnetic pole. A main magnetic flux path by which the magnetic flux flowing into the magnetic material salient pole extension portion from the one magnetic pole of the field magnet flows back to the other magnetic pole of the field magnet via the armature and the adjacent magnetic material salient pole, and a bypass magnetic flux path by which the magnetic flux flowing into the bypass magnetic pole from the one magnetic pole of the field magnet mainly flows back to the other magnetic pole of the field magnet within the field portion are connected in parallel to the field magnet. A movable magnetic pole portion is constructed so as to be capable of relatively displace with respect to the other, in such a manner as to change an area in which the field magnet is opposed to the magnetic material salient pole extension portion and an area in which the field magnet is opposed to the bypass magnetic pole while setting any one of the surface magnetic pole portion and the excitation portion to the movable magnetic pole portion and keeping a sum of the areas constant. A magnetic flux amount circulating in the armature is controlled by displacing the movable magnetic pole portion in correspondence to the output in such a manner as to optimize the output of the rotary electric machine system.

In the structure mentioned above, since the magnetic material salient pole extension portion and the bypass magnetic pole are opposed to the field magnet via a micro gap, and the magnetic flux is approximately orthogonal to a boundary surface between them in the vicinity of the field magnet and the magnetic material, the magnetic flux from the field magnet flows into the magnetic material salient pole extension portion and the bypass magnetic pole approximately like a laminar flow, and a magnetic flux amount distributed to the magnetic material salient pole extension portion is in proportion to an opposed area of the magnetic material salient pole extension portion and the field magnet. Further, since the bypass magnetic flux path is connected to the field magnet even if the magnetic flux amount flowing into the main magnetic flux path is changed, it is possible to avoid a risk that the field magnet is demagnetized.

The present invention further makes a proposal of setting to a minimum magnetic force condition that values obtained by dividing the magnetic resistances of the bypass magnetic flux path and the main magnetic flux path by the number of series field magnets included in the respective magnetic flux paths are approximately equal. The magnetic resistance of the bypass magnetic flux path is set so as to have a magnetic resistance regulation portion constructed by a magnetic gap, a narrow portion or the like within the bypass magnetic flux path. Accordingly, since a magnetic flux total amount from the field magnet is kept constant, it is possible to precisely control the magnetic flux amount while making a magnetic force preventing the displacement of the movable magnetic pole portion small. It is possible to achieve success in making the magnetic force preventing the displacement small, only by connecting the bypass magnetic flux path to the field magnet, however, a meaning of "approximately equal" is to set the magnetic resistances of both the magnetic flux paths to the minimum magnetic force condition in such a manner as to hold down the magnetic force preventing the displacement to an output of the actuator used for the displacement or less. The magnetic resistance of the main magnetic flux path fluctuates on the basis of a relative position between the magnetic material salient pole and a magnetic material tooth, however, in the present invention, the magnetic resistance of the main magnetic flux path is set to an average value with regard to each of the relative positions between the magnetic material salient poles and the magnetic material teeth.

It is possible to hold down a magnetic flux leakage between both the magnetic flux paths by setting the magnetic resistances of both the magnetic flux paths to the minimum magnetic force condition, and it is possible to hold down the magnetic force preventing the displacement, however, there are a lot of factors which fluctuate the magnetic resistance of the magnetic flux path. In other words, a parts dimension is dispersed within a set tolerance in a mass production stage so as to fluctuate the magnetic resistance of each of the magnetic flux paths, the displaced position of the movable magnetic pole portion affects the magnetic resistance of each of the magnetic flux paths in the case that the magnetic flux leakage between the magnetic flux paths cannot be disregarded, and the magnetic resistance of each of the magnetic flux paths is changed since a magnetic permeability of the magnetic material tends to be affected by a temperature. Further, if the electric current flows through the armature coil, the magnetic resistance of the main magnetic flux path effectively fluctuates. Since the magnetic resistance of each of the magnetic flux paths fluctuates as mentioned above, the magnetic resistances of both the magnetic flux paths are set to the minimum magnetic force condition in a resting state or an average operating condition of the rotor in conformity to a specification of the rotary electric machine system.

In the structure mentioned above, the magnetic flux amount shunted into the main magnetic flux path is in proportion to the opposed area of the magnetic material salient pole extension portion and the field magnet, however, if the magnetic resistance of each of the magnetic flux paths fluctuates and a difference between the magnetic resistances of the magnetic flux paths becomes large, there is a risk that the magnetic flux distributed into the magnetic material salient pole extension portion and the bypass magnetic pole leaks automatically between the magnetic flux paths. In the present invention, there is further proposed such that the magnetic resistance between the main magnetic flux path and the bypass magnetic flux path is set larger than the difference between the magnetic resistance of the main magnetic flux path and the magnetic resistance of the bypass magnetic flux path, and even in the case that the difference appears between the magnetic resistances of the magnetic flux paths, the short-circuit magnetic flux amount between the magnetic flux paths is held down, whereby it is possible to achieve the precise control of the magnetic flux amount.

In view of the armature coil, the bypass magnetic flux path is the magnetic flux path connected in parallel to the field magnet, and has a chance of short circuiting the magnetic flux generated by the electric current flowing through the armature coil so as to generate a trouble in a motion of the rotary electric machine. In the present invention, there is proposed such that the bypass magnetic flux path including the bypass magnetic pole is structured such as to include a material enlarging an eddy current loss so as to make an alternating current magnetic flux hard to pass through. The alternating current magnetic flux is excited by an electric current fed to the armature coil in correspondence to the positions of the magnetic material salient pole and the magnetic material tooth, or an electric current flowing through the armature coil on the basis of an induced voltage, however, the alternating current magnetic flux is hard to pass through the bypass magnetic flux path on the basis of the structure mentioned above, and it is possible to suppress the effect which the existence of the bypass magnetic flux path gives to the motion of the rotary electric machine.

The present invention further makes a proposal of enabling precise magnetic flux amount control by regulating the magnetic resistance of the main magnetic flux path or the bypass magnetic flux path after manufacturing the rotary electric machine or during the operation so as to make a force necessary for displacing the movable magnetic pole portion small, on the basis of a provision of a magnetic resistance regulating means, and further makes a proposal of acquiring a parameter in connection with the minimum magnetic force condition in a learning manner during the operation. Accordingly, it is possible to make the magnetic force of preventing the displacement of the movable magnetic pole portion small by setting the magnetic resistances of both the magnetic flux paths to the minimum magnetic force condition, in each of the operating states of the rotary magnetic machine or at a time of changing the magnetic flux amount. Further, in the present invention, there is proposed such that the magnetic force appearing by the magnetic resistances of both the magnetic flux paths deflecting from the minimum magnetic force condition is utilized for displacing the movable magnetic pole portion. In other words, in the case of increasing the magnetic flux amount, the magnetic resistance of the main magnetic flux path is made smaller than a minimum axial force condition, or the magnetic resistance of the bypass magnetic flux path is made larger than a minimum magnetic force condition, and in the case of reducing the magnetic flux amount, the magnetic resistance of the magnetic flux path is regulated inversely. As specific means and methods of the magnetic resistance regulation, there is proposed the control of changing a dimension data of a magnetic gap arranged in a part of the magnetic flux path, the control of applying an electric current to a coil wound around the magnetic flux path, and the like. Further, it is possible to employ a method of controlling a magnetic characteristic of the magnetic material by utilizing a temperature, a magnetic saturation or the like.

In accordance with the present invention described above, it is possible to control the magnetic flux amount within the armature by displacing the movable magnetic pole portion, however, various known means can be applied to the means for displacing the movable magnetic pole portion. For example, there are a means for previously setting manually as a pre-set mechanism, a governor mechanism displacing the movable magnetic pole portion by utilizing a centrifugal force, a means having the actuator within the rotor in the case that the field portion exists in the rotor side, a means for displacing on the basis of an external force out of the rotor, and the like.

In the rotary electric machine, there is any of a structure in which the field portion rotates and the armature rests and an inverse structure thereof, a structure in which a cylindrical armature and the field portion are opposed via a gap in a diametrical direction, a structure in which an approximately disc-shaped armature and the field portion are opposed via a gap in an axial direction, and the like. The present invention can be applied to the rotary electric machine of any structures mentioned above having the field portion of the permanent magnetic excitation. Further, the rotary electric machine is an electric motor if the electric current to the armature coil is set to an input and the rotating force is set to an output, and is a generator if the rotating force is set to an input and the electric current from the armature coil is set to an output. An appropriate magnetic pole structure exists in the electric motor or the generator, however, is reversible, and the rotary electric machine system in accordance with the present invention can be applied to any of the electric motor and the generator.

### EFFECT OF THE INVENTION

In the rotary electric machine system having the field portion of the permanent magnet excitation, the magnetic flux of the magnetic flux magnet is controlled to be shunted into the main magnetic flux path and the bypass magnetic flux path on the basis of the mechanical displacement, thereby suppressing the magnetic force coming to the trouble of the mechanical displacement, or enabling to control the magnetic flux amount by utilizing the magnetic force. The field weakening control can be easily achieved in the magnetic flux shunt control type rotary electric machine in accordance with the present invention, and it is possible to achieve the rotary electric machine system of appropriately controlling the output at a high energy efficiency.

### BRIEF DESCRIPTION OF THE DRAWINGS

Fig. 1 is a vertical cross sectional view of a rotary electric machine in accordance with a first embodiment.
Fig. 2 is a cross sectional view showing an armature and a rotor of the rotary electric machine shown in Fig. 1.
Fig. 3 is a cross sectional view showing an armature and a rotor of the rotary electric machine shown in Fig. 1.
Fig. 4 is an exploded perspective view showing a rotor structure of the rotary electric machine shown in Fig. 1.
Figs. 5(a), 5(b) and 5(c) are vertical cross sectional views showing an excitation portion structure in the rotary electric machine shown in Fig. 1.
Figs. 6(a) and 6(b) are vertical cross sectional views showing a relationship between a displaced excitation portion and a magnetic material salient pole extension portion, in the rotary electric machine shown in Fig. 1.
Fig. 7 is a view showing a time chart acquiring a magnetic resistance regulating condition of a main magnetic flux path in a learning manner.
Fig. 8 is a block view of a rotary electric machine system carrying out field weakening control.
Fig. 9 is a vertical cross sectional view of a rotary electric machine in accordance with a second embodiment.
Fig. 10 is a cross sectional view showing an armature and a rotor of the rotary electric machine shown in Fig. 9.
Figs. 11(a) and 11(b) are cross sectional views between a displaced surface magnetic pole portion and an excitation portion in the rotary electric machine shown in Fig. 9.
Fig. 12 is a cross sectional view showing a magnetic flux in the vicinity of a field magnet of the rotary electric machine shown in Fig. 9.
Fig. 13 is a perspective view showing an engagement portion between a rotor of the rotary electric machine shown in Fig. 9, and a surface magnetic pole portion.
Fig. 14 is a view showing a relationship between a magnetic torque and a reluctance torque, and a driving current phase.
Fig. 15 is a view showing a time chart intermittently carrying out field weakening control.
Fig. 16 is a vertical cross sectional view of a rotary electric machine in accordance with a third embodiment.
Fig. 17 is a cross sectional view showing an armature and a rotor of the rotary electric machine shown in Fig. 16.
Fig. 18 is a plan view of a displacing means of an excitation portion of the rotary electric machine shown in Fig. 16.
Fig. 19 is a vertical cross sectional view of a rotary electric machine in accordance with a fourth embodiment.
Fig. 20 is a cross sectional view showing an armature and a rotor of the rotary electric machine shown in Fig. 19.
Fig. 21 is a plan view of a displacing means of an excitation portion of the rotary electric machine shown in Fig. 19.
Fig. 22 is a vertical cross sectional view of a rotary electric machine in accordance with a fifth embodiment.
Fig. 23 is a cross sectional view showing an armature and a rotor of the rotary electric machine shown in Fig. 22.
Fig. 24(a) is a perspective view of a sleeve of the rotary electric machine shown in Fig. 22, and Fig. 24(b) is a perspective view of a rotating shaft.
Fig. 25 is a vertical cross sectional view of a rotary electric machine in accordance with a sixth embodiment.
Fig. 26 is a cross sectional view showing an armature and a rotor of the rotary electric machine shown in Fig. 25.
Fig. 27 is an exploded perspective view showing the rotor of the rotary electric machine shown in Fig. 25.
Fig. 28 is a vertical cross sectional view of a rotary electric machine in accordance with a seventh embodiment.
Fig. 29 is a cross sectional view showing an armature and a rotor of the rotary electric machine shown in Fig. 28.
Fig. 30 is a cross sectional view enlarging the vicinity of a field magnet of the rotary electric machine shown in Fig. 28.
Figs. 31(a) and 31(b) are vertical cross sectional views showing a surface magnetic pole portion and a displaced excitation portion in the rotary electric machine shown in Fig. 28.
Fig. 32 is a vertical cross sectional view of a rotary electric machine in accordance with an eighth embodiment.
Fig. 33 is a cross sectional view showing an armature and a rotor of the rotary electric machine shown in Fig. 32.
Fig. 34 is a cross sectional view enlarging the vicinity of a field magnet of the rotary electric machine shown in Fig. 32.
Fig. 35 is a block diagram of a rotary electric machine system in accordance with a ninth embodiment.
Fig. 36 is a model magnetic circuit showing a main magnetic flux path connected to a field magnet and a bypass magnetic flux path.

### BEST MODE FOR CARRYING OUT THE INVENTION

A description will be given below of a rotary electric machine system in accordance with embodiments of the present invention with reference to the accompanying drawings.

### Embodiment 1

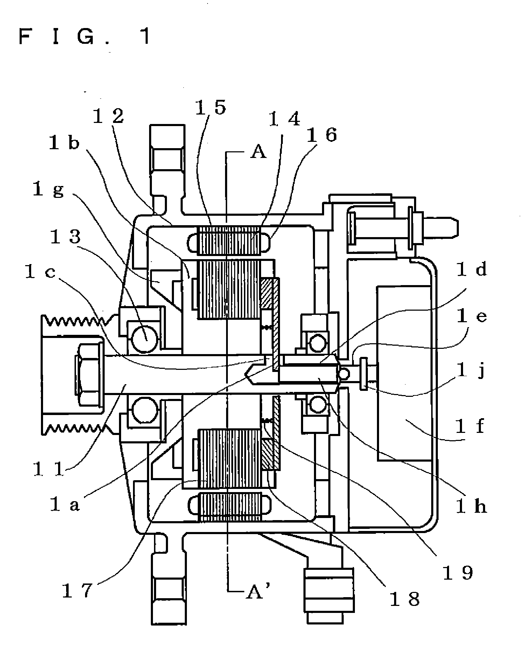

A description will be given of a first embodiment of the rotary electric machine system in accordance with the present invention with reference to Figs. 1 to 8. The first embodiment is a rotary electric machine system having a radial gap structure, and controls a magnetic flux amount flowing through an armature by displacing an excitation portion in an axial direction. It effectively equalizes magnetic resistances of a main magnetic flux path and a bypass magnetic flux path by feeding a minimum magnetic force current to an armature coil at a time of displacing the excitation portion so as to drive a rotor in an accelerating direction or a decelerating direction, and acquires the minimum magnetic force current in a learning manner.

Fig. 1 shows an embodiment in which the present invention is applied to the rotary electric machine of the radial gap structure, and a rotating shaft 11 is rotatably supported to a housing 12 via a bearing 13. The armature has a cylindrical magnetic yoke 15 fixed to the housing 12, a magnetic material tooth 14, and an armature coil 16. The rotor has a field portion 17 including a surface magnetic pole portion and an excitation portion, and a rotor support 1b, and an excitation portion 18 is structured such as to be displaced in an axial direction as a movable magnetic pole portion. The rotating shaft 11 is constructed hollow, and a sliding rod 1h arranged within a hollow portion 1d, a push rod 1e, an actuator 1f, a spring 19, a slit 1c provided in the rotating shaft 11, and an excitation portion support 1a coming into contact with the sliding rod 1h via the slit 1c construct a means for displacing the excitation portion 18 in an axial direction. Reference symbol 1j denotes a load cell, and reference symbol 1g denotes a cooling fan fixed to the rotor.

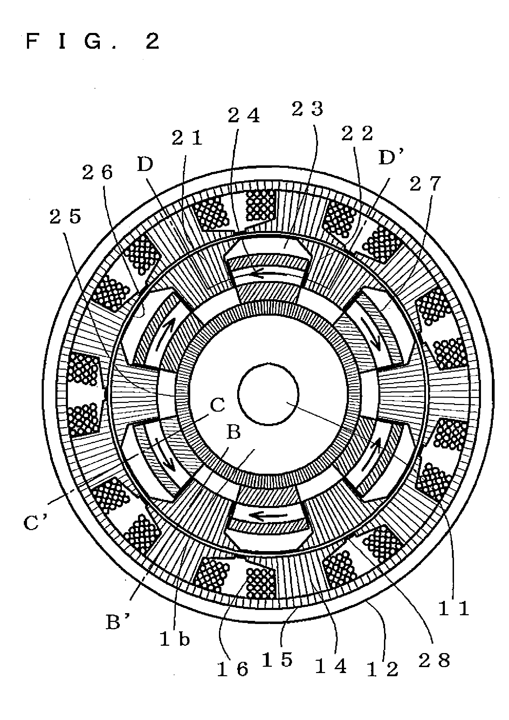

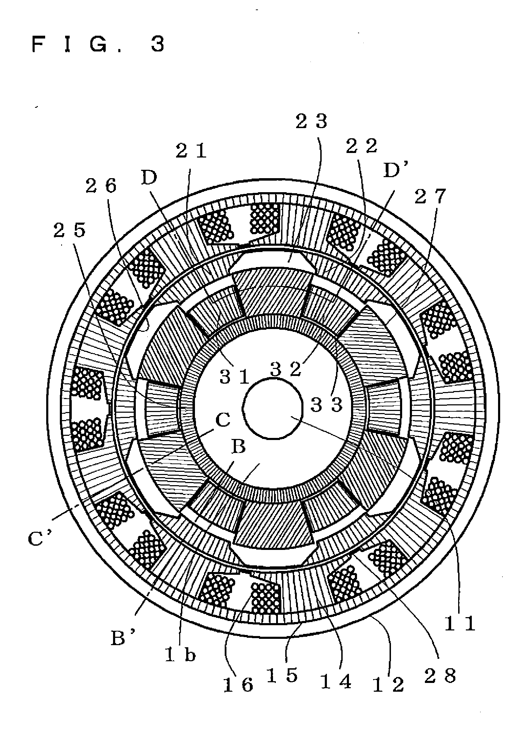

Figs. 2 and 3 show a cross sectional view of the armature and the rotor along a line A-A' in Fig. 1. The excitation portion 18 is structured such that a field magnet and a non-magnetic material are alternately arranged in the axial direction, Fig. 2 shows a cross sectional view of the armature and the rotor at a position in the axial direction including the field magnet of the excitation portion 18, and Fig. 3 shows a cross sectional view of the armature and the rotor at a position in the axial direction in which the field magnet of the excitation portion 18 is not included, respectively, and reference numerals are attached a part of the constructing portions for explaining an interrelation. The armature includes the cylindrical magnetic yoke 15 fixed to the housing 12, a plurality of magnetic material teeth 14 extending in a diametrical direction from the cylindrical magnetic yoke 15 and having a magnetic gap in a circumferential direction, and the armature coil 16 wound around the magnetic material teeth 14. The present embodiment has nine armature coils 16, and they are connected in three phases.

A saturable magnetic material binding portion 28 which is short in the diametrical direction is provided in a leading end of the magnetic material tooth 14 of the armature with respect to the leading end portion of the adjacent magnetic material tooth 14. The magnetic material tooth 14 and the saturable magnetic material binding portion 28 are formed as the armature by punching a silicone steel plate by a mold so as to laminate, winding the armature coil 16 and thereafter combining with the cylindrical magnetic yoke 15. The saturable magnetic material binding portion 28 is integrated with the magnetic material tooth 14 so as to improve a support strength of the magnetic material tooth 14, and suppress an unnecessary vibration of the magnetic material tooth 14. Since a length in the diametrical direction of the saturable magnetic material binding portion 28 is set short so as to be formed as an easily magnetically saturating shape, it is easily saturated by a magnetic flux generated by the armature coil 16 or a magnetic flux from the field magnet, and sets a short circuit of the magnetic flux generated by the armature coil 16 and the magnetic flux to a short amount. If an electric current is fed to the armature coil 16, the saturable magnetic material binding portion 28 is magnetically saturated together with a time so as to leak the magnetic flux to the circumference, however, since a boundary of an effective magnetic gap appearing in the magnetically saturated saturable magnetic material binding portion 28 is not clear, a distribution of the leaking magnetic flux becomes gentle, and the saturable magnetic material binding portion 28 loosens a time change of the force applied to the magnetic material tooth 14 in this regard so as to contribute to a vibration suppression.

In Figs. 2 and 3, the field portion 17 of the rotor is constructed by being comparted into the surface magnetic pole portion and the excitation portion 18, the surface magnetic pole portion is structured such as to alternately have a magnetic material salient pole and a magnetic gap portion in a circumferential direction in an opposite surface to the magnetic material tooth 14, the adjacent magnetic material salient poles are represented by reference numerals 21 and 22, and the magnetic gap portion is denoted by reference numeral 23. The magnetic material salient poles 21 and 22 are constructed as a construction coupled by a narrow saturable magnetic material portion 26 by punching a silicone steel plate by a predetermined mold, and laminating. A portion of a non-magnetic material including the magnetic gap portion 23 is structured such as to be filled with a material which is non-magnetic and has a large specific resistance, resin or the like.

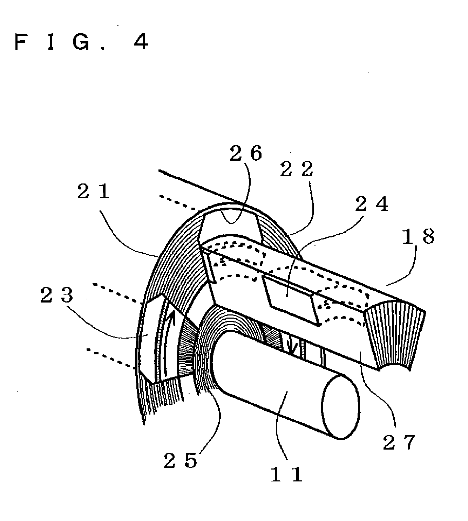

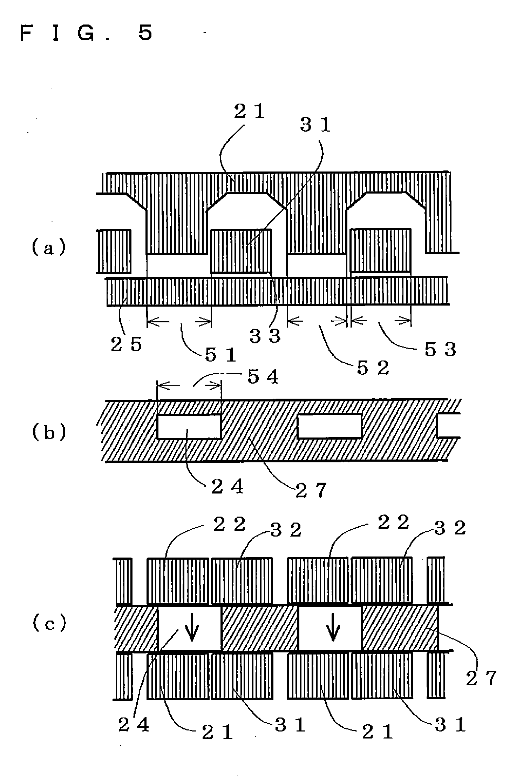

A description will be given of a relationship between the surface magnetic pole portion and the excitation portion 18 and a structure thereof further with reference to Figs. 4 and 5. Fig. 4 is an exploded perspective view showing a three-dimensional structure by extracting a part of the excitation portion 18 so as to easily understand. Fig. 5(a) shows a cross section of the magnetic material salient pole, the bypass magnetic pole and the like in an axial direction along a line B-B' in Figs. 2 and 3, Fig. 5(b) shows a cross section of the excitation portion 18 in an axial direction along a line C-C' in Figs. 2 and 3, and Fig. 5(c) shows a cross sectional view of a magnetic material salient pole extension portion, the bypass magnetic pole and the excitation portion 18 in an axial direction along a part in a circumferential direction shown by a line D-D' in Figs. 2 and 3.

As shown in Fig. 5(a), an extension portion of the magnetic material salient pole 21 has a periodical cut portion in the axial direction, and the bypass magnetic pole 31 is arranged in the cut portion. An extension portion of the magnetic material salient pole 22 which is adjacent in the circumferential direction has the same structure, and a bypass magnetic pole 32 is arranged. As shown in Figs. 2, 3 and 5(a), the bypass magnetic poles 31 and 32 are magnetically connected to a cylindrical base magnetic pole 25 via a micro gap 33.

As shown in Fig. 5(b) and 4, the excitation portion 18 has a field magnet 24 and a non-magnetic material 27 alternately in an axial direction, and is arranged between the extension portion of the magnetic material salient pole 21 and the extension portion of the magnetic material salient pole 22 which are adjacent in the circumferential direction, and between the bypass magnetic pole 31 and the bypass magnetic pole 32 so as to be constructed slidably in the axial direction.

Fig. 5(c) is a cross sectional view showing a relationship among the extension portion of the adjacent magnetic material salient pole 21, the extension portion of the magnetic material salient pole 22, the adjacent bypass magnetic pole 31, the bypass magnetic pole 32 and the excitation portion 18, and shows a state in which both ends of the field magnet 24 are opposed to the extension portion of the magnetic material salient pole 21 and the extension portion of the magnetic material salient pole 22 which are adjacent in the circumferential direction, and are further opposed to the adjacent bypass magnetic pole 31 and the bypass magnetic pole 32. The bypass magnetic pole 31, the bypass magnetic pole 32, and the cylindrical base magnetic pole 25 are constructed by a soft iron block so as to be structured such that an alternating current magnetic flux is hard to pass. An arrow within the field magnet 24 indicates a magnetization direction.

The structure is made such that a main magnetic flux path by which the magnetic flux flowing into the extension portion of the magnetic material salient pole 21 from one magnetic pole of the field magnet 24 flows back to the other magnetic pole of the field magnet 24 via the magnetic material salient pole 21, the magnetic material tooth 14, the magnetic material salient pole 22, and the extension portion of the magnetic material salient pole 22, and a bypass magnetic flux path by which the magnetic flux flowing into the bypass magnetic pole 31 from one magnetic pole of the field magnet 24 flows back to the other magnetic pole of the field magnet 24 via the base magnetic pole 25 and the bypass magnetic pole 32 are connected in parallel to the field magnet 24, and it is possible to change an opposed area between the field magnet 24, and the extension portion of the magnetic material salient pole 21 and the extension portion of the magnetic material salient pole 22 on the basis of the displacement in the axial direction of the excitation portion 18 so as to change a magnetic flux amount distributing into the main magnetic flux path and the bypass magnetic flux path. The magnetic resistance of the bypass magnetic flux path is set approximately equal to the magnetic resistance of the main magnetic flux path at a resting time of the rotary electric machine, while setting the opposed area and the length in the micro gap 33 between the bypass magnetic poles 31 and 32 and the cylindrical base magnetic pole 25. Since the numbers of the field magnets included in series within the bypass magnetic flux path and the main magnetic flux path are equal, the magnetic resistances of the both are set equal. This is a minimum magnetic force condition, and since the magnetic resistance of the main magnetic flux path fluctuates on the basis of a relative position between the magnetic material salient pole 21 and the magnetic material tooth 14, the magnetic resistance of the bypass magnetic flux path is set to be approximately equal to the averaged magnetic resistance.

In the present embodiment, a length 54 of the field magnet 24 is set to be equal to a distance 51 from a left end of the extension portion of the magnetic material salient pole 21 to a left end of the bypass magnetic pole 31, as shown in Figs. 5(a) and 5(b), and a length 52 of the extension portion of the magnetic material salient pole 21 and a length 53 of the bypass magnetic pole 31 are set equal. The field magnet 24 is always opposed to the extension portion of the magnetic material salient pole 21 and the bypass magnetic pole 31, and length of displacement is limited within the length 52 of the extension portion of the magnetic material salient pole 21. Accordingly, since a sum in which the field magnet 24 is opposed to the extension portion of the magnetic material salient pole 21 and the bypass magnetic pole 31 is always constant, and the magnetic resistances of the main magnetic flux path and the bypass magnetic flux path are set to be equal (the minimum magnetic force condition), a total magnetic flux amount from the field magnet 24 is always constant, and a magnetic force preventing the displacement in the axial direction of the excitation portion is not theoretically generated.

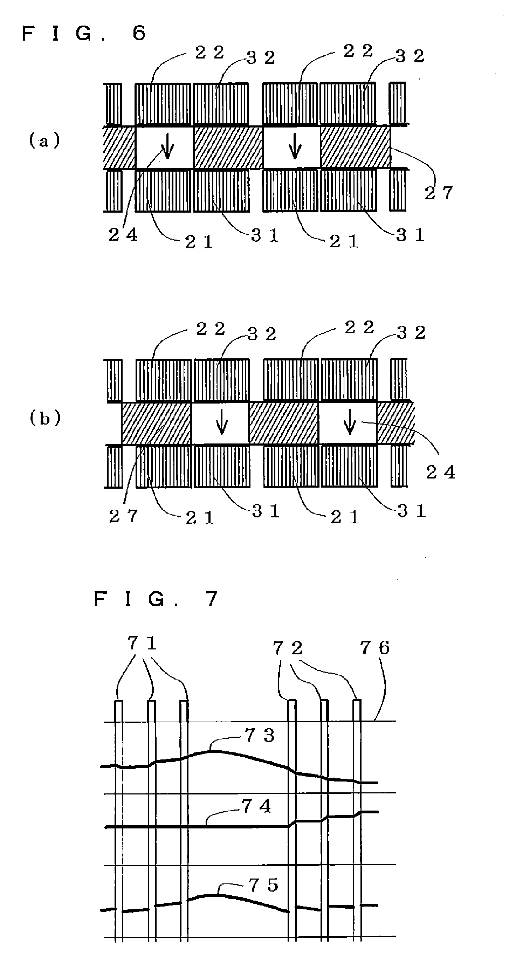

Fig. 6 shows a case that the position of the excitation portion 18 is difference in correspondence to Fig. 5(c). Fig. 6(a) shows a state in which the field magnet 24 is opposed in a maximum area to the extension portion of the magnetic material salient pole 21 and the extension portion of the magnetic material salient pole 22, and feeds most of the magnetic flux to the main magnetic flux path. Fig. 6(b) shows a state in which the field magnet 24 is opposed in a maximum area to the bypass magnetic poles 31 and 32, and feeds most of the magnetic flux to the bypass magnetic flux path. In an intermediate state of the cases shown in Figs. 6(a) and 6(b), the field magnet 24 is opposed to both of the extension portion of the magnetic material salient pole 21 and the bypass magnetic pole 31, and the magnetic flux from the field magnet 24 flows into the main magnetic flux path in proportion to the opposed area to the extension portion of the magnetic material salient pole 21, and the magnetic flux amount of the main magnetic flux path is controlled.

In the structure mentioned above, since the extension portion of the magnetic material salient pole 21 and the bypass magnetic pole 31 are opposed to the field magnet 24 via the micro gap, and the magnetic flux is approximately orthogonal to the boundary surface of the field magnet 24 and the magnetic material in the vicinity of them, the magnetic flux from the field magnet 24 flows into the extension portion of the magnetic material salient pole 21 and the bypass magnetic pole 31 approximately like a laminar flow, and the magnetic flux amount distributed into the extension of the magnetic material salient pole 21 is in proportion to the opposed area of the extension portion of the magnetic material salient pole 21 and the field magnet 24. In order to maintain the laminar flow like magnetic flux shunt, it is desirable to slide for making the micro gap as small as possible, the magnetic resistance between the main magnetic flux path and the bypass magnetic flux path is set to be larger than the difference between the average magnetic resistance of the main magnetic flux path and the magnetic resistance of the bypass magnetic flux path by enlarging the gap in the portion which is away from the opposed surface to the field magnet 24, and the short circuit of the distributed magnetic flux is made small.

Generally, in the case that the movable portion exists in a part of the magnetic circuit including the magnet, a magnetic force intending to move the movable portion appears in a direction enlarging the magnetic flux amount (which is the same meaning as a direction making the magnetic resistance of the magnetic circuit small). Prior to the present invention, there have been a lot of proposals of intending to short circuiting the field magnet by displacing a part of the magnetic circuit or changing the magnetic resistance of the magnetic flux path for the purpose of controlling the magnetic flux. However, the field magnet is a source of generating the magnetic torque or the electric power, in the rotary electric machine, and the magnetic force preventing the displacement is large, and makes precise magnetic flux amount control hard. In accordance with the structure of the present invention described above, the magnetic force is held down, and the precise magnetic flux amount control can be achieved.

In the present embodiment, the field magnet is opposed to the magnetic material salient pole extension portion and the bypass magnetic pole via the micro gap. It is hard to exactly equalize the magnetic resistances of the main magnetic flux path and the bypass magnetic flux path, and if being opposed to the magnetic material salient pole extension portion and the bypass magnetic pole via the magnetic material from the field magnet in the case that both the magnetic resistances have a difference, the magnetic flux from the field magnet is shunted within the magnetic material in correspondence to the magnetic resistances of the respective magnetic flux paths, the magnetic flux flowing through the main magnetic flux path is not in proportion to the opposed area between the field magnet and the magnetic material salient pole extension portion, and it becomes hard to control the magnetic flux amount. In the case of being opposed to the magnetic material salient pole extension portion and the bypass magnetic pole via the magnetic material from the field magnet due to a constraint on the construction, the magnetic material is structured as a magnetic material having a strong anisotropy or a magnetic material having a small thickness such that the magnetic flux is hard to be distributed within the magnetic material. This structure is included in the point of the present invention in such a point that the magnetic flux is substantially distributed by an end surface of the field magnet.

The description is given of the matter that the magnetic flux amount flowing in the armature can be controlled by displacing the excitation portion 18 in the axial direction. A description will be given below of a means for displacing the excitation portion 18 in the axial direction with reference to Fig. 1. Three protrusion portions of the excitation portion support 1a come into contact with the sliding rod 1h via three slits 1c provided in the rotating shaft 11, and the sliding rod 1h is structured such as to be slidable in the axial direction within the hollow portion of the rotating shaft 11 so as to come into contact with the push rod 1e of the actuator 1f. The spring 19 is arranged between the rotor support 1b and the excitation portion support 1a so as to energize the excitation portion support 1a in a rightward direction, and since the actuator 1f is structured such as to drive the push rod 1e in the axial direction, the excitation portion support 1a and the field magnet 24 are displaced in the axial direction by the actuator 1f. The actuator 1f is constructed by a step motor and a screw mechanism so as to rotationally drive the step motor, thereby driving the push rod 1e in the axial direction, and is structured such as to hold the position in the axial direction of the push rod 1e in the case that the step motor is not driven.

If the displacement of the excitation portion 18 stay within a range shown in Figs. 6(a) and 6(b), a sum of the respective opposed areas of the field magnet 24, and the extension portion of the magnetic material salient pole 21 and the bypass magnetic pole 31 is constant, these areas are changed in accordance with the displacement, and the magnetic flux amount shunted into the main magnetic flux path and the displacement amount are approximately in proportion. It is possible to carry out the magnetic flux amount control even if the displacement amount goes beyond the range mentioned above, the relationship between the displacement amount and the magnetic flux amount flowing in the main magnetic flux path becomes indefinite, and the magnetic flux amount control becomes complicated. In the present embodiment, the position and the length in the axial direction of the slit 1c are set in such a manner as to stay the displacement amount within the range mentioned above so as to form a displacement regulating means.

It is possible to hold down the magnetic flux leakage between both the magnetic flux paths by setting the magnetic resistances of the main magnetic flux path and the bypass magnetic flux path to the minimum magnetic force condition so as to hold down the magnetic force preventing the displacement mentioned above, however, there are a lot of factors which fluctuate the magnetic resistance of the magnetic flux path. In other words, a parts dimension disperses within a set tolerance in a mass production stage so as to fluctuate the magnetic resistance of each of the magnetic flux paths, and in the case that the magnetic flux leakage between the magnetic flux paths cannot be disregarded, the displaces position of the movable magnetic pole portion affects the magnetic resistance of each of the magnetic flux paths, and since a magnetic permeability of the magnetic material tends to be affected by the temperature, the magnetic resistance of each of the magnetic flux paths is changed. Further, if the electric current flows in the armature coil, the magnetic resistance of the main magnetic flux path effectively fluctuates.

In the present embodiment, the magnetic flux control is intermittently carried out during the operation of the rotary electric machine as mentioned below. In the case of feeding the electric current in the direction accelerating the rotor to the armature coil while setting the rotary electric machine to the electric motor, the magnetic flux is pulled in, and the magnetic flux amount flowing in the armature is intended to be enlarged, and in the case of driving so as to decelerate the rotor, inversely carried out. Accordingly, in the case of driving the rotor so as to accelerate or decelerate, the magnetic resistance of the main magnetic flux path becomes effectively small or large, respectively. The electric current fed to the armature coil is set to a minimum magnetic force current in such a manner as to equalize the magnetic resistances of the main magnetic flux path and the bypass magnetic flux path to each other, the magnetic resistances of the main magnetic flux path and the bypass magnetic flux path are effectively equalized by feeding the minimum magnetic force current to the armature coil at a time of displacement controlling the movable magnetic pole portion so as to drive the rotor in the accelerating direction or the decelerating direction, and the actuator is simultaneously driven. Further, the minimum magnetic force current is adapted to the magnetic resistance change of the main magnetic flux path due to various reasons as a structure acquiring in a learning manner during the operation of the rotary electric machine.

A description will be given of the structure and a procedure for acquiring the minimum magnetic force current in the learning manner with reference to Figs. 1 and 7. In Fig. 1, reference symbol 1j denotes a load cell, which detects a force applied to the push rod 1e. If the magnetic resistances of the main magnetic flux path and the bypass magnetic flux path have a difference, the field magnet 24 is exposed to the magnetic force displacing the opposed area to the extension portion of the magnetic material salient pole 21 or the bypass magnetic pole 31 coming to the magnetic pole in the side having the smaller magnetic resistance in the increasing direction. Since the actuator 1f is going to hold the position in the axial direction, the pressures within the sliding rod 1h and the push rod 1e are changed, and it is possible to detect the magnetic force by the load cell 1j.

Fig. 7 is a time chart for intermittently controlling the magnetic flux amount, and a horizontal axis 76 indicates a time. Reference numeral 71 denotes a learning section, and reference numeral 72 indicates a magnetic flux amount control section. In the other time zone, the rotating drive is carried out if the rotary electric machine is the electric motor, and the generated power is extracted if it is the generator. In the learning section 71, the rotor is driven by changing the condition of the electric current fed to the armature coil 16, and the output of the load cell 1j in the period is monitored. The electric current in which the output of the load cell 1j becomes small is a minimum magnetic force current effectively equalizing the magnetic resistances of the main magnetic flux path and the bypass magnetic flux path to each other, and the minimum magnetic force current is stored in the control device or reset.

Reference numeral 72 denotes a section of controlling the magnetic flux amount, which feeds the minimum magnetic force current obtained in the learning process mentioned above to the armature coil 16, and simultaneously controls the actuator 1f so as to displace the excitation portion 18 in the axial direction. Since the magnetic resistances of the main magnetic flux path and the bypass magnetic flux path are effectively equalized approximately, the control by the actuator 1f is smoothly carried out. In this case, since the rotor is driven as much as short time, the rotating speed 73 is changed. The rotor is decelerated in the control section 72 of the magnetic flux amount, and a state of being decelerated as much as slight is shown in the rotating speed 73. Reference numeral 74 denotes a magnetic flux amount, and there is shown a state in which the magnetic flux amount 74 is not changed since the actuator 1f holds the position in the axial direction in the learning section 71, but the magnetic flux amount 74 is changed in the magnetic flux amount control section 72.

Reference numeral 75 denotes a generated voltage in the case that the rotary electric machine is the generator. There is shown a state in which the generated voltage 75 is disconnected since the generated power cannot be extracted in the learning section 71 and the magnetic flux amount control section 72, and there is shown a state in which the generated voltage 75 is changed in the vicinity of the magnetic flux amount control section 72. In the present embodiment, since the magnetic resistance of the bypass magnetic flux path is set to be equal to the magnetic resistance of the main magnetic flux path at a resting time, a level at which the minimum magnetic force current fed to the armature coil 16 at a time of controlling the magnetic flux amount accelerates or decelerates is held down.

In the present embodiment, the minimum magnetic force current is acquired by setting the learning section 71, however, it is possible to employ a learning method in which the learning section 71 is not particularly set. For example, in the case that the rotary electric machine is the electric motor, a relationship between the current fed to the armature for driving the rotor and the output of the load cell 1j is always monitored, and the electric current at which the output of the load cell 1j becomes smallest is set to the minimum magnetic force current.

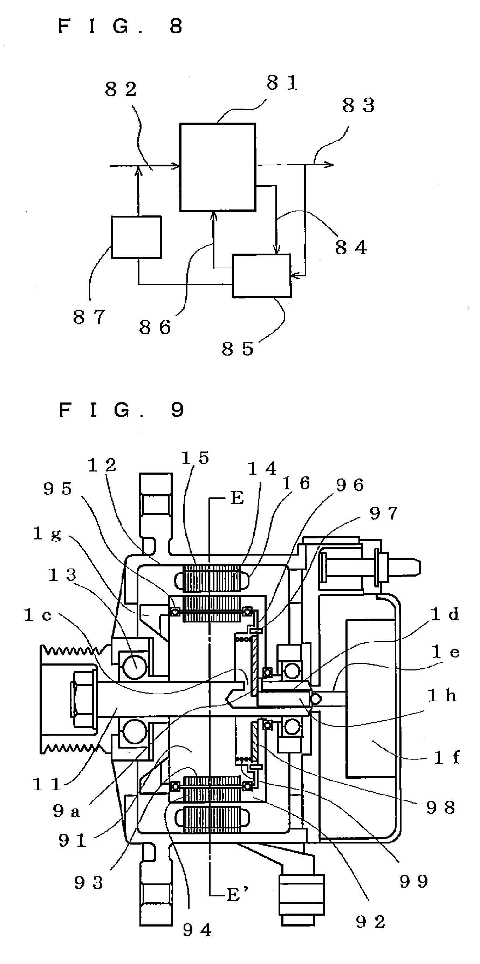

As mentioned above, in the rotary electric machine shown in Figs. 1 to 7, there is shown the matter that the magnetic flux amount flowing in the armature can be controlled by controlling the excitation portion 18 so as to displace in the axial direction. A description will be given of a rotary electric machine system controlling the output appropriately by controlling the magnetic flux amount with reference to a block diagram in Fig. 8. Fig. 8 shows the block diagram of the rotary electric machine system carrying out the magnetic flux amount control. In Fig. 8, a rotary electric machine 81 has an input 82 and an output 83, and a control device 85 controls a magnetic flux amount of the rotary electric machine 81 via a control signal 86 by using a state signal 84 including the output 83 of the rotary electric machine 81 and a position of the excitation portion 18 as an input. Reference numeral 87 denotes a drive circuit of the armature coil 16. If the rotary electric machine 81 is used as the generator, the input 82 is a rotating force, and the output 83 comes to a generated power. If the rotary electric machine 81 is used as the electric motor, the input 82 is a drive current fed to the armature coil 16 from the drive circuit 87, and the output 83 comes to a rotating torque and a rotating speed.

A description will be given of an electric motor system which sets the rotary electric machine device as the electric motor and appropriately controls the rotating force by carrying out field weakening control. The control device 85 feeds a minimum magnetic force current to the armature coil 16 via the drive circuit 87 in a time zone of the magnetic flux amount control section 72 so as to effectively equalize the magnetic resistances of the main magnetic flux path and the bypass magnetic flux path to each other, at a time when the rotating speed corresponding to the output 83 becomes larger than a predetermined value so as to reduce the magnetic flux amount flowing in the armature, and drives the actuator 1f by means of the control signal 86 so as to displace the excitation portion 18 in a rightward direction in Figs. 6(a) and 6(b) and reduce the area in which the field magnet 24 and the extension portion of the magnetic material salient pole 21 are opposed. After the displacement control, the actuator 1f is stopped so as to hold the position in the axial direction of the excitation portion 18. When the rotating speed becomes smaller than the predetermined value so as to enlarge the magnetic flux amount flowing in the armature, the minimum magnetic force current is fed to the armature coil 16 via the drive circuit 87 in the time zone of the magnetic flux amount control section 72 so as to effectively equalize the magnetic resistances of the main magnetic flux path and the bypass magnetic flux path to each other, and the actuator 1f is driven by means of the control signal 86 so as to displace the excitation portion 18 in a leftward direction in Figs. 6(a) and 6(b) and increase the area in which the field magnet 24 and the extension portion of the magnetic material salient pole 21 are opposed. After the displacement control, the actuator 1f is stopped so as to hold the position in the axial direction of the excitation portion 18.

A description will be given of a constant voltage generator system which sets the rotary electric machine device to the generator, and controls the generated voltage to a predetermined voltage by carrying out the field weakening control. The control device 85 feeds the minimum magnetic force current to the armature coil 16 via the drive circuit 87 in the time zone of the magnetic flux amount control section 72 so as to effectively equalize the magnetic resistances of the main magnetic flux path and the bypass magnetic flux path to each other, at a time when the generated voltage corresponding to the output 83 becomes larger than a predetermined value so as to reduce the magnetic flux amount flowing in the armature, and drives the actuator 1f by means of the control signal 86 so as to displace the excitation portion 18 in the rightward direction in Figs. 6(a) and 6(b) and reduce the area in which the field magnet 24 and the extension portion of the magnetic material salient pole 21 are opposed. After the displacement control, the actuator 1f is stopped so as to hold the position in the axial direction of the excitation portion 18. When the generated voltage becomes smaller than the predetermined value so as to enlarge the magnetic flux amount flowing in the armature, the minimum magnetic force current is fed to the armature coil 16 via the drive circuit 87 in the time zone of the magnetic flux amount control section 72 so as to effectively equalize the magnetic resistances of the main magnetic flux path and the bypass magnetic flux path to each other, and the actuator 1f is driven by means of the control signal 86 so as to displace the excitation portion 18 in the leftward direction in Figs. 6(a) and 6(b) and increase the area in which the field magnet 24 and the extension portion of the magnetic material salient pole 21 are opposed. After the displacement control, the actuator 1f is stopped so as to hold the position in the axial direction of the excitation portion 18.

Since the correcting means of the magnetic resistance of the main magnetic flux path employed in the present embodiment accompanies the accelerating drive or the decelerating drive of the rotary electric machine, it has a chance of affecting the drive of the rotary electric machine in the case that the magnetic flux amount control continues over a long time. However, since both the change of the rotating speed and the changing control of the magnetic flux amount are continuously carried out in a normal operating state, it does not become a big problem. Further, in the case that the magnetic flux amount is changed more than a predetermined level, any big trouble does not appear by employing a method of intermittently execute by a plurality of times.

In the case that the magnetic resistance of the main magnetic flux path can be set within an allowable range from a design value, it is possible to make the process of regulating the magnetic resistance of the main magnetic flux path during the operation which is employed in the present embodiment unnecessary. Further, in the case that the magnetic resistance of the main magnetic flux path in the operation is not largely shifted from the initial state, it is possible to employ only the initial regulating set after assembling the rotary electric machine and omit the learning process employed in the present embodiment. It is possible to partly employ the magnetic resistance correcting method of the main magnetic flux path in the present embodiment so as to form an optimum rotary electric machine system in accordance with the specification or the operating condition of the rotary electric machine system,

### Embodiment 2

A description will be given of a second embodiment of the rotary electric machine system in accordance with the present invention with reference to Figs. 9 to 15. The second embodiment is a rotary electric machine system which controls a magnetic flux amount flowing in the armature by comparting the field magnetic portion of the rotor into the surface magnetic pole portion and the excitation portion, and setting the surface magnetic pole portion to the movable magnetic pole portion so as to intermittently rotate and dispalce with respect to the excitation portion.

Fig. 9 shows an embodiment in which the present invention is applied to the rotary electric machine having the radial gap structure, and the rotating shaft 11 is rotatably supported to the housing 12 via the bearing 13. The structure of the armature is the same as the first embodiment. The field portion of the rotor has a surface magnetic pole portion 94 opposed to the magnetic material tooth 14 in a diametrical direction, and an excitation portion 93, the excitation portion 93 is fixed to a rotor support 91, and the surface magnetic pole portion 94 is rotatably supported to the rotor support 91 and the excitation portion 93 via a bearing 95 together with a surface magnetic pole portion support 92.

The rotating shaft 11 is formed as a hollow structure, and has the sliding rod 1h which is arranged within the hollow portion 1d so as to be slidable in the axial direction, and the sliding rod 1h is driven in an axial direction by the actuator 1f via the push rod 1e. A spring 99 and a clutch plate 98 are arranged in the rotor support 91, and the spring 99 is energized so as to bring the clutch plate 98 into pressure contact with the surface magnetic pole portion support 92. The clutch plate 98 has three protrusion portions 9a in an inner circumferential side, and the protrusion portions 9a engages in a penetrating manner the slit portion 1c provided in the cylinder wall of the rotating shaft 11 so as to transmit mutually a rotating force between the rotating shaft 11 and the clutch plate 98. Further, the inner circumferential side protrusion portion 9a of the clutch plate 98 is structured such as to come into contact with the end portion of the sliding rod 1h. A concave portion 96 provided in the rotor support 91 and a displacement regulating protrusion portion 97 fixed to the surface magnetic pole portion support 92 construct an engagement portion for regulating the displacement of the surface magnetic pole portion 94.

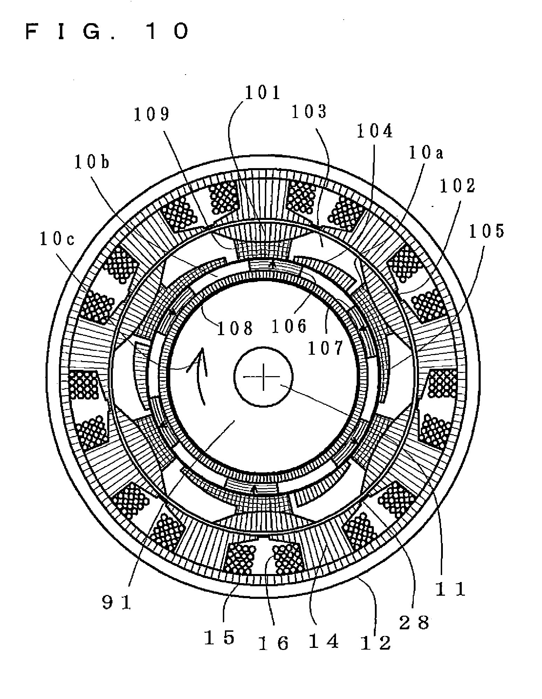

Fig. 10 shows a cross sectional view or the armature and the rotor along a line E-E' in Fig. 9, and shows by attaching reference numerals to a part of the constructing portions for explaining the mutual relationship.
The structure of the armature is the same as the first embodiment, and a description thereof will be omitted.

In Fig. 10, the field portion of the rotor is comparted into the surface magnetic pole portion 94 and the excitation portion 93, and is arranged via a micro gap. Magnetic material salient poles arranged at an equal pitch in a circumferential direction are arranged in a side of the surface magnetic pole portion 94 opposed to the magnetic material tooth 14 so as to hold the magnetic gap portion therebetween, the adjacent magnetic material salient poles are shown by reference numerals 101 and 102, and the magnetic gap portion is shown by reference numeral 103 representatively. Extension portions of the magnetic material salient poles arranged at the equal pitch in the circumferential direction are arranged in the side of the surface magnetic pole portion 94 opposed to the excitation portion 93, bypass magnetic poles are arranged therebetween, and an extension portion 109 of the first magnetic material salient pole 101, a first bypass magnetic pole 104, an extension portion 10a of the second magnetic material salient pole 102, and a second bypass magnetic pole 105 are repeatedly arranged in accordance with this order. The first magnetic material salient pole extension portion 109, the first bypass magnetic pole 104, and the second magnetic material salient pole extension portion 10a are magnetically separated from each other, the first bypass magnetic pole 104 and the second magnetic material salient pole extension portion 10a are arranged via a micro gap, and the second magnetic material salient pole extension portion 10a and the second bypass magnetic pole 105 are connected so as to be continuously formed. Reference symbol 10c denotes a rotating direction of the rotor.

The first magnetic material salient pole 101 and the second magnetic material salient pole 102 are formed by punching a silicon steel plate by a predetermined mold and laminating in an axial direction, and are fixed to the surface magnetic pole portion support 92 by filling a resin in the magnetic gap portion 103. The first magnetic material salient pole extension portion 109, the first bypass magnetic pole 104, the second magnetic material salient pole extension portion 10a and the second bypass magnetic pole 105 form a slot having the same cross sectional shape so as to be constructed by inserting a block made of a soft iron.

The excitation portion 93 is constructed by a cylindrical magnetic core 108 fixed to the rotor support 91, and field magnets 106 and 107 arranged in the cylindrical magnetic core 108. Reference symbol 10b denotes a magnetic gap portion. The field magnet 106 is opposed to the first magnetic material salient pole extension portion 109 and the first bypass magnetic pole 104, and the field magnet 107 is opposed to the second magnetic material salient pole extension portion 10a and the second bypass magnetic pole 105. The adjacent field magnets 106 and 107 have mutually inverse diametrical magnetizations, and magnetize the first magnetic material salient pole 101 and the second magnetic material salient pole 102 to mutually different poles. Arrows illustrated in the field magnets 106 and 107 show respective magnetization directions.

An angle length in a circumferential direction of the first magnetic material salient pole extension portion 109 is set smaller than an angle length in a circumferential direction of the first bypass magnetic pole 104, an angle length in a circumferential direction of the field magnet 106 is set so as to become equal to a sum of an angle length in the circumferential direction of the first magnetic material salient pole extension portion 109, and an angle length in a circumferential direction of a gap between the first magnetic material salient pole extension portion 109 and the first bypass magnetic pole 104, and a relative displacement amount between the surface magnetic pole portion 94 and the excitation portion 93 is set to be equal to or less than the angle length in the circumferential direction of the first magnetic material salient pole extension portion 109.

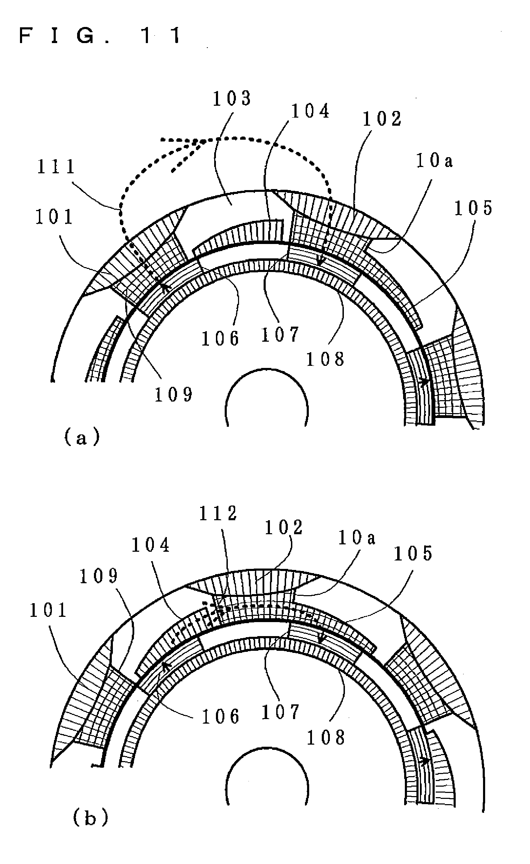

Fig. 11 is a part of a cross sectional view of the rotor shown in Fig. 10, and is a view for explaining a principle and operation for controlling the magnetic flux flowing into the armature side. Figs. 11(a) and 11(b) respectively show cases that the relative displacement amount between the surface magnetic pole portion 94 and the excitation portion 93 is minimum and maximum, that is, cases that the magnetic flux amount flowing into the armature side are made maximum and minimum.

In Fig. 11(a), the field magnet 106 is opposed to the first magnetic material salient pole extension portion 109 at a maximum angle length in the circumferential direction, and is opposed to the first bypass magnetic pole 104 in a part. There is formed a main magnetic flux path 111 in which a magnetic flux flowing into the first magnetic material salient pole extension portion 109 from one magnetic pole of the field magnet 106 flows back to the other magnetic pole of the field magnet 106 via the first magnetic material salient pole 101, the magnetic material tooth 14, the second magnetic material salient pole 102, the second magnetic material salient pole extension portion 10a, the field magnet 107 and the cylindrical magnetic core 108, and most of the magnetic flux flows in the main magnetic flux path 111 in the case of Fig. 11(a). In Fig. 11(b), the field magnet 106 is opposed to the first magnetic material salient pole extension portion 109 at the minimum angle length in the circumferential direction, and is opposed to the first bypass magnetic pole 104 at the maximum angle length in the circumferential direction. The magnetic flux flowing into the first bypass magnetic pole 104 from one magnetic pole of the field magnet 106 constructs a bypass magnetic flux path 112 flowing back to the other magnetic pole of the field magnet 106 via the second magnetic material salient pole extension portion 10a, the second bypass magnetic pole 105, the field magnet 107, and the cylindrical magnetic core 108, and the case of Fig. 11(b) shows a state in which most of the magnetic flux flows in the bypass magnetic flux path 112.

Since the magnetic flux from the field magnet 106 flows in a direction which is orthogonal to an end surface in the vicinity of the field magnet 106, it is like a laminar flow, and is distributed into the first magnetic material salient pole extension portion 109 and the first bypass magnetic pole 104 in proportion to the respective angle lengths in the circumferential direction approximately opposed to the first magnetic material salient pole extension portion 109 and the first bypass magnetic pole 104. In the present embodiment, since the magnetic resistances of the main magnetic flux path 111 and the bypass magnetic flux path 112 are set their data in such a manner that they are approximately equal to each other, in the average operating condition, a sum of the amounts of the magnetic flux flowing in the main magnetic flux path and the bypass magnetic flux path is always constant. In order to equally set the magnetic resistance of the main magnetic flux path 111 and the magnetic resistance of the bypass magnetic flux path 112, a gap length and an opposed area between the first bypass magnetic pole 104 and the second magnetic material salient pole extension portion 10a are regulated as a magnetic resistance regulating portion. The magnetic resistance of the magnetic flux path has an opposed area and a gap interval in the gap portion as a main parameter. The main magnetic flux path 111 has gaps between the first magnetic material salient pole 101 and the magnetic material tooth 14, and between the magnetic material tooth 14 and the second magnetic material salient pole 102. The opposed areas in the gaps are larger than the opposed area between the first bypass magnetic pole 104 and the second magnetic material salient pole extension portion 10a, however, can make the magnetic resistance of the main magnetic flux path 111 and the magnetic resistance of the bypass magnetic flux path 112 approximately equal while making the gap between the first bypass magnetic pole 104 and the second magnetic material salient extension portion 10a small. Further, the first bypass magnetic pole 104 is constructed by an iron block having a great saturation magnetic flux density, it is hard to be saturated even if the first bypass magnetic pole 104 is made small.

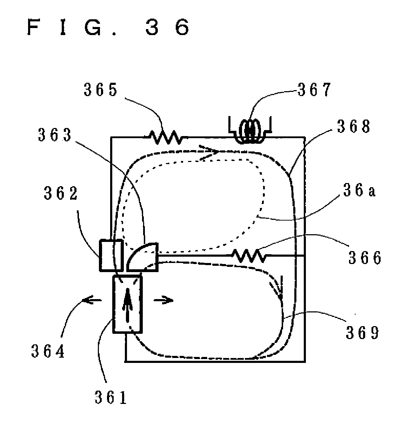

In the present embodiment, the main magnetic flux path which passes through the armature side and the bypass magnetic flux path which does not pass through the armature side are connected in parallel to the field magnet, and the magnetic flux from the field magnet is controlled in a distributing manner on the basis of a mechanical displacement. However, the armature coil is wound around the main magnetic flux path, and the magnetic flux magnetized by the armature coil is of course fed to the magnetic circuit constructed by the main magnetic flux path and the bypass magnetic flux path. Fig. 36 is a circuit diagram showing the magnetic circuit mentioned above by modeling, and a description will be given of a structure of the rotary electric machine system in accordance with the present embodiment by using the drawing.

In Fig. 36, a magnetic material salient pole extension portion 362 and a bypass magnetic pole 363 are opposed to a field magnet 361, and a main magnetic flux path and a bypass magnetic flux path 369 are connected in parallel to the field magnet 361. Reference numeral 365 denotes a magnetic resistance of the main magnetic flux path 368, reference numeral 366 denotes a magnetic resistance of the bypass magnetic flux path 369, and reference numeral 367 denotes an armature coil interposed in the main magnetic flux path 368, respectively. Reference numeral 364 denotes a direction in which the field magnet 361 is relatively displaced with respect to a unit of the magnetic material salient pole extension portion 362 and the bypass magnetic pole 363.

In the case that the rotary electric machine is set to a motor, a drive current is fed to the armature coil 367 in correspondence to positions of the magnetic material salient pole and the magnetic material tooth, and the armature coil 367 generates a magnetic flux in the main magnetic flux path 368. Alternatively, in the case of being used as a generator, an electric current is induced in the armature coil 367 in correspondence to the positions of the magnetic material salient pole and the magnetic material tooth, and a magnetic flux is going to flow in the main magnetic flux path 368 in correspondence to the electric current. In any case, an alternating current magnetic flux having a high frequency band which is switched in correspondence to the positions of the magnetic material salient pole and the magnetic material tooth is induced in the main magnetic flux path 368. The present invention is **characterized in that** the bypass magnetic flux path 369 is connected to the field magnet in parallel for controlling the magnetic flux amount, however, the alternating current magnetic flux induced by the armature coil 367 flows in the bypass magnetic flux path 369 as shown by reference symbol 36a so as to have a chance of being an obstacle in a motion of the rotary electric machine system.

In the present embodiment, the first bypass magnetic pole 104 and the second bypass magnetic pole 105 coming to a major portion of the bypass magnetic flux path 369 are constructed by the block made of the soft iron and are structured such that an eddy current loss is generated more easily than the magnetic material salient poles 101 and 102 constructed by the layered product of the silicon steel plate, thereby making the alternating current magnetic flux hard to pass. The first magnetic material salient pole extension portion 109 and the second magnetic material salient pole extension portion 10a are structured by the block made of the soft iron in the same manner, thereby making the alternating current magnetic flux hard to pass.

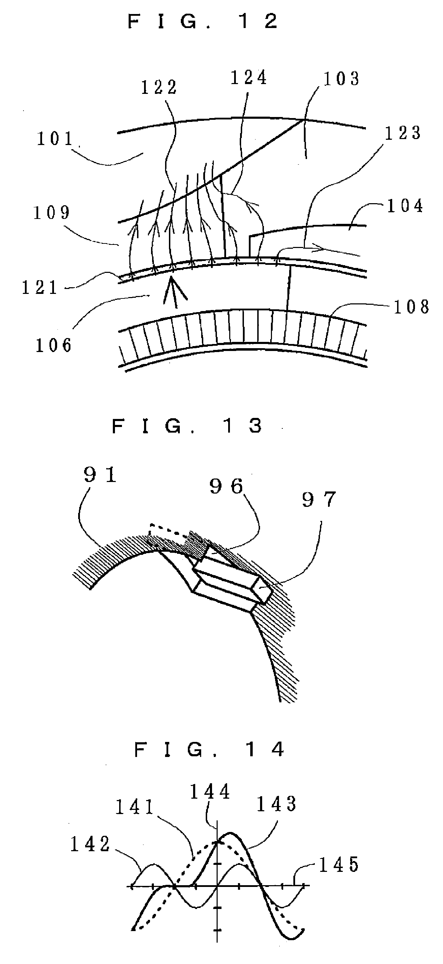

Fig. 12 is an enlarged view of a portion in which the field magnet 106 and the first magnetic material salient pole extension portion 109 shown in Fig. 10 are opposed to the first bypass magnetic pole 104, and shows in a modeling manner a magnetic flux shunt in the vicinity of the field magnet 106 in the case that the magnetic resistance of the bypass magnetic flux path is larger than the magnetic resistance of the main magnetic flux path. In the drawing, a direction of an arrow indicates a direction in which the magnetic flux flows on the assumption that the magnetic flux flows out of an N pole of the field magnet 106. In a micro gap 121 between the field magnet 106, and the first magnetic material salient pole extension portion 109 and the first bypass magnetic pole 104, the magnetic flux flows like a laminar flow approximately orthogonally to a boundary surface between the field magnet 106 and each of the first magnetic material salient pole extension portion 109 and the first bypass magnetic pole 104, reference numeral 122 denotes a magnetic flux which flows into the first magnetic material salient pole extension portion 109 so as to flow into the main magnetic flux path, and reference numeral 123 denotes a magnetic flux which flows into the first bypass magnetic pole 104 so as to flow in the bypass magnetic flux path, respectively in a representative manner. Reference numeral 124 denotes a magnetic flux in which the magnetic flux flowing into the first bypass magnetic pole 104 from the field magnet 106 flows into the first magnetic material salient pole extension portion 109 while passing through the gap portion 103 between the first bypass magnetic pole 104 and the first magnetic material salient pole extension portion 109 so as to flow in the main magnetic flux path, representatively. If the difference between the respective magnetic resistances of the main magnetic flux path and the bypass magnetic flux path is large as mentioned above, the magnetic flux leaking to the main magnetic flux path from the bypass magnetic flux path exists and the magnetic flux amount flowing in the main magnetic flux path is not necessarily in proportion to the area in which the field magnet 106 and the first magnetic material salient pole extension portion 109 are opposed.

The present embodiment is structured such that the magnetic resistance between the main magnetic flux path and the bypass magnetic flux path becomes larger than the difference between the magnetic resistance of the main magnetic flux path and the magnetic resistance of the bypass magnetic flux path in the average operating condition. Since the smallest distance between the main magnetic flux path and the bypass magnetic flux path exists between the first magnetic material salient pole extension portion 109 and the first bypass magnetic pole 104, the magnetic resistance between the main magnetic flux path and the bypass magnetic flux path is set by setting a shape and a dimension between the first magnetic material salient pole extension portion 109 and the first bypass magnetic pole 104. As shown in Figs. 10 and 12, the shape of the gap portion 103 is set in such a manner that a gap length becomes larger at a position which is away from the field magnet 106, and the dimension is set such that the magnetic resistance between the first magnetic material salient pole extension portion 2a and the first bypass magnetic pole 24 becomes larger than the difference between the magnetic resistances of the main magnetic flux path and the bypass magnetic flux path in the average operating condition. Accordingly, the magnetic flux leaking automatically between the first magnetic material salient pole extension portion 109 and the first bypass magnetic pole 104, which is denoted by reference numeral 124 is reduced, and the magnetic flux amount flowing in the main magnetic flux path is precisely in proportion to the area in which the field magnet 106 and the first magnetic material salient pole extension portion 109 are opposed.

A maximum value of the relative displacement amount between the surface magnetic pole portion 94 and the excitation portion 93 is an angle length in a circumferential direction of the first magnetic material salient pole extension portion 109, and is a case shown in Fig. 11(b). The magnetic flux amount control can be achieved even by the more displacement amount, however, a proportional relationship between the magnetic flux amount flowing in the main magnetic flux path 111 and the relative displacement amount between the surface magnetic pole portion 94 and the excitation portion 93 is not defined so as to complicate the magnetic flux amount control. In the present embodiment, the displacement between the surface magnetic pole portion 94 and the excitation portion 93 is regulated in such a manner as to become equal to or less than the angle length in the circumferential direction of the first magnetic material salient pole extension portion 109 opposed to the field magnet 106 by the concave portion 96 provided in the rotor support 91 and the displacement regulating protrusion portion 97 fixed to the surface magnetic pole portion support 92 as shown in Fig. 9.

Fig. 13 is a perspective view showing the concave portion provided in the end surface of the rotor support 91, and the displacement regulating protrusion portion 97 fixed to the surface magnetic pole portion support 92 in an enlarged manner. In the drawing, the displacement regulating protrusion portion 97 is arranged in the concave portion 96, and regulates the displacement amount between the surface magnetic pole portion 94 and the excitation portion 93. The case that the displacement regulating protrusion portion 97 comes into contact with a right wall surface within the concave portion 96 corresponds to Fig. 11(a), and the case that the displacement regulating protrusion portion 97 comes into contact with a left wall surface within the concave portion 96 corresponds to Fig. 11(b), respectively. In the present embodiment, as shown in Figs. 11(a) and 11(b), in order to increase the magnetic flux amount of the main magnetic flux path 111, the angle length in the circumferential direction in which the field magnet 106 and the first magnetic material salient pole extension portion 109 are opposed is increased by relatively displacing the surface magnetic pole portion 94 in a clockwise direction, and in order to reduce the magnetic flux amount of the main magnetic flux path 111, the angle length in the circumferential direction in which the field magnet 106 and the first magnetic material salient pole extension portion 109 are opposed is reduced by relatively displacing the surface magnetic pole portion 94 in a counterclockwise direction. A relationship between an increasing and decreasing direction of the magnetic flux of the main magnetic flux path 111 and a displacing direction of the surface magnetic pole portion 94 is always defined, and it is possible to simply control the magnetic flux amount.

A description will be given of the displacing control of the surface magnetic pole portion 94 with reference to Fig. 9. In the drawing, since the clutch plate 98 is brought into pressure contact with the surface magnetic pole portion support 92 by the spring 99, and the inner circumferential side protrusion portion 9a of the clutch plate 98 is engaged in a penetrating manner with the slit portion 1c of the rotating shaft 11, the surface magnetic pole portion support 92 and the surface magnetic pole portion 94 rotate together with the rotating shaft 11 and the rotor support 91.

In the case that the surface magnetic pole portion 94 is rotated and displaced with respect to the rotor support 91, the surface magnetic pole portion support 92 and the surface magnetic pole portion 94 are set to a free rotating state by displacing the push rod 1e, the sliding rod 1h and the inner circumferential side protrusion portion 9a of the clutch plate 98 in a leftward direction by the actuator 1f so as to compress the spring 99 and move the clutch plate 98 away from the surface magnetic pole portion support 92. At the same time, the surface magnetic pole portion 94 is rotationally driven in the displacing direction by circulating the drive current in the armature coil 16 by a drive circuit which is not illustrated. Since the surface magnetic pole portion support 92 and the surface magnetic pole portion 94 are in the free rotating state and their masses are small, they are driven by the drive circuit so as to be rotated in an accelerating manner or a decelerating manner and displace with respect to the excitation portion 93. After the displacing drive of the surface magnetic pole portion 94, the actuator 1f drives in a displacing manner the push rod 1e and the sliding rod 1h in a rightward direction, and brings the clutch plate 98 into pressure contact with the surface magnetic pole portion support 92 by the spring 99.

In the case of driving the rotor in the accelerating manner or the decelerating manner, there appears a magnetic force which intends to displace the surface magnetic pole portion 94 in the directions increasing and decreasing the magnetic flux amount flowing in the main magnetic flux path. As shown in Fig. 10, since the surface magnetic pole portion 94 and the excitation portion 93 are arranged in such a manner that the opposed area between the field magnet 106 and the first magnetic material salient pole extension portion 109 is increased if the surface magnetic pole portion 94 is relatively displaced in the rotating direction of the rotor with respect to the excitation portion 93, it is possible to effectively utilize the magnetic force mentioned above. At a time of rotationally driving the surface magnetic pole portion 94 in the accelerating direction or the decelerating direction, the drive current controlled by the relative position between the magnetic material tooth 14 and the first magnetic material salient pole 101 is fed to the armature coil 16. As is well known as a driving method of the electric motor, a description of a feeding method and a timing of the drive current will be omitted.

The actuator 1f is constructed by the step motor and the screw mechanism in the first embodiment, however, since the push rod 1e is driven in the leftward direction only at a time of setting the surface magnetic pole portion 94 to the free rotating state in the present embodiment, the structure constructed by a solenoid coil is proper.

The present embodiment is structured such that the magnetic material salient pole and the magnetic gap portion are alternately arranged in the circumferential direction as shown in Fig. 10 in the surface magnetic pole portion 94, and the rotor can be rotationally driven by utilizing a magnetic torque and a reluctance torque. Both the magnetic torque and the reluctance torque can be utilized for driving in the displacing manner the surface magnetic pole portion 94, however, it is desirable to regulate the timing of the drive current fed to the armature coil 16 in such a manner as to drive the surface magnetic pole portion 94 mainly by utilizing the reluctance torque. The reason why the reluctance torque is mainly utilized for driving in the displacing manner the surface magnetic pole portion 94 exists in the fact that the magnetic torque cannot be utilized, for example, in the case that the magnetic flux in the main magnetic flux path 111 is near zero in correspondence to Fig. 11(b).

In order to rotationally drive the rotor in the case that the rotary electric machine is the electric motor, a suitable electric current is fed to the armature coil 16 in correspondence to the relative positions of the magnetic material tooth 14 and the magnetic material salient pole 101. Fig. 14 is a view showing a relationship between the drive current phase, and the magnet torque and the reluctance torque in the case that the drive current circulating in the armature coil 16 is set to a sine wave. A vertical axis 144 indicates a torque driving the rotor, and a horizontal axis 145 indicates a drive current phase. Reference numeral 141 denotes a magnet torque, reference numeral 142 denotes a reluctance torque, and reference numeral 143 denotes a combined torque of the magnet torque and the reluctance torque, respectively. In the drawing, an important point exists in the fact that the drive current phase in which the reluctance torque 142 becomes maximum is at a position which is 45 degree advanced in an electric angle, and a maximum value of the combined torque 143 is between 0 and 45 degree, on the basis of the drive current phase maximizing the magnetic torque 141. Fig. 14 shows the case of the sine wave drive, however, in order to utilize the reluctance torque even in the case of driving the rotor by feeding a pulse current to the armature coil 16, the phase of the drive current is unalterably advanced, and a time of the pulse current application is regulated to a time which can expect the reluctance torque and the reluctance torque is utilized mainly for driving in the displacing manner the surface magnetic pole portion 94.

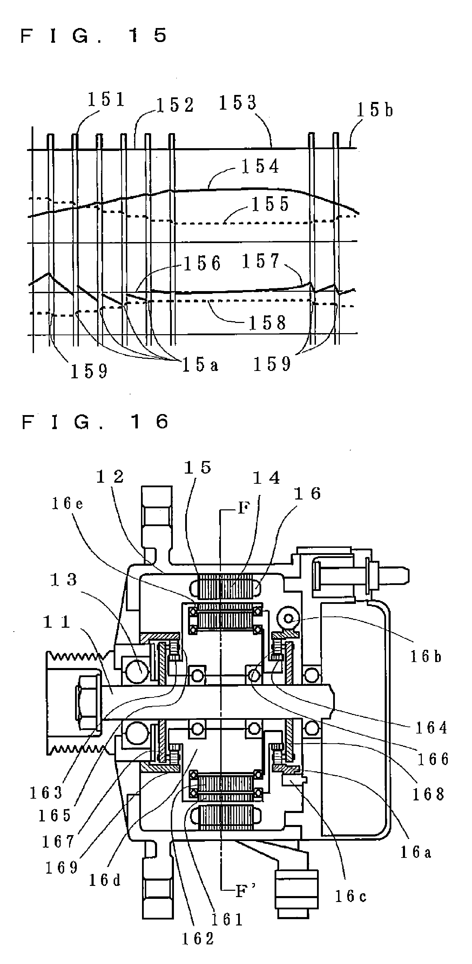

The description is given above of the matter that the magnetic flux amount flowing in the armature can be controlled by relatively displacing the surface magnetic pole portion 94 with respect to the excitation portion 93 in the rotary electric machine shown in Figs. 9 to 14, and the description is further given of the means and method for displacing the surface magnetic pole portion 94 with respect to the excitation portion 93. The present embodiment further relates to a system controlling the magnetic flux amount flowing in the armature in a sampling control manner, and a description will be given of a control serving as the rotary electric machine system with reference to Figs. 8 and 15. Fig. 8 shows a block diagram of the rotary electric machine system carrying out the magnetic flux amount control, and Fig. 15 shows a timing chart controlling the rotating force of the electric motor by controlling in the displacing manner the surface magnetic pole portion 94 in accordance with a sampling, and a timing chart controlling the generated voltage.

A description will be given of the electric motor system which sets the rotary electric machine to the electric motor and appropriately controls the rotating force by carrying out the field weakening control. In the present embodiment, the magnetic flux amount control and the rotational drive control are alternately repeated at a predetermined cycle only at a time when the magnetic flux amount control is necessary. Fig. 15 shows a time chart carrying out the magnetic flux amount control in the sampling manner by setting a horizontal axis 15b to a time, setting reference numeral 151 to a time zone carrying out the magnetic flux amount control, and setting reference numeral 152 to a time zone carrying out the rotational drive control. In the time zone shown by reference numeral 153, the magnetic flux amount control is not carried out, but only the rotational drive control is carried out. In the control apparatus 85, at a time when the rotating speed corresponding to the output 83 becomes larger than the predetermined value so as to make the magnetic flux amount flowing in the armature small, the control signal 86 drives the clutch plate 98 in a leftward direction via the actuator 1f in the time zone shown by the reference numeral 151 so as to set the surface magnetic pole portion 94 to the free rotating state, and simultaneously drives the surface magnetic pole portion 94 in an inverse direction (a counterclockwise direction in Fig. 10) to the rotating direction 10c by the drive circuit 87, the drive circuit 87 comes back to the normal rotational driving motion together with the end of the time zone shown by the reference numeral 151, and the actuator 1f drives the push rod 1e in a rightward direction so as to bring the clutch plate 98 into pressure contact with the surface magnetic pole portion support 92.

At a time when the rotating speed becomes smaller than the predetermined value so as to make the magnetic flux amount flowing in the armature large, the control signal 86 drive the clutch plate 98 in the leftward direction via the actuator 1f during a time shown by the reference numeral 151 so as to set the surface magnetic pole portion 94 to the free rotating state, and simultaneously drives the surface magnetic pole portion 94 in the rotating direction 10c (a clockwise direction in Fig. 10) by the drive circuit 87, and the drive circuit 87 comes back to the normal rotational driving motion together with the end of the time zone shown by the reference numeral 151, and the actuator 1f drives the push rod 1e in a rightward direction so as to bring the clutch plate 98 into pressure contact with the surface magnetic pole portion support 92. In Fig. 15, reference numeral 154 denotes a rotating speed, reference numeral 155 denotes a magnetic flux amount flowing in the armature, and there is shown the fact that since the driving force is not transmitted to the rotor in the time zone 151 of the magnetic flux amount control, the rotating speed 154 is slightly lowered, and the magnetic flux amount 155 is changed.

A description will be given of a constant voltage generator system which sets the rotary electric machine to the generator and controls the generated voltage to a predetermined voltage by carrying out the field weakening control. The generated power cannot be extracted in the case of driving in the displacing manner the surface magnetic pole portion 94 by means of the drive circuit 87, however, in the present embodiment, the magnetic flux amount control is carried out at a predetermined cycle only at a time when the magnetic flux amount control is necessary, and the electric current is fed to the armature coil 16 from the drive circuit 87 only at a time when the surface magnetic pole portion 94 is driven in the displacing manner in the rotating direction, thereby maximizing a time which can pick up the generated power. In Fig. 15, the horizontal axis 15b indicates a time, and reference numeral 151 indicates a time zone carrying out the magnetic flux amount control. In the time zone shown by the reference numeral 153, the magnetic flux amount control is not carried out, but only the output of the generated power is carried out.

In the control apparatus 85, at a time when the generated voltage corresponding to the output 83 becomes larger than the predetermined value so as to make the magnetic flux amount flowing in the armature small, the control signal 86 drives the clutch plate 98 in a leftward direction via the actuator 1f in the time zone shown by the reference numeral 151 so as to set the surface magnetic pole portion 94 to the free rotating state, and relatively displace the surface magnetic pole portion 94 in an inverse direction (a counterclockwise direction in Fig. 10) to the rotating direction 10c on the basis of a repulsive force applied between the armature and the surface magnetic pole portion 94, and the actuator 1f drives the push rod 1e in a rightward direction so as to bring the clutch plate 98 into pressure contact with the surface magnetic pole portion support 92 together with the end of the time zone shown by the reference numeral 151. In Fig. 15, reference numeral 156 denotes a predetermined voltage, reference numeral 157 denotes a generated voltage, and reference numeral 158 denotes a magnetic flux amount flowing in the armature. Reference numeral 159 denotes an example in which the magnetic flux amount 158 flowing in the armature is reduced, and there is shown the fact that since the drive circuit 87 is in a rest state, the generated power can be output, and the generated voltage 157 is reduced in proportion to the magnetic flux amount 158.

At a time when the generated voltage becomes smaller than the predetermined value so as to make the magnetic flux amount flowing in the armature large, the control signal 86 drive the clutch plate 98 in the leftward direction via the actuator If during a time zone shown by the reference numeral 151 so as to set the surface magnetic pole portion 94 to the free rotating state, and simultaneously drives the surface magnetic pole portion 94 in the rotating direction 10c (a clockwise direction in Fig. 10) by the drive circuit 87, and the actuator 1f drives the push rod 1e in the rightward direction together with the end of the time zone shown by the reference numeral 151 so as to bring the clutch plate 98 into pressure contact with the surface magnetic pole portion support 92 and rest the drive circuit 87. In Fig. 15, there is shown the case that the time zone denoted by reference symbol 15a increases the magnetic flux amount 158 flowing in the armature, and the fact that since the driving current is fed to the armature coil 16 by the drive circuit 87 during this time, the generated power cannot be output and the generated voltage 157 is disconnected.

In the sampling control of the magnetic flux amount shown above, a width of the time zone 151 of the magnetic flux amount control is set by taking into consideration a mass of the movable portion, that is, masses of the surface magnetic pole portion 94 and the surface magnetic pole portion support 92, and the output of the further displaced actuator, a magnitude of the torque which can be utilized for driving in the displacing manner in the rotary electric machine in this case. The cycle of the time zone 151 of the magnetic flux amount control is decided on the basis of an allowable precision of the magnetic flux amount flowing in the armature corresponding to the subject to be controlled. Since it is hard to directly comprehend the magnetic flux amount actually, the cycle of the time zone 151 is selected on the basis of the allowable precision of a shift amount from a target value of the voltage (the generated voltage) induced by the armature coil 16.

In the present embodiment, the sampling cycle of the magnetic flux amount control is set in accordance with the time interval, however, this can be based on the rotational cycle of the rotor. In this case, the sampling cycle is changed in accordance with the fluctuation of the rotating speed, however, there is a case that this is more reasonable in the light of a coordinate system on the rotor. In this case, it is possible to employ such a structure that the clutch plate 98 is moved away from the surface magnetic pole portion support 92 at a specific position of the rotor by using a link mechanism in place of the actuator 1f of controlling the clutch plate 98, for executing the magnetic flux amount control at a specific circumferential position of the rotor.

In the present embodiment, the mechanism including the clutch plate is used as a position keeping mechanism keeping a position of the surface magnetic pole portion with respect to the excitation portion, however, this is only one example, and a brake mechanism or a mechanism including a mechanical detent can be used.

In the present invention, the magnetic flux amount flowing in the armature is controlled by connecting the main magnetic flux path and the bypass magnetic flux path in which the magnetic resistance is set approximately equal to the minimum magnetic force condition to the field magnet in parallel, and changing the distributing rate of the magnetic flux from the field magnet on the basis of the mechanical displacement. However, the member dimension fluctuates within a tolerance range in a mass production stage, the magnetic resistance effectively fluctuates on the basis of the electric current further flowing in the armature coil, the magnetic resistances of both the magnetic flux paths are shifted from an ideal condition, and a slight magnetic force appears at a time of the displacement mentioned above. It is impossible to completely suppress the magnetic force generated by the matter that the magnetic resistances of both the magnetic flux paths come away from the minimum magnetic force condition as mentioned above, however, the present embodiment stands against the magnetic force by utilizing the sufficiently large rotating force of the rotary electric machine.

### Embodiment 3

A description will be given of a third embodiment of the rotary electric machine system in accordance with the present invention with reference to Figs. 16 to 18. The third embodiment is structured such as to displace the excitation portion in the circumferential direction as the movable magnetic pole portion, and uses a planetary gear mechanism as the displacement control means. Further, the magnetic resistance of the main magnetic flux path is regulated effectively by feeding a predetermined electric current to the armature coil in such as manner as to generate the magnetic force at a time of displacing the excitation portion and assist the displacement of the excitation portion.

Fig. 16 shows an embodiment in which the present invention is applied to a rotary electric machine having a permanent magnet magnetized field portion as a rotor side, and the rotating shaft 11 is rotatably supported to the housing 12 via the bearing 13. The structure of the armature is the same as the first embodiment. The field portion has a surface magnetic pole portion 161 opposed to the magnetic material tooth 14 in a diametrical direction, and an excitation portion 162, the surface magnetic pole portion 161 is fixed to the rotor support 16d, and the excitation portion 162 is rotatably supported between the surface magnetic pole portion 161 and the rotor support 16d via a micro gap.

The present embodiment is structured such as to rotate in a speed increasing manner a whole of the rotor by the rotating shaft 11, and the rotor support 16d is rotatably supported to the rotating shaft 11 via a bearing. A sun gear 163 fixed to the rotor support 16d, a ring gear 169 fixed to the housing 12, a planetary gear 165 engaging with the sun gear 163 and the ring gear 169, and a planetary gear support frame 167 fixed to the rotating shaft 11 construct a planetary gear mechanism rotating in a speed increasing manner the rotor support 16d from the rotating shaft 11. A rate of rotating speed between the rotor support 16d and the rotating shaft 11 depends on a gear ratio between the ring gear 169 and the sun gear 163.

A displacement control means rotationally displacing the excitation portion 162 with respect to the surface magnetic pole portion 161 and the rotor support 16d also constructs approximately the same planetary gear mechanism as that speed increasing the rotor support 16d. In other words, it is a planetary gear mechanism which is constructed by a sun gear 164 fixed to the excitation portion 162, a ring gear 16a rotatably supported to the housing 12, a planetary gear 166 engaging with the sun gear 164 and the ring gear 16a, and a planetary gear support frame 168 fixed to the rotating shaft 11, and rotates in a speed increasing manner the excitation portion 162 from the rotating shaft 11. Each of sets of the ring gear 169 and the ring gear 16a, of the sun gear 163 and the sun gear 164, and of the planetary gear 165 and the planetary gear 166 is structured such as to have the same number of teeth. Further, the ring gear 16a is rotatably supported to the housing 12 by a rotating pulley 16c, and the ring gear 16a has a gear in an outer circumference, and is structured such that a worm gear 16b is engaged.

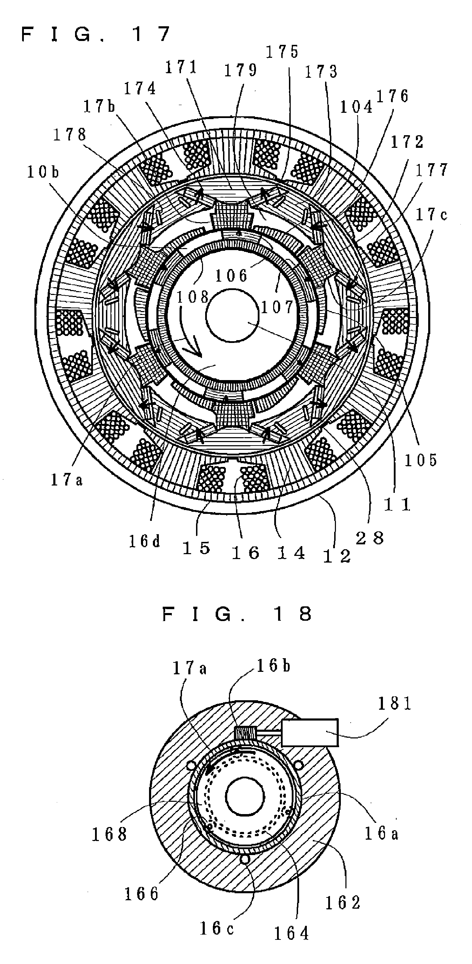

Fig. 17 shows a cross section of the armature and the rotor along a line F-F" in Fig. 16, and shows by attaching reference numerals to a part of constructing portions for explaining a mutual relationship. Since the structure of the armature is the same as the first embodiment, a description will be omitted.

In Fig. 17, the surface magnetic pole portion is structured such that a magnetic material salient pole and an assembled magnet are provided in an opposed surface to the armature alternately in a circumferential direction. An assembled magnet in which magnet plates 175 and 176 in which magnetization directions are approximately identical are arranged in both side surfaces of an intermediate magnetic material salient pole 173 is equivalent to the magnet, and the surface magnetic pole portion is constructed by magnetic material salient poles 171 and 172 which are comparted by the assembled magnet in which uniform magnetic materials are arranged at an equal interval in a circumferential direction, and the assembled magnet. Further, a magnetization direction in an approximately circumferential direction of the assembled magnet in which the adjacent magnetic material salient poles 171 and 172 are adjacent in such a manner as to be magnetized to different poles from each other is inverted to each other. Magnet plates arranged in both side surfaces in the circumferential direction of the magnetic material salient poles 171 and 172 are formed as a V-shaped form, and an angle of intersection of the magnetic plates is set to an angle which is preferable for a magnetic flux barrier. Arrows attached to the magnetic plates 175 and 176 indicate a magnetization direction which is approximately orthogonal to the plate surfaces of the magnetic plates 175 and 176, reference numeral 179 denotes a magnetic gap portion, and reference symbol 17a denotes a rotating direction.

Extension portions of the magnetic material salient poles arranged at an equal pitch in the circumferential direction, and bypass magnetic poles therebetween are arranged in the side of the surface magnetic pole portion 161 opposed to the excitation portion 162, and an extension portion 17b of the first magnetic material salient pole 171, the first bypass magnetic pole 104, an extension portion 17c of the second magnetic material salient pole 172, and the second bypass magnetic pole 105 are arranged repeatedly in this order. The first magnetic material salient pole extension portion 17b, the first bypass magnetic pole 104, and the second magnetic material salient pole extension portion 17c are magnetically separated from each other, the first bypass magnetic pole 104 and the second magnetic material salient pole extension portion 17c are arranged via a micro gap, and the second magnetic material salient pole extension portion 17c and the second bypass magnetic pole 105 are connected so as to be continuously formed. The first magnetic material salient pole extension portion 17b, the first bypass magnetic pole 104, the second magnetic material salient pole extension portion 17c and the second bypass magnetic pole 105 are constructed by a block of a soft iron in such a manner that an alternating current magnetic flux is hard to pass.

The field magnet 106 included in the excitation portion 162 is opposed to the first magnetic material salient pole extension portion 17b and the first bypass magnetic pole 104, the field magnet 107 is opposed to the second magnetic material salient pole extension portion 17c and the second bypass magnetic pole 105, and the other structures are the same as the second embodiment. The relative positions of the surface magnetic pole portion 161 and the excitation portion 162 are set in such a manner that the assembled magnet and the excitation portion magnetize the magnetic material salient pole 171 in the same magnetic pole. The magnetic plates 175 and 176 constructing the assembled magnet serve as a magnetic flux barrier for forming a region having a great magnetic resistance in the circumferential direction as well as generating the magnetic flux. In the present embodiment, since it is possible to feed a sufficient magnetic flux from the excitation portion 162, and it is an object to control the magnetic flux, the magnetic flux from the magnet plates 175 and 176 forms an obstacle in the light of controlling the magnetic flux amount. A magnetic gap portion 178 constructed by a slit provided in the intermediate magnetic material salient pole 173 enlarges a magnetic resistance of a magnetic flux path in which the magnetic fluxes of the magnet plates 175 and 176 pass, and reduces a contribution of the magnet plates 175 and 176 to the magnetic flux flowing in the armature side. Accordingly, it is possible to rotationally displace the excitation portion 152 with respect to the surface magnetic pole portion 151 so as to control the magnetic flux amount flowing in the armature side in a wide range.

The description is given above of the structure of the surface magnetic pole portion 161. The structure of the excitation portion 162 is the same structure as the excitation portion 93 in the second embodiment, and a description relating to a principle of the distribution control of the magnetic flux will be omitted. The magnetic material salient pole structure and shape of the surface magnetic pole portion 161 are an optimum shape for the rotary electric machine utilizing the magnetic torque and the reluctance torque.

In the present embodiment, in addition to the main magnetic flux path and the bypass, a third magnetic flux path passing through the assembled magnet is connected to the field magnet 106 in parallel. A magnetic resistance of the third magnetic flux path calculated by setting the portion of the magnet plates 175 and 176 to a gap is set such as to be larger than the magnetic resistance of the main magnetic flux path. The present embodiment is structured such that the magnetic flux amount flowing into the main magnetic flux path is not affected by making the magnetic resistance of the third magnetic flux path larger than the magnetic resistance of the main magnetic flux path by means of the magnetic gap portion 178 provided in the intermediate magnetic material salient pole 173.

A description will be given of a displacement control or the excitation portion with reference to Figs. 16 and 18. A planetary gear mechanism constructing the displacement control means of the excitation portion is constructed by the sun gear 164, the planetary gear 166 and the ring gear 16a. Three planetary gears 166 are arranged in the circumferential direction so as to be engaged with the sun gear 164 and the ring gear 16a, the sun gear 164 is formed in an end surface of the excitation portion 162, the planetary gear 166 is rotatably supported to the planetary gear support frame 168, and the planetary gear support frame 168 is fixed to the rotating shaft 11. Reference symbol 17a denotes a rotating direction of the rotating shaft 11 and the planetary gear support frame 168. An actuator controlling the ring gear is constructed by a gear in an outer circumferential portion of the ring gear 16a, the worm gear 16b and a motor 181. The motor 181 rotationally drive the gear in the outer circumferential portion of the ring gear 16a via the worm gear 16b. Three rotating pulleys 16c are provided, and rotatably support the ring gear 16a to the housing 12.

The rotating shaft 11 rotates together with the planetary gear support frame 168 and the planetary gear 166, and rotates the excitation portion 162 in the same direction via the sun gear 164 in the case that the ring gear 16a is rested via the worm gear 16b. In the present embodiment, the excitation portion 162 rotates at a higher rotating speed than the rotating speed of the rotating shaft 11 in correspondence to the gear ratio of the sun gear 164 and the ring gear 16a, however, since the surface magnetic pole portion 161 rotates at the same rotating speed, the relative displacement between the excitation portion 162 and the surface magnetic pole portion 161 is not changed.

If the motor 181 rotationally displaces the ring gear 16a in a counterclockwise direction (the rotating direction 17a) via the worm gear 16b and the gear in the outer circumference of the ring gear 16a, the sun gear 164 is decelerated, and the excitation portion 162 is relatively displaced in a clockwise direction (an inverse direction to the rotating direction 17a) with respect to the surface magnetic pole portion 161, thereby reducing the magnetic flux amount flowing in the armature. If the motor 181 rotationally displaces the ring gear 16a in the clockwise direction (the inverse direction to the rotating direction 17a) via the worm gear 16b and the gear in the outer circumference of the ring gear 16a, the sun gear 164 is accelerated, and the excitation portion 162 is relatively displaced in the counterclockwise direction (the rotating direction 17a) with respect to the surface magnetic pole portion 161, thereby increasing the magnetic flux amount flowing in the armature.

The magnetic resistance of each of the magnetic flux paths fluctuates due to various factors, however, the present embodiment employs the means and method for reducing the force necessary for the displacement of the movable magnetic pole portion by feeding the predetermined electric current to the armature coil at a time of controlling the magnetic flux amount. The magnetic flux amount flowing in the main magnetic flux path is controlled by driving the displacement control means in a direction of increasing the opposed area between the magnetic material salient pole extension portion and the field magnet as well as feeding the predetermined electric current to the armature coil in such a manner as to accelerate the rotor in the case of increasing the magnetic flux amount flowing in the main magnetic flux path, and driving the displacement control means in a direction of decreasing the opposed area between the magnetic material salient pole extension portion and the field magnet as well as feeding the predetermined electric current to the armature coil in such a manner as to decelerate the rotor in the case of decreasing the magnetic flux amount flowing in the main magnetic flux path. The structure is made such as to assist the displacement control means for generating the magnetic force regulating the magnetic resistances of the main magnetic flux path and the bypass magnetic flux path on the basis of the predetermined electric current circulating to the armature coil so as to displace the movable magnetic pole portion and displacing the movable magnetic pole portion, and it is possible to easily control the magnetic flux amount without demanding any excessive output in the actuator included in the displacement control means.

As mentioned above, there is shown that it is possible to displacement control the excitation portion 162 with respect to the surface magnetic pole portion 161 by controlling so as to drive the motor 181 arranged in the rest side and control the magnetic flux amount, in the rotary electric machine shown in Figs. 16 to 18. A description will be given below of a rotary electric machine system appropriately controlling the output by controlling the magnetic flux amount, with reference to a block diagram in Fig. 8.

A description will be given of an electric motor system appropriately controlling the rotating force by using the rotary electric machine as the electric motor and carrying out the field weakening control. The control device 85 feeds a predetermined electric current to the armature coil 16 via the drive circuit 87 in such a manner as to decelerate the rotor at a time when the rotating speed corresponding to the output 83 becomes larger than a predetermined value so as to make the magnetic flux amount flowing in the armature small, simultaneously drives the motor 181 via the control signal 86 so as to displace the ring gear 16a in the counterclockwise direction (the rotating direction 17a), relatively displaces the excitation portion 162 in the clockwise direction with respect to the surface magnetic pole portion 161, and makes the angle length in the circumferential direction in which the field magnet 106 and the extension portion of the first magnetic material salient pole 171 are opposed small. After the displacement control, the motor 181 is stopped, and the position of the displaced excitation portion 162 is kept. When the rotating speed becomes smaller than a predetermined value so as to make the magnetic flux amount flowing in the armature large, the predetermined electric current is fed to the armature coil 16 via the drive circuit 87 in such a manner as to accelerate the rotor, the motor 181 is simultaneously driven via the control signal 86 so as to displace the ring gear 16a in the clockwise direction (the inverse direction to the rotating direction 17a), the excitation portion 162 is relatively displaced in the counterclockwise direction with respect to the surface magnetic pole portion 161, and the angle length in the circumferential direction in which the field magnet 106 and the extension portion of the first magnetic material salient pole 171 are opposed is enlarged. After the displacement control, the motor 181 is stopped and the position of the displaced excitation portion 162 is kept.

A description will be given of a constant voltage generator system which has the rotary electric machine as the generator, and controls the generated voltage to a predetermined voltage by carrying out the field weakening control. The control device 85 feeds a predetermined electric current to the armature coil 16 via the drive circuit 87 in such a manner as to decelerate the rotor at a time when the generated voltage corresponding to the output 83 becomes larger than a predetermined value so as to make the magnetic flux amount flowing in the armature small, simultaneously drives the motor 181 via the control signal 86 so as to displace the ring gear 16a in the counterclockwise direction (the rotating direction 17a), relatively displaces the excitation portion 162 in the clockwise direction with respect to the surface magnetic pole portion 161, and makes the angle length in the circumferential direction in which the field magnet 106 and the extension portion of the first magnetic material salient pole 171 are opposed small. After the displacement control, the motor 181 is stopped, and the position of the displaced excitation portion 162 is kept. When the generated voltage becomes smaller than a predetermined value so as to make the magnetic flux amount flowing in the armature large, the predetermined electric current is fed to the armature coil 16 via the drive circuit 87 in such a manner as to accelerate the rotor, the motor 181 is simultaneously driven via the control signal 86 so as to displace the ring gear 16a in the clockwise direction (the inverse direction to the rotating direction 17a), the excitation portion 162 is relatively displaced in the counterclockwise direction with respect to the surface magnetic pole portion 161, and the angle length in the circumferential direction in which the field magnet 106 and the extension portion of the first magnetic material salient pole 171 are opposed is enlarged. After the displacement control, the motor 181 is stopped and the position of the displaced excitation portion 162 is kept.

The magnetic resistance regulating method of the main magnetic flux path employed in the present embodiment has the predetermined electric current fed to the armature coil as a fixed condition so as to be necessarily set with a certain degree of margin, and has a chance of affecting the operating state of the rotary electric machine, however, is characterized by a simple control.

### Embodiment 4

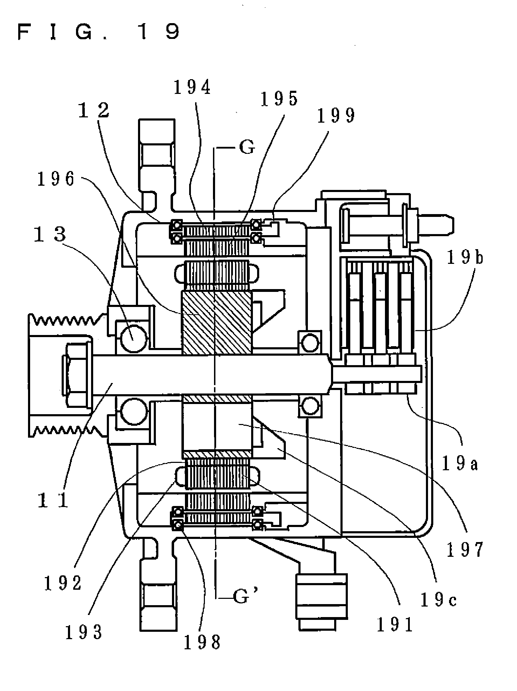

A description will be given of a fourth embodiment of the rotary electric machine system in accordance with the present invention with reference to Figs. 19 to 21. The fourth embodiment is structured such that the armature is arranged in the rotor side, and the field portion with the magnet excitation is arranged in the rest side closer to the outer circumference than the rotor. Further, the magnetic resistance of the main magnetic flux path is effectively regulated by connecting the constant current load to the armature coil at a time of changing the magnetic flux amount.

Fig. 19 shows an embodiment in which the present invention is applied to the rotary electric machine in which the armature magnetized by the permanent magnet is arranged in the rotor side, and the rotating shaft 11 is rotatably supported to the housing 12 via the bearing 13. The armature is constructed by a cylindrical magnetic yoke 192 fixed to a rotor support 196, a magnetic material tooth 191, and an armature coil 193. The armature coil 193 is connected in three phases, and is connected to a control device which is not illustrated, via a slip ring 19a and a brush 19b. The field portion arranged in the rest side is constructed by a surface magnetic pole portion 195 opposed in a diametrical direction to the magnetic material tooth 191, and an excitation portion 194, the surface magnetic pole portion 195 is fixed to the housing 12, and the excitation portion 194 is rotatably supported between the surface magnetic pole portion 195 and the housing 12 via a micro gap. Reference numeral 198 denotes a bearing, reference numeral 197 denotes a cavity portion in which a cooling air circulates, and reference symbol 19c denotes a cooling fan fixed to the rotor. Reference numeral 199 denotes a gear provided in an outer circumferential portion of the excitation portion 194, and a worm gear and a motor which are not shown in the drawing displace the excitation portion 194 via the gear 199 with respect to the surface magnetic pole portion 195 and the housing 12.

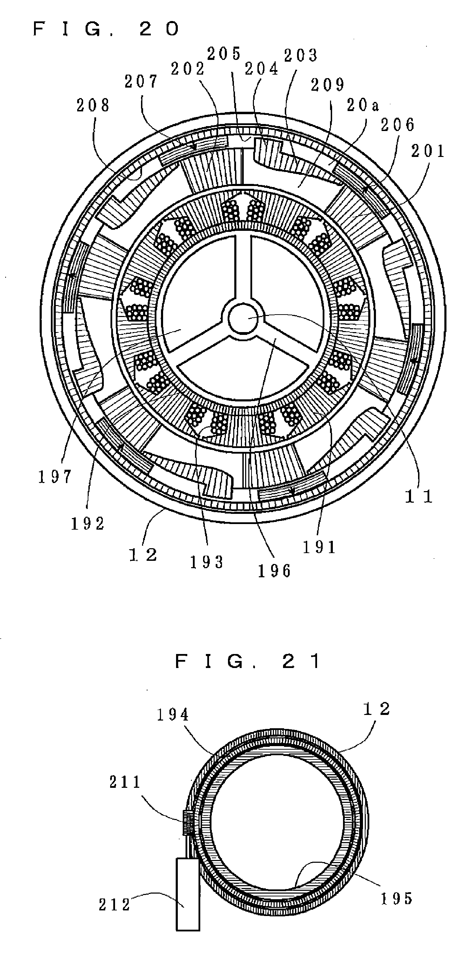

Fig. 20 shows a cross sectional view of the armature and the rotor along a line G-G' in Fig. 19, and shows by attaching reference numerals to a part of constructing portions for explaining mutual relationships. The armature is constructed by a cylindrical magnetic yoke 192 fixed to the rotor support 196, a plurality of magnetic material teeth 191 extending in a diametrical direction from the cylindrical magnetic yoke 192 and having gaps in a circumferential direction, and an armature coil 193 wound around the magnetic material tooth 191. The present embodiment is constructed by nine armature coils, and they are connected in three phases.

In Fig. 20, a field portion with the magnet excitation is comparted into the surface magnetic pole portion 195 and the excitation portion 194, a magnetic material salient pole and a magnetic gap portion are alternately arranged in a surface which is opposed to the magnetic material tooth 191 in the surface magnetic pole portion 195, and a magnetic material salient pole extension portion and a bypass magnetic pole are alternately arranged in a circumferential direction in the opposed surface to the excitation portion 194. The adjacent magnetic material salient poles are denoted by reference numerals 201 and 202, the magnetic gap portion is denoted by reference numeral 209, and the bypass magnetic pole is denoted by reference numeral 203, representatively.

The excitation portion 194 is constructed by a cylindrical magnetic core 208, and field magnets 206 and 207 arranged in the cylindrical magnetic core 208. Reference symbol 20a denotes a magnetic gap portion. The adjacent field magnets 206 and 207 have mutually inverse magnetizations in a diametrical direction, and an angle length in a circumferential direction therebetween is set to be equal to an angle length in a circumferential direction between an extension portion of the magnetic material salient pole 201 and an extension portion of the magnetic material salient pole 202. Arrows illustrated in the field magnets 206 and 207 indicate respective magnetization directions. The field magnet 206 distributes the magnetic flux so as to be opposed to the extension portion of the magnetic material salient pole 201 and the bypass magnetic pole 203. A sum of opposed areas in which the field magnet 206 is opposed to the extension portion of the magnetic material salient pole 201 and the bypass magnetic pole 203 is constant, and a ratio of the respective opposed areas is structured such as to be changed on the basis of a displacement in a circumferential direction of the excitation portion 194. The bypass magnetic pole 203 is structured such that one end portion 204 is opposed to the cylindrical magnetic core 208 via a gap 205.

The field magnet 206, the magnetic material salient pole 201, the magnetic material tooth 191, the magnetic material salient pole 202, the field magnet 207 and the cylindrical magnetic core 208 construct a main magnetic flux path of the magnetic flux, and the field magnet 206, the bypass magnetic pole 203, the gap 205, and the cylindrical magnetic core 208 form a bypass magnetic flux path of the magnetic flux. Since only the field magnet 206 is included within the bypass magnetic flux path, and the field magnets 206 and 207 are included in the main magnetic flux path in accordance with a series connection, a magnetic resistance of the bypass magnetic flux path is set to be larger than one half of the magnetic resistance of the main magnetic flux path by using an opposed area and a gap length in the gap 205 as a magnetic resistance regulating portion. Setting the magnetic resistance of the bypass magnetic flux path equal to one half of the magnetic resistance is a minimum magnetic force condition in the present embodiment, and since a magnetic flux total amount from the field magnet 206 is not changed even if a magnetic flux amount flowing in the main magnetic flux path is changed by displacing the excitation portion 194, it is possible to make the magnetic force preventing the displacement of the excitation portion 194 small. Since a constant current load connected to the armature coil is a means for regulating the magnetic resistance of the main magnetic flux path in an enlarging direction, the magnetic resistance of the bypass magnetic flux path is set as mentioned above.

A description will be given of a construction and a method for displacement controlling the excitation portion 194 with respect to the surface magnetic pole portion 195 with reference to Figs. 19 and 21. Fig. 21 shows a plan view of the housing 12, the excitation portion 194 and the surface magnetic pole portion 195, and shows a worm gear 211 and a step motor 212 rotationally driving the worm gear 211. The worm gear 211 is structured such as to be engaged with a gear 199 provided in an outer circumference of the excitation portion 194 shown in Fig. 19. If the excitation portion 194 is displaced in a clockwise direction in Fig. 20 by the step motor 212, the worm gear 211 and the gear 199, an angle length in a circumferential direction in which an extension portion of the magnetic material salient pole 201 and the field magnet 206 are opposed becomes large, so that it is possible to enlarge the magnetic flux amount in the main magnetic flux path, and if the excitation portion 194 is dispalced in a counterclockwise direction, the angle length in the circumferential direction in which the extension portion of the magnetic material salient pole 201 and the field magnet 206 are opposed becomes small, so that it is possible to make the magnetic flux amount in the main magnetic flux path small.

The magnetic resistance of each of the magnetic flux paths fluctuates due to various factors, the present embodiment copes by intermittently carrying out the magnetic flux amount control during the operation of the rotary electric machine in the following manner. In the case that the rotary electric machine is the generator, an electric voltage in a direction of preventing a change of interlinking magnetic fluxes is induced in the armature coil, an electric current in correspondence to a load impedance flows, and the magnetic resistance of the main magnetic flux path becomes effectively large. For the purpose of setting the magnetic resistance of the main magnetic flux path smaller than the minimum magnetic force condition, and making the magnetic resistances of the main magnetic flux path and the bypass magnetic flux path equal to the minimum magnetic force condition after assembling the rotary electric machine, the constant current load connected to the armature coil is detected so as to be set within the rotary electric machine or stored as the control data. Accordingly, it is possible to regulate a magnetic resistance dispersion of the main magnetic flux path in the individual rotary electric machine. The magnetic resistance of the main magnetic flux path is regulated in an enlarging direction by connecting the constant current load to the armature coil at a time of displacement controlling the movable magnetic pole portion so as to circulate an electric current previously determined by an induced voltage, and the movable magnetic pole portion is displaced by simultaneously driving the actuator. Various methods are provided as a means for achieving the constant current load, and include a constant current circuit control such that the electric current previously determined by the induced voltage to the armature coil flows in the armature coil, a load having a predetermined impedance defined per rotating speeds, and the like. In the present embodiment, the constant current circuit (not shown) is used.

There is shown above the fact that it is possible to control the magnetic flux amount flowing in the armature, by displacing the excitation portion 194 with respect to the surface magnetic pole portion 195 in the rotary electric machine shown in Figs. 19 to 21. A description will be given below of a rotary electric machine system of appropriately controlling an output by controlling a magnetic flux amount by using a block diagram in Fig. 8.

A description will be given of an electric motor system which sets the rotary electric machine to an electric motor, and appropriately controls a rotating force by carrying out field weakening control. A constant current load accompanies a decelerating drive of the rotor, and regulates the magnetic resistance of the main magnetic flux path in a direction of effectively enlarging direction, and the magnetic flux amount control is executed in accordance with the following steps. The control device 85 connects the constant current circuit (not shown) to the armature coil 193 so as to circulate the electric current previously defined by the induced voltage to the armature coil 193 and effectively regulate the magnetic resistances of the main magnetic flux path and the bypass magnetic flux path to the minimum magnetic force condition at a time when the rotating speed corresponding to the output 83 becomes larger than the predetermined value so as to make the magnetic flux amount flowing in the armature small, simultaneously drives the step motor 212 via the control signal 86 so as to displace the excitation portion 194 in a counterclockwise direction in Fig. 20, and makes an area in which the field magnet 206 and the magnetic material salient pole 201 are opposed small. After the displacement control, the step motor 212 is stopped so as to keep the position of the displaced excitation portion 194. When the rotating speed becomes smaller than a predetermined value so as to enlarge the magnetic flux amount flowing in the armature, the excitation portion 194 is displaced in a clockwise direction by stopping a current application to the armature coil 193 and driving the step motor 212 via the control signal 86, thereby enlarging the area in which the field magnet 206 and the extension portion of the magnetic material salient pole 201 are opposed. After the displacement control, the step motor 212 is stopped so as to keep the position of the displaced excitation portion 194.

A description will be given of a constant voltage generator system which sets the rotary electric machine to a generator, and controls a generated voltage to a predetermined voltage by carrying out the field weakening control. A constant current load accompanies a decelerating drive of the rotor, and regulates the magnetic resistance of the main magnetic flux path in a direction of effectively enlarging direction, and the magnetic flux amount control is executed in accordance with the following steps. The control device 85 connects the constant current circuit (not shown) to the armature coil 193 so as to circulate the electric current previously defined by the induced voltage to the armature coil 193 and effectively regulate the magnetic resistances of the main magnetic flux path and the bypass magnetic flux path to the minimum magnetic force condition at a time when the generated voltage corresponding to the output 83 becomes larger than the predetermined value so as to make the magnetic flux amount flowing in the armature small, simultaneously drives the step motor 212 via the control signal 86 so as to displace the excitation portion 194 in a counterclockwise direction in Fig. 20, and makes an area in which the field magnet 206 and the magnetic material salient pole 201 are opposed small. After the displacement control, the step motor 212 is stopped so as to keep the position of the displaced excitation portion 194. When the generated voltage becomes smaller than a predetermined value so as to enlarge the magnetic flux amount flowing in the armature, the excitation portion 194 is displaced in a clockwise direction by connecting a great impedance load to the armature coil 193 so as to reduce the flowing electric current, and driving the step motor 212 via the control signal 86, thereby enlarging the area in which the field magnet 206 and the extension portion of the magnetic material salient pole 201 are opposed. After the displacement control, the step motor 212 is stopped so as to keep the position of the displaced excitation portion 194.

In the control of the system mentioned above, in the case of increasing the magnetic flux amount, the constant current circuit is not connected to the armature coil 193, and a magnetic force appearing on the basis of the fact that the magnetic resistance of the main magnetic flux path is smaller than twice the magnetic resistance of the bypass magnetic flux path is utilized for assisting the displacement of the movable magnetic pole portion.

Since the magnetic resistance regulating means of the main magnetic flux path employed in the present embodiment accompanies the decelerating drive of the rotary electric machine, it has a chance of affecting the operation of the rotary electric machine in the case that the magnetic flux amount control continues over a long time. However, since the change of the rotating speed and the changing control of the magnetic flux amount are continuously carried out in the normal operating state, they do not come to a big problem. Further, in the case that the magnetic resistance change of the main magnetic flux path is expected to be large due to a variation per hour or a temperature change, a structure for acquiring a correcting condition of the magnetic resistance of the main magnetic flux path in a learning manner or a structure for acquiring from a map data is employed.

The map data is prepared in the following manner. The parameters fluctuating the magnetic resistances of the main magnetic flux path and the bypass magnetic flux path during the operation of the rotary electric machine are constructed mainly by the electric current flowing in the armature coil, the rotating speed, the temperature, the displaced position of the movable magnetic pole portion, and the like. A relationship between the parameter indicating the operation conditions and a fluctuation amount from an initial set condition of the optimum constant current load condition can be estimated on the basis of a statistical data in the rotary electric machine having the same design. After assembling the rotary electric machine, the map data between the optimum constant current load condition and the parameter indicating the operating condition is prepared and set.

### Embodiment 5

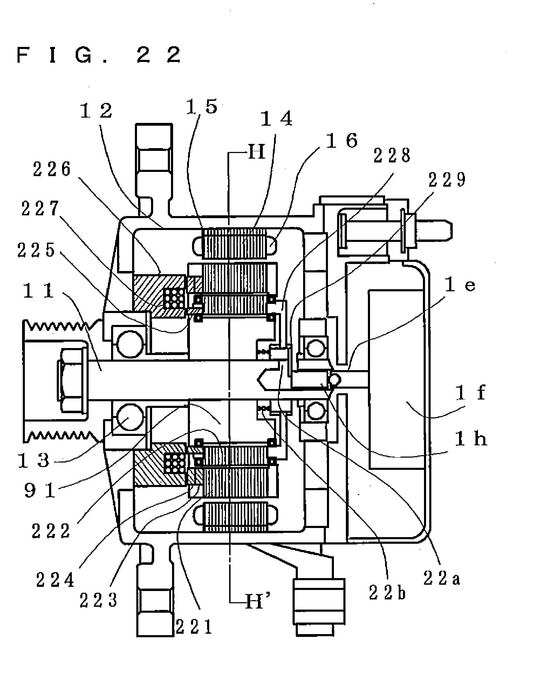

A description will be given of a fifth embodiment of the rotary electric machine in accordance with the present invention with reference to Figs. 22 to 24. The fifth embodiment is a rotary electric machine system of a radial gap structure, and controls the magnetic flux amount flowing in the armature by displacement controlling the excitation portion in the circumferential direction. Further, it has a means for regulating the magnetic resistance of the bypass magnetic flux path by feeding the electric current to the magnetic resistance regulating coil arranged in such a manner as to be wound around the bypass magnetic flux path.

Fig. 22 shows an embodiment in which the present invention is applied to the rotary electric machine of the radial gap structure, and the rotating shaft 11 is rotatably supported to the housing 12 via the bearing 13. The structure of the armature is the same as the first embodiment. The field portion of the rotor is constructed by a surface magnetic pole portion 221 opposed to the magnetic material tooth 14 in a diametrical direction, and an excitation portion 222 opposed to the surface magnetic pole portion 221, and the excitation portion 222 is rotatably supported to the rotor support 91 and the surface magnetic pole portion 221 via a micro gap. A bypass magnetic pole extension portion 223 is connected to an annular magnetic core 224, and is thereafter opposed to an outer circumferential side end surface of a C-shaped magnetic core 226 via a gap, and an extension portion 225 of a cylindrical magnetic core of the excitation portion 222 is opposed to an inner circumferential side end surface of the C-shaped magnetic core 226 via a gap. The C-shaped magnetic core 226 is a magnetic core having a C-shaped cross section and going around the rotating shaft 11, and is fixed to the housing 12. A magnetic resistance regulating coil 227 is further wound around the C-shaped magnetic core 226 so as to go around the rotating shaft 11.

A displacement control means for displacing the excitation portion 222 in a circumferential direction is constructed by a cylindrical sleeve 229 slidably arranged in an outer circumference of the rotating shaft 11, a spring 22b, an oblique groove 22a, a push rod 1e, a sliding rod 1h, and an actuator 1f fixed to the housing 12. Reference numeral 228 denotes an excitation portion support body.

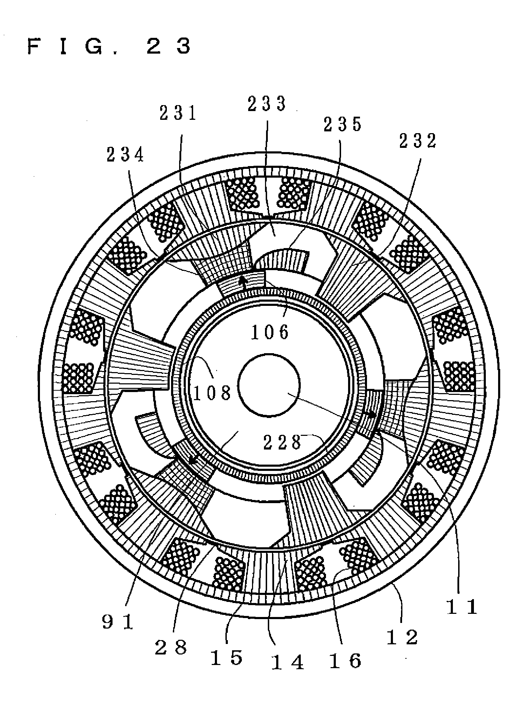

Fig. 23 shows a cross section of the armature and the rotor along a line H-H' in Fig. 22, and shows by attaching reference numerals to a part of constructing portions for explaining mutual relationships. The structure of the armature is the same as the first embodiment, and a description thereof will be omitted.

In Fig. 23, the field portion of the rotor is comparted into the surface magnetic pole portion 221 the excitation portion 222, and is arranged via a micro gap. Magnetic material salient poles are arranged in an opposed surface to the magnetic material tooth 14 in the surface magnetic pole portion 221 at a uniform interval in a circumferential direction so as to hold a magnetic gap portion therebetween, the adjacent magnetic material salient poles are represented by a first magnetic material salient pole 231 and a second magnetic material salient pole 232, and the magnetic gap portion is denoted by reference numeral 233. An extension portion 234 of the first magnetic material salient pole 231, a bypass magnetic pole 235 and an extension portion of the second magnetic material salient pole 232 are arranged repeatedly in this order in a side of the surface magnetic pole portion 221 opposed to the excitation portion 222. The excitation portion 222 is constructed by a cylindrical magnetic core 108 fixed to an excitation portion support 228 and a field magnet 106 arranged in the cylindrical magnetic core 108. The field magnet 106 is opposed to the first magnetic material salient pole extension portion 234 and the bypass magnetic pole 235, and a magnetization direction is a diametrical direction. An arrow illustrated in the field magnet 106 indicates a magnetization direction.

The structures of the excitation portion 222 and the side of the surface magnetic pole portion 221 opposed to the excitation portion 222 are similar to the second embodiment, however, is slightly different. In other words, the structure is made such that the field magnet 107 is removed, and the second magnetic material salient pole 232 is extended in an inner diametrical direction so as to be opposed to the cylindrical magnetic core 108 via a micro gap. The bypass magnetic pole which is adjacent to the second magnetic material salient pole 232 is not arranged. Further, the bypass magnetic pole 235 is extended in an axial direction so as to be formed as the bypass magnetic pole extension portion 223 shown in Fig. 22, is connected to the cylindrical magnetic core 224, and is thereafter opposed to an outer circumferential side end surface of the C-shaped magnetic core 226 via a gap. Since a magnetic flux from the bypass magnetic pole extension portion 223 is dispersed in a circumferential direction within the annular magnetic core 224, and is thereafter magnetically connected to an outer circumferential side end surface of the C-shaped magnetic core 226, there is no risk of generating an eddy current loss. Further, the cylindrical magnetic core 108 is extended in an axial direction so as to be magnetically connected as the extension portion 225 shown in Fig. 22 to an inner circumferential side end surface of the C-shaped magnetic core 226 via a gap.

Accordingly, a magnetic flux flowing into the first magnetic material salient pole extension portion 234 from one magnetic pole of the field magnet 106 forms a main magnetic flux path flowing back to the other magnetic pole of the field magnet 106 via the first magnetic material salient pole 231, the magnetic material tooth 14, the second magnetic material salient pole 232, and the cylindrical magnetic core 108, and magnetizes the adjacent magnetic material salient poles 231 and 232 to different poles. A magnetic flux flowing into the bypass magnetic pole 235 from one magnetic pole of the field magnet 106 forms a bypass magnetic flux path flowing back to the other magnetic pole of the field magnet 106 via the bypass magnetic pole extension portion 223, the annular magnetic core 224, the C-shaped magnetic core 226, the cylindrical magnetic core extension portion 225 and the cylindrical magnetic core 108.

In the present embodiment, a magnetic resistance of the bypass magnetic flux path is set to be approximately equal to a magnetic resistance of the main magnetic flux path in an average operating condition by using a micro gap length between the C-shaped magnetic core 226 and the annular magnetic core 224, and the cylindrical magnetic core extension portion 225 as a magnetic resistance regulating portion. Since a magnetic flux from the field magnet 106 flows in an axial direction in the bypass magnetic pole 235, the bypass magnetic pole 235 is constructed by a soft iron block having a great magnetic flux density and having an isotropy. The first magnetic material salient pole extension portion 234 opposed to the field magnet 106 within the excitation portion 222 and the bypass magnetic pole 235 are constructed by a uniform soft iron block, and the cylindrical magnetic core 108 is further constructed by a uniform soft iron, and is set such that an average electric conductivity is higher than the magnetic material salient poles 231 and 232 constructed by a laminated product of the silicone steel plate. On the basis of this construction, the magnetic material salient extension portion 234 and the cylindrical magnetic core 108 are set such that the alternating current magnetic flux is hard to pass.

An angle length in the circumferential direction of the field magnet 106 is set to be equal to a sum of an angle length in the circumferential direction of the first magnetic material salient pole extension portion 234 and an angle length in the circumferential direction of a gap between the first magnetic material salient pole extension portion 234 and the bypass magnetic pole 235, and the magnetic flux from the field magnet 106 is distributed into the main magnetic flux path in proportion to an opposed area between the field magnet 106 and the first magnetic material salient pole extension portion 234 on the assumption that a displacement amount of the excitation portion 222 is regulated in such a manner that the field magnet 106 is always opposed to the first magnetic material salient extension portion 234 and the bypass magnetic pole 235.

The magnetic resistance of each of the magnetic flux paths fluctuates due to various factors, and if a difference of the magnetic resistance between the main magnetic flux path and the bypass magnetic flux path becomes large, a magnetic flux short amount between the magnetic flux paths is increased, and a magnetic force preventing the displacement of the excitation portion 222 becomes large. In the present embodiment, the magnetic resistance between both the magnetic flux paths is made always larger than the difference of the magnetic resistance between the main magnetic flux path and the bypass magnetic flux path by controlling the electric current circulating the magnetic resistance regulating coil 227 wound around the bypass magnetic flux path. The magnetic resistance regulating coil 227 is wound in such a manner as to make the rotating shaft 11 go around the C-shaped magnetic core 226 as shown in Fig. 22, however, since the bypass magnetic flux path has a portion between the outer circumferential side end surface and the inner circumferential side end surface of the C-shaped magnetic core 226 as a part thereof, the magnetic resistance regulating coil 227 results in winding the bypass magnetic flux path. Parameters fluctuating the magnetic resistances of the main magnetic flux path and the bypass magnetic flux path during the operation of the rotary electric machine are mainly constructed by the electric current flowing in the armature coil, the rotating speed, the temperature, the displaced position of the movable magnetic pole portion and the like. A relationship between the parameters indicating the operating condition and the fluctuating amount from the initial set condition of the optimum electric current can be estimated on the basis of the statistical data in the rotary electric machine having the same design. The magnetic resistance of the bypass magnetic flux path is effectively regulated in such a manner as to be approximately equal to the magnetic resistance of the main magnetic flux path by preparing and setting the map data between the optimum electric current and the parameter indicating the operating condition after assembling the rotary electric machine, and obtaining the optimum electric current from the map data in accordance with the operating condition of the rotary electric machine so as to feed to the magnetic resistance regulating coil 227.

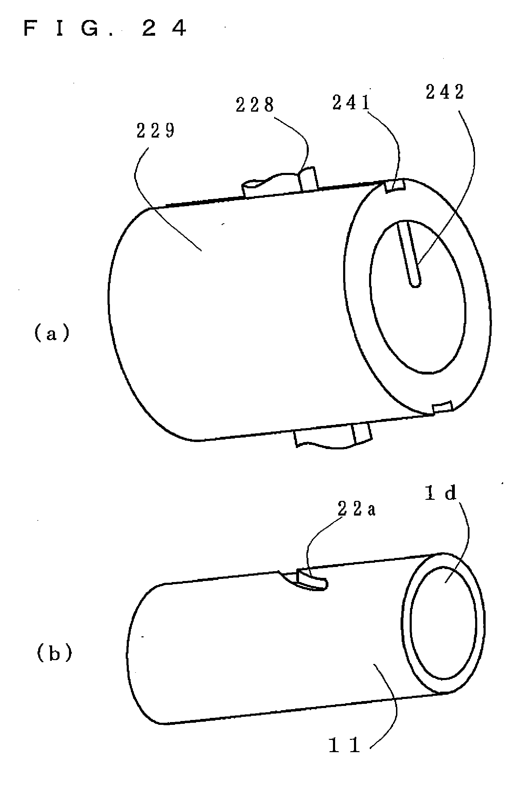

It is possible to control the magnetic flux flowing between the magnetic material salient pole 231 and the magnetic material tooth 14 by rotationally displacing the excitation portion 222 relatively with respect to the surface magnetic pole portion 221. In the present embodiment, the displacement control of the excitation portion 222 is carried out by using a mechanism shown in Figs. 22 and 24. A description will be given below an operation of the displacement control with reference to Figs. 22 and 24. Fig. 24(a) shows a perspective view of the sleeve 229, and Fig. 24(b) shows a perspective view of the rotating shaft 11, respectively.

The displacement control means shown in Figs. 22 and 24 is constructed by the cylindrical sleeve 229 arranged slidably in an outer circumference of the rotating shaft 11, a spring 22b, an oblique groove 22a provided in the rotating shaft 11, a push rod 1e, a sliding rod 1h, and an actuator 1f fixed to the housing 12. The oblique groove 22a is structured such as to extend diagonally in an axial direction of the rotating shaft 11 so as to pass through the hollow portion 1d, and a pin 242 fixed to the sleeve 229 is engaged in a penetrating manner with the oblique groove 22a. Further, a concave groove 241 is provided in an outer circumference of the sleeve 229, and an excitation portion support 228 slidably engages so as to transmit a rotating force between the rotating shaft 11 and the excitation portion support 228. The spring 22b is energized in such a manner as to push the sleeve 229 in a rightward direction of the drawing, and the push rod 1e and the sliding rod 1h come into contact with the pin 242 so as to energize the sleeve 229 in a leftward direction in the drawing by the actuator 1f, and stops at a position in an axial direction at which both the forces balance. The actuator 1f controls the force energizing the sleeve 229 in the leftward direction so as to drive the sleeve 229 right and left, displaces in the circumferential direction by the oblique groove 22a with which the pin 242 engages in the penetrating manner, and displaces the excitation portion support 228 and the excitation portion 222 in the circumferential direction. The actuator 1f is structured such that it can keep the position in the axial direction of the push rod 1e even in the case that it does not drive the step motor by using the step motor and a screw mechanism.

As mentioned above, in the rotary electric machine shown in Figs. 22 to 24, there is shown the matter than it is possible to control the magnetic flux amount flowing in the main magnetic flux path by controlling to drive the actuator 1f so as to displace the excitation portion 222 with respect to the surface magnetic pole portion 221. A description will be given below of a rotary electric machine system appropriately controlling an output by controlling the magnetic flux amount flowing in the main magnetic flux path with reference to a block diagram in Fig. 8.

A description will be given of an electric motor system appropriately controlling a rotating force by using the rotary electric machine as an electric motor and carrying out a field weakening control. In the control device 85, when the rotating speed corresponding to the output 83 becomes larger than a predetermined value so as to make the magnetic flux amount in the main magnetic flux path small, the control signal 86 drives the sliding rod 1h in a rightward direction via the actuator 1f, rotationally displaces the excitation portion 222 in a clockwise direction (Fig. 23), and make an angle length in a circumferential direction in which the field magnet 106 and the magnetic material salient pole extension portion 234 are opposed small. If the displacement amount of the excitation portion 222 reaches a target, the actuator 1f keeps the sliding rod 1h at the displaced position. When the rotating speed becomes smaller than a predetermined value so as to make the magnetic flux amount in the main magnetic flux path large, the control signal 86 drives the sliding rod 1h in the leftward direction via the actuator 1f so as to rotationally displace the excitation portion 222 in a counterclockwise direction (Fig. 23), and makes an angle length in the circumferential direction in which the field magnet 106 and the magnetic material salient pole extension portion 234 are opposed large. If the displacement amount of the excitation portion 222 reaches the target, the actuator 1f keeps the sliding rod 1h at the displaced position.

A description will be given of a constant voltage generator system which sets the rotary electric machine to a generator, and controls a generated voltage to a predetermined voltage by carrying out the field weakening control. In the control device 85, when the generated voltage corresponding to the output 83 becomes larger than a predetermined value so as to make the magnetic flux amount in the main magnetic flux path small, the control signal 86 drives the sliding rod 1h in a rightward direction via the actuator 1f, rotationally displaces the excitation portion 222 in a clockwise direction (Fig. 23), and make an angle length in a circumferential direction in which the field magnet 106 and the magnetic material salient pole extension portion 234 are opposed small. If the displacement amount of the excitation portion 222 reaches a target, the actuator 1f keeps the sliding rod 1h at the displaced position. When the generated voltage becomes smaller than a predetermined value so as to make the magnetic flux amount in the main magnetic flux path large, the control signal 86 drives the sliding rod 1h in the leftward direction via the actuator 1f, rotationally displace the excitation portion 222 in a counterclockwise direction (Fig. 23), and makes an angle length in the circumferential direction in which the field magnet 106 and the magnetic material salient pole extension portion 234 are opposed large. If the displacement amount of the excitation portion 222 reaches the target, the actuator 1f keeps the sliding rod 1h at the displaced position.

In the present embodiment, the magnetic resistances of the main magnetic flux path and the bypass magnetic flux path are always aligned with the minimum magnetic force condition by the magnetic resistance regulating coil 227, however, it is possible to control so as to suppress an electric power consumption by feeding the electric current to the magnetic resistance regulating coil 227 only at a time of changing the magnetic flux amount flowing in the main magnetic flux path. An optimum magnetic flux amount controlling method is selected in conformity to the specification of the rotary electric machine.

### Embodiment 6

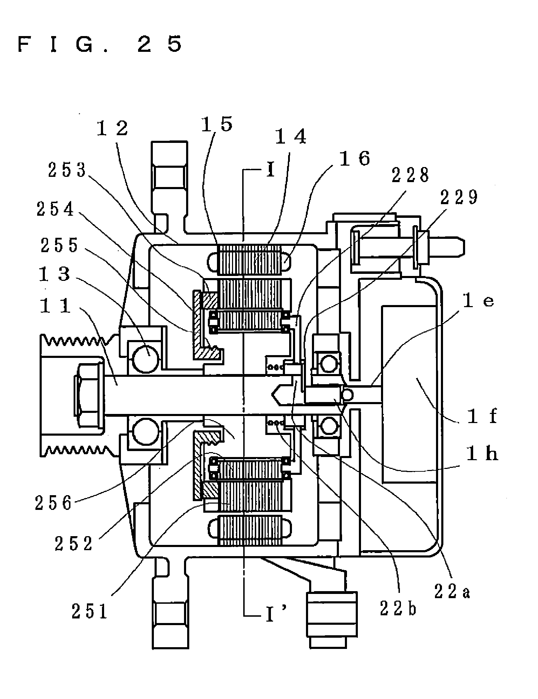

A description will be given of a sixth embodiment of the rotary electric machine system in accordance with the present invention with reference to Figs. 25 to 27. The sixth embodiment controls a magnetic flux amount flowing in the armature by using the excitation portion as the movable magnetic pole portion and displacement controlling in the circumferential direction. A displacement of the excitation portion is assisted by having a means for regulating in a pre-set manner the magnetic resistance of the bypass magnetic flux path, and feeding a predetermined electric current to the armature coil at a time of displacement controlling the excitation portion so as to generate the magnetic force.

Fig. 25 shows an embodiment in which the present invention is applied to the rotary electric machine of the radial gap structure, and the rotating shaft 11 is rotatably supported to the housing 12 via the bearing 13. A structure of the armature is the same as the first embodiment. The field portion of the rotor has a surface magnetic pole portion 251 opposed in a diametrical direction to the magnetic material tooth 14, and an excitation portion 252, and the excitation portion 252 is rotatably supported to a rotor support 256 and the surface magnetic pole portion 251 via a micro gap. A bypass magnetic pole extension portion 253 is opposed to an annular magnetic core 254 via a micro gap, and the annular magnetic core 254 is fixed in a pre-set manner to the rotor support 256 by a screw mechanism 255.

A displacement control means displacing the excitation portion 252 in the circumferential direction is constructed by a cylindrical sleeve 229 slidably arranged in an outer circumference of the rotating shaft 11, a spring 22b, an oblique groove 22a provided in the rotating shaft 11, a push rod 1e, a sliding rod 1h, an actuator 1f fixed to the housing 12 and the like. Reference numeral 228 denotes an excitation portion support.

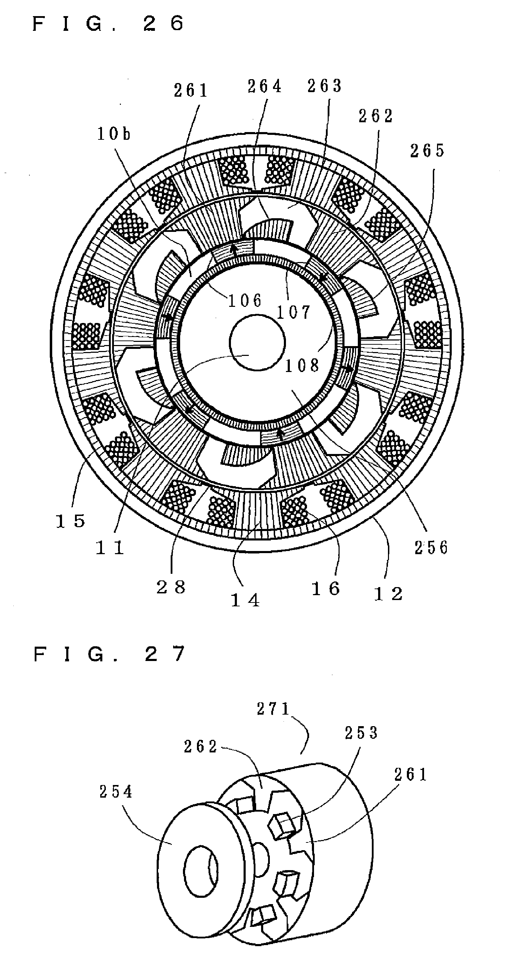

Fig. 26 shows a cross section of the armature and the rotor along a line I-I' in Fig. 25, and shows by attaching reference numerals to a part of the constructing portions for explaining a mutual relationship. The structure of the armature is the same as the first embodiment, and a description thereof will be omitted.

In Fig. 26, the field portion of the rotor is comparted into the surface magnetic pole portion 251 and the excitation portion 252. Magnetic material salient poles and magnetic gap portions arranged at an equal interval in the circumferential direction are arranged in a surface of the surface magnetic pole portion 251 opposed to the magnetic material tooth 14, and magnetic material salient pole extension portions and bypass magnetic poles are alternately arranged in the surface of the surface magnetic pole portion 251 opposed to the excitation portion 252. The adjacent magnetic material salient poles are denoted by reference numerals 261 and 262, the magnetic gap portion is denoted by reference numeral 263 representatively, and the adjacent bypass magnetic poles are denoted by reference numerals 264 and 265 representatively.

The excitation portion 252 has a cylindrical magnetic core 108 fixed to the excitation portion support body 228, and field magnets 106 and 107 arranged in the cylindrical magnetic core 108. Reference symbol 10b denotes a magnetic gap portion. The field magnet 106 is opposed to the extension portion of the magnetic material salient pole 261 and the bypass magnetic pole 264, the field magnet 107 is arranged in such a manner as to be always opposed to the extension portion of the magnetic material salient pole 262 and the bypass magnetic pole 265, and the adjacent field magnets 106 and 107 have mutually inverse diametrical magnetizations, and magnetize the adjacent magnetic material salient poles 261 and 262 to different poles from each other. Arrows illustrated in the field magnets 106 and 107 denote the magnetization directions.

The angle lengths in the circumferential direction of the extension portion of the magnetic material salient pole 261 and the bypass magnetic pole 264 are set to be equal, an angle length in the circumferential direction of the field magnet 106 is set to be equal to a sum of the angle length in the circumferential direction of the extension portion of the magnetic material salient pole 261 and the angle length in the circumferential direction of the gap between the extension portion of the magnetic material salient pole 261 and the bypass magnetic pole 264, and a displacement amount of the excitation portion 252 is set to be equal to or less than the angle length in the circumferential direction of the extension portion of the magnetic material salient pole 261.

The bypass magnetic poles 264 and 265 are structured such as to protrude to the end portion of the rotor as shown as the bypass magnetic pole extension portion 253 (the extension portions in the axial direction of the bypass magnetic poles 264 and 265 are shown representatively) in Fig. 25, and are opposed to the annular magnetic core 254 via the micro gap. Fig. 27 is an exploded perspective view for showing a relationship between the magnetic core 254 and the bypass magnetic pole extension portion 253, and shows the annular magnetic core 254 in a state of being away from the rotor 271 for easily understanding. The magnetic flux flowing into the extension portion of the magnetic material salient pole 261 from one magnetic pole of the field magnet 106 flows back to the other magnetic pole of the field magnet 106 via a magnetic material salient pole 261, the magnetic material tooth 14, a magnetic material salient pole 262, the field magnet 107 and the cylindrical magnetic core 108 so as to form a main magnetic flux path. The magnetic flux flowing into the bypass magnetic pole 264 from one magnetic pole of the field magnet 106 flows back to the other magnetic pole of the field magnet 106 via the annular magnetic core 254, the bypass magnetic pole 265, the field magnet 107 and the cylindrical magnetic core 108 so as to form the bypass magnetic flux path. The magnetic resistance of the bypass magnetic flux path is set to be approximately equal to the magnetic resistance of the main magnetic flux path by regulating the micro gap length between the bypass magnetic pole extension portion 253 and the cylindrical magnetic core 254. Since the magnetic flux from the field magnets 106 and 107 flows in the axial direction in the bypass magnetic poles 264 and 265, the bypass magnetic poles 264 and 265 are constructed by a soft iron block having a great magnetic flux density and having an isotropy.

In the present embodiment, the magnetic resistance of the bypass magnetic flux path is set to be approximately equal to the magnetic resistance of the main magnetic flux path by regulating the micro gap length between the bypass magnetic pole extension portion 253 and the annular magnetic core 254, however, the annular magnetic core 254 is attached in a pre-set manner to the rotor support 256. In other words, the annular magnetic core 254 is attached to the rotor support 256 by a screw mechanism denoted by reference numeral 255, and can regulate the micro gap length between the bypass magnetic pole extension portion 253 and the annular magnetic core 254 by rotating the annular magnetic core 254 with respect to the rotor support 256. The present embodiment is structured such as to regulate the position in the axial direction of the annular magnetic core 254 in such a manner as to set the magnetic resistance of the bypass magnetic flux path to be approximately equal to the resistance of the main magnetic flux path by using the micro gap length between the bypass magnetic pole extension portion 253 and the annular magnetic core 254 as the magnetic resistance regulating portion after assembling the rotor and the armature, and fix the annular magnetic core 254 in accordance with a welding, an adhesive bonding or a screw fastening.

Since the opposed area between the field magnet 106, and the extension portion of the magnetic material salient pole 261 and the bypass magnetic pole 264 is changed in accordance with the relative displacement between the surface magnetic pole portion 251 and the excitation portion 252, and a sum of the respective areas is constant, the magnetic flux from the field magnet 106 is distributed to the main magnetic flux path and the bypass magnetic flux path in proportion to the opposed area mentioned above. At that time, since the magnetic resistances of the main magnetic flux path and the bypass magnetic flux path are set to be approximately equal, the total magnetic flux amount from the magnetic flux magnet 106 becomes approximately constant, and the magnetic force preventing the relative displacement mentioned above is held down.

The description is given of the fact that it is possible to control the magnetic flux flowing between the magnetic material salient pole 261 and the magnetic material tooth 14 by rotationally displacing the excitation portion 252 relatively with respect to the surface magnetic pole portion 251, and the magnetic force preventing the rotational displacement can be held down at that time. The displacement control means of the excitation portion 252 has the same structure as the displacement control means shown in the fifth embodiment, and a repeated description will be omitted.

The magnetic resistances of the main magnetic flux path and the bypass magnetic flux path are set to be approximately equal by regulating the magnetic resistance of the bypass magnetic flux path after assembling the rotary electric machine, however, the magnetic resistance of each of the magnetic flux paths fluctuates in accordance with the variation per hour or the operating condition of the rotary electric machine. In the present embodiment, there is employed the means and method for reducing the force necessary for the displacement by feeding the electric current to the armature coil so as to generate the magnetic force in the direction of assisting the displacement of the movable magnetic pole portion, at a time of controlling. The magnetic flux amount flowing in the main magnetic flux path is controlled by driving the displacement control means in the direction of increasing the opposed area between the magnetic material salient pole extension portion and the field magnet as well as feeding the electric current which is shifted at a predetermined amount from the minimum magnetic force current in the direction of accelerating the rotor to the armature coil in the case of increasing the magnetic flux amount flowing in the main magnetic flux path, and by driving the displacement control means in the direction of decreasing the opposed area between the magnetic material salient pole extension portion and the field magnet as well as feeding the electric current which is shifted at a predetermined amount from the minimum magnetic force current in the direction of decelerating the rotor in the case of decreasing the magnetic flux amount flowing in the main magnetic flux path. The structure is made such as to generate the magnetic force assisting the displacement control means by the electric current circulating in the armature coil, and the magnetic flux amount is easily controlled without necessity of the excessive actuator in the displacement control means.

The minimum magnetic force current fed to the armature coil is acquired from the map in correspondence to the operating state of the rotary electric machine in such a manner as to effectively equalize the magnetic resistances of the main magnetic flux path and the bypass magnetic flux path with each other (the minimum magnetic force condition). The parameters fluctuating the magnetic resistances of the main magnetic flux path and the bypass magnetic flux path during the operation of the rotary electric machine are mainly constructed by the temperature, the displaced position of the movable magnetic pole portion, the rotating speed and the like. The relationship between the parameters indicating the operating condition and the fluctuating amount from the initial setting of the minimum magnetic force current can be estimated on the basis of the statistical data in the rotary electric machine. After assembling the rotary electric machine, the map data between the minimum magnetic force current and the parameter indicating the operating condition is prepared and set.

There is shown above the fact that it is possible to control the magnetic flux amount by displacing the excitation portion via the actuator 1f with respect to the surface magnetic pole portion, in the rotary electric machine shown in Figs. 25 to 27. A description will be given below of a rotary electric machine system of appropriately controlling an output by controlling a magnetic flux amount with reference to a block diagram in Fig. 8.

A description will be given of an electric motor system appropriately controlling a rotating force by using the rotary electric machine as an electric motor and carrying out a field weakening control. In the control device 85, when the rotating speed corresponding to the output 83 becomes larger than a predetermined value so as to make the magnetic flux amount flowing in the armature small, an electric current which is shifted at a predetermined amount from the minimum magnetic force current in a direction of decelerating the rotor to the armature coil 16, the sliding rod 1h is simultaneously driven in a rightward direction via the actuator 1f on the basis of the control signal 86, the excitation portion 252 is rotationally displaced in a clockwise direction in Fig. 26, and the area in which the field magnet 106 and the extension portion of the magnetic material salient pole 261 are opposed is made small. After the displacement control, the actuator 1f is stopped so as to keep the position of the displaced excitation portion 252. When the rotating speed becomes smaller than the predetermined value so as to enlarge the magnetic flux amount flowing in the armature, the electric current which is shifted at a predetermined amount from the minimum magnetic force current in the direction of accelerating the rotor is fed to the armature coil 16, the sliding rod 1h is driven in a leftward direction via the actuator 1f on the basis of the control signal 86, the excitation portion 252 is rotationally displaced in a counterclockwise direction, and the area in which the field magnet 106 and the magnetic material salient pole 261 are opposed is enlarged. After the displacement control, the actuator 1f is stopped so as to keep the position of the displaced excitation portion 252.

A description will be given of a constant voltage generator system controlling a generated voltage to a predetermined voltage by using the rotary electric machine as a generator and carrying out a field weakening control. In the control device 85, when the generated voltage corresponding to the output 83 becomes larger than a predetermined value so as to make the magnetic flux amount flowing in the armature small, an electric current which is shifted at a predetermined amount from the minimum magnetic force current in a direction of decelerating the rotor to the armature coil 16, the sliding rod 1h is simultaneously driven in a rightward direction via the actuator 1f on the basis of the control signal 86, the excitation portion 252 is rotationally displaced in a clockwise direction in Fig. 26, and the area in which the field magnet 106 and the extension portion of the magnetic material salient pole 261 are opposed is made small. After the displacement control, the actuator 1f is stopped so as to keep the position of the displaced excitation portion 252. When the generated voltage becomes smaller than the predetermined value so as to enlarge the magnetic flux amount flowing in the armature, the electric current which is shifted at a predetermined amount from the minimum magnetic force current in the direction of accelerating the rotor is fed to the armature coil 16, the sliding rod 1h is driven in a leftward direction via the actuator 1f on the basis of the control signal 86, the excitation portion 252 is rotationally displaced in a counterclockwise direction, and the area in which the field magnet 106 and the magnetic material salient pole 261 are opposed is enlarged. After the displacement control, the actuator 1f is stopped so as to keep the position of the displaced excitation portion 252.

### Embodiment 7

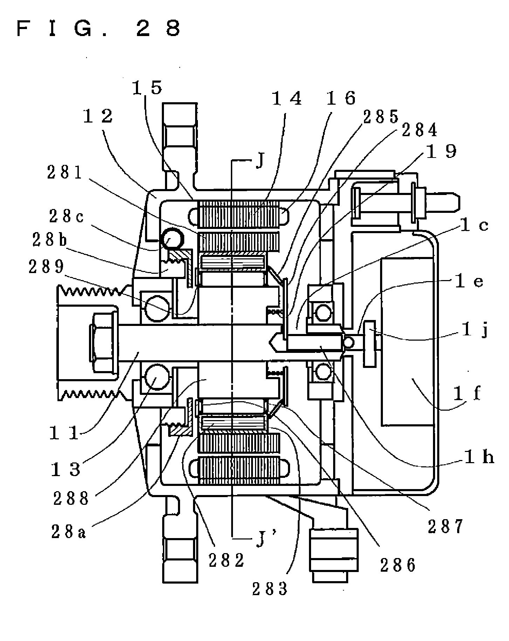

A description will be given of a seventh embodiment of the rotary electric machine system in accordance with the present invention with reference to Figs. 28 to 31. The seventh embodiment controls a magnetic flux flowing in the armature by displacement controlling the excitation portion within a surface which is orthogonal to the circumferential direction. Further, it has a means for regulating the magnetic resistance of the bypass magnetic flux path by regulating the gap length within the bypass magnetic flux path.

Fig. 28 shows an embodiment in which the present invention is applied to the rotary electric machine of the radial gap structure, and the rotating shaft 11 is rotatably supported to the housing 12 via the bearing 13. The structure of the armature is the same as the first embodiment. The rotor has a surface magnetic pole portion 281 fixed to a rotor support 288 and an excitation portion arranged within the surface magnetic pole portion 281, and the excitation portion is structured such as to displace a field magnet 282 and a support portion 283 as a movable magnetic pole portion within a surface which is orthogonal to the circumferential direction. A bypass magnetic pole extension portion 289 is opposed to an annular magnetic core 28a via a micro gap, and the annular magnetic core 28a is supported to a magnetic core support 28b fixed to the housing 12 by a screw mechanism, and is structured such as to be displaced in an axial direction by rotating the annular magnetic core 28a. A screw is arranged in an outer circumference of the annular magnetic core 28a, and is arranged in such a manner that a worm gear 28c is engaged. A means for displacement controlling the excitation portion is constructed by rotating arms denoted by reference numerals 286 and 287, a slide plate 284, a coupling rod 285, a spring 19, a slit 1c provided in the rotating shaft 11, a push rod 1e, a sliding rod 1h, and an actuator 1f fixed to the housing 12. Reference symbol 1j denotes a load cell.

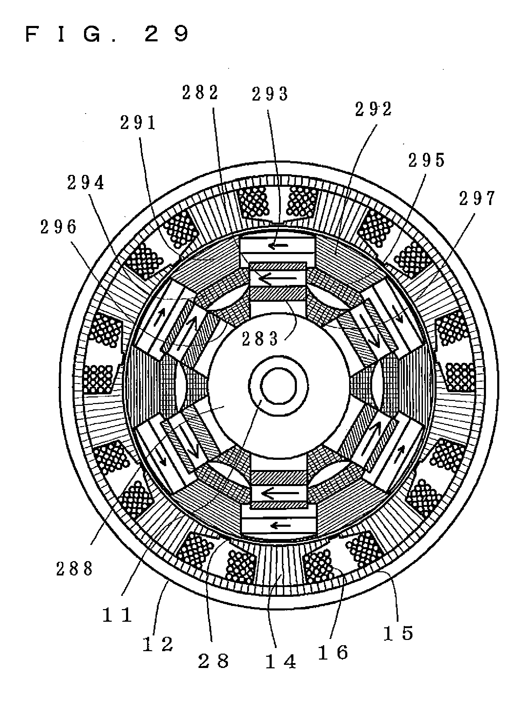

Fig. 29 shows a cross section of the armature and the rotor along a line J-J' in Fig. 28, and is shown by attaching reference numerals to a part of constructing portions for explaining a mutual relationship. The structure of the armature is the same as the first embodiment and a description thereof will be omitted.

In Fig. 29, the surface magnetic pole portion 281 is constructed by being comparted by a permanent magnet in which uniform magnetic materials are arranged at an equal interval in a circumferential direction, the adjacent magnetic material salient poles are denoted by reference numerals 291 and 292, and the permanent magnet is denoted by reference numeral 293 representatively. Further, approximately circumferential magnetization directions of the adjacent permanent magnets 293 are inverted to each other in such a manner that the adjacent magnetic material salient poles 291 and 292 are magnetized in different directions from each other. An arrow described within the permanent magnet 293 indicates the magnetization direction. The magnetic material salient poles 291 and 292 respectively have extension portions 294 and 295 in an inner circumferential direction, and bypass magnetic poles 296 and 297 are arranged on respective extensions. The field magnet 282 having the circumferential magnetization direction is arranged slidably between the extension portion 294 of the magnetic material salient pole 291 and the extension portion 295 of the adjacent magnetic material salient pole 292, and between the adjacent bypass magnetic poles 296 and 297. Further, a range in a diametrical direction in which the field magnet 282 is displaced is regulated in such a manner that the field magnet 282 is always opposed to each of the magnetic material salient pole extension portion 294 and the bypass magnetic pole 296.

In the present embodiment, the field magnet 282 and the support portion 283 thereof construct the excitation portion, and an arrangement of the surface magnetic pole portion and the excitation portion is set such that the permanent magnet 293 and the excitation portion are magnetized in the same magnetization direction in each of the magnetic material salient poles 291 and 292. In the inverse case, the permanent magnet 293 and the field magnet 282 construct a closed magnetic circuit, generate a great magnetic force which prevents the displacement control of the excitation portion, and make a precise control hard. The magnetic material salient pole extension portion 294 and the magnetic material salient pole extension portion 295 are constructed by a soft iron block having a larger average electric conductivity than the magnetic material salient poles 291 and 292 constructed by the laminated produce of the silicone steel plate in such a manner that the alternating current magnetic flux is hard to pass.

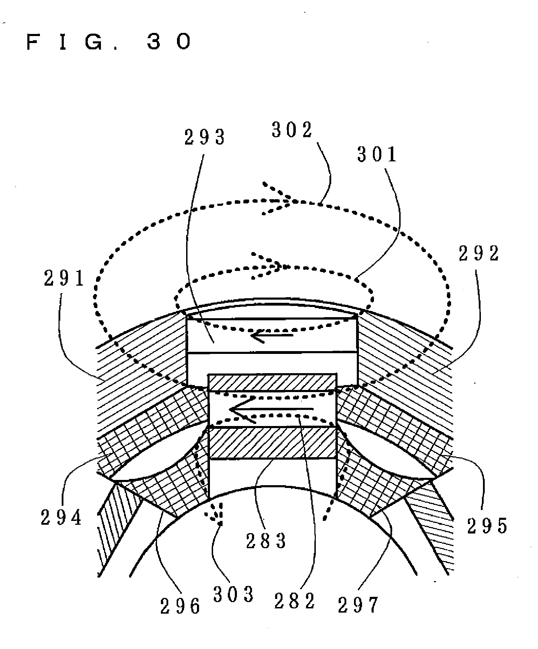

Fig. 30 is a view enlarging the vicinity of the field magnet 282 and explains a flow of the magnetic flux. The permanent magnet 293 magnetizes the magnetic material salient pole 291 to an N pole, and magnetizes the magnetic material salient pole 292 to an S pole, and the magnetic flux therefrom flows along a magnetic flux path denoted by reference numeral 301. The field magnet 282 magnetizes the magnetic material salient pole 291 to the N pole, and magnetizes the magnetic material salient pole 292 to the S pole in the same manner as the permanent magnet 293, and the magnetic flux flowing into the magnetic material salient pole extension portion 294 flows back to the field magnet 282 via the magnetic material tooth 14 which is not illustrated, and the adjacent magnetic material salient pole 292 along a main magnetic flux path denoted by reference numeral 302. Further, the magnetic flux flowing into the bypass magnetic pole 296 from the field magnet 282 flows back to the field magnet 282 through an adjacent bypass magnetic pole 297 via a bypass magnetic pole extension portion 289 which is not illustrated, and the annular magnetic core 28a along a bypass magnetic flux path denoted by reference numeral 303. The reference numeral 283 denotes a support portion of the field magnet 282, and is constructed by a non-magnetic stainless steel.

The displacement to the diametrical direction of the field magnet 282 is limited in such a manner that the field magnet 282 is always opposed to the magnetic material salient pole extension portion 294 and the bypass magnetic pole 296. Accordingly, a sum of the areas in which the field magnet 282 is opposed to each of the magnetic material salient pole extension portion 294 and the bypass magnetic pole 296 is constant, and the respective opposed areas are changed on the basis of the displacement in the diametrical direction of the field magnet 282 and the magnetic flux amount distributed to the main magnetic flux path is changed. Further, in the case that the magnetic resistances of the main magnetic flux path and the bypass magnetic flux path are approximately equal, the magnetic flux total amount from the field magnet 282 is constant, and the magnetic force preventing the displacement in the diametrical direction of the field magnet 282 is held down.

In the present embodiment, a third magnetic flux path passing through the permanent magnet is connected to the field magnet 282 in parallel, in addition to the main magnetic flux path and the bypass. A magnetic resistance of the third magnetic flux path calculated by setting the portion of the permanent magnet 293 to a gap is set such as to be larger than the magnetic resistance of the main magnetic flux path. In the present embodiment, a length of the permanent magnet 293 is set to be sufficiently large, and the magnetic flux amount flowing into the main magnetic flux path is not affected.

A contribution amount to the magnetic flux by the permanent magnet 293 is not a preferable existence in the meaning of narrowing the control range of the magnetic flux amount by the excitation portion. However, there is a structure for reducing a leakage flux in the gap portion by arranging the permanent magnet between the gaps in the leading end portions of the magnetic material salient poles, or a structure for setting a magnetic flux barrier as well as forming the magnetic material salient pole by comparting the uniform magnetic material by the permanent magnet having the magnetization in the circumferential direction in the rotary electric machine utilizing the reluctance torque. The present embodiment counts for an embodiment facilitating the magnetic flux amount control in the conventional rotary electric machine mentioned above.

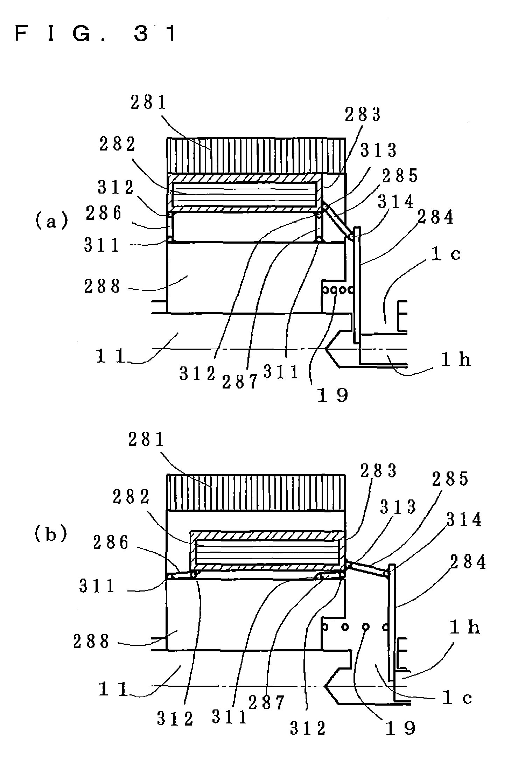

A description will be given of a structure and a motion displacement controlling the excitation portion with reference to Figs. 28 and 31. As shown in Figs. 28 and 31, the excitation portion constructed by the field magnet 282 and the support portion 283 is supported by the rotor support 288 and the rotating arms 286 and 287. The rotating arms 286 and 287 are rotatably supported to the rotor support 288 by a pin 311 and to the excitation portion by a pin 312, and the excitation portion is structured such as to be capable of displacing in parallel to the rotating shaft 11 within a surface which is orthogonal to the circumferential direction. Further, the excitation portion is coupled to the slide plate 284 by the coupling rod 285. The coupling rod 285 is rotatably connected to the excitation portion by a pin 313, and to the slide plate 284 by a pin 314, and is structured such that the excitation portion is displaced within a surface which is orthogonal to the circumferential direction on the basis of the displacement to the axial direction of the slide plate 284.

Three protrusion portions of the slide plate 284 come into contact with the sliding rod 1h via three slits 1c provided in the rotating shaft 11, and the sliding rod 1h is structured such as to be slidable in the axial direction within the hollow portion of the rotating shaft 11 so as to come into contact with the push rod 1e of the actuator 1f. Since the spring 19 is arranged between the rotor support 288 and the slide plate 284 so as to energize the slide plate 284 in a rightward direction, and the actuator 1f is structured such as to drive the push rod 1e right and left in the axial direction, the slide plate 284 and the field magnet 282 are displaced to the axial direction by the actuator 1f. The actuator 1f is constructed by a step motor and a screw mechanism so as to rotationally drive the step motor, thereby driving the push rod 1e right and left in the axial direction, and is structured such as to keep the position in the axial direction of the push rod 1e in the case that the step motor is not driven.

Figs. 31(a) and 31(b) are views showing a partial vertical cross section of the rotor including the excitation portion in an enlarged manner, and Fig. 31(a) shows a state in which the excitation portion is displaced to an outer side in a diametrical direction so as to be opposed to the magnetic material salient pole extension portion 294 and the magnetic material salient pole extension portion 295 with which the field magnet 282 is adjacent, at a maximum area, and the magnetic flux amount flowing in the main magnetic flux path becomes maximum. In this case, the actuator 1f displaces the slide plate 284 in a leftward direction in parallel to the shaft, and the excitation portion including the field magnet 282 is displaced in a leftward direction in parallel to the shaft and is displaced to an outer side in the diametrical direction. Fig. 31(b) shows a state in which the excitation portion is displaced to an inner side in the diametrical direction so as to be opposed to the bypass magnetic poles 296 and 297 with which the field magnet 282 is adjacent, at a maximum area, and the magnetic flux amount flowing in the main magnetic flux path becomes minimum. In this case, the actuator 1f displaces the slide plate 284 in a rightward direction in parallel to the shaft, and the excitation portion including the field magnet 282 is displaced in a rightward direction in parallel to the shaft and is displaced to an inner side in the diametrical direction.

The rotating arms 286 and 287 supporting the excitation portion and the pins 311 and 312 are displaced in accordance with the displacement of the excitation portion, and a space occupied thereby is allocated btw4en the bypass magnetic poles 296 and 297.

The bypass magnetic poles 296 and 297 has the bypass magnetic pole extension portion 289 protruding to the end portion of the rotor, and is opposed to the annular magnetic core 28a via the micro gap. The magnetic flux flowing into the bypass magnetic pole 296 from the field magnet 282 flows back to the field magnet 282 via the bypass magnetic pole extension portion 289, the annular magnetic core 28a, the bypass magnetic pole extension portion 289 and the bypass magnetic pole 297 so as to form the bypass magnetic flux path. The magnetic resistance of the bypass magnetic flux path is set to be approximately equal to the magnetic resistance of the main magnetic flux path by regulating the micro gap length between the bypass magnetic pole extension portion 289 (showing the extension portion to the axial direction of the bypass magnetic poles 296 and 287 representatively) and the annular magnetic core 28a. Since the magnetic flux from the field magnet 282 flows in the axial direction in the bypass magnetic poles 296 and 297, the bypass magnetic poles 296 and 297 have a great magnetic flux density and are constructed by an iron block having an isotropy. Further, since the magnetic flux flows in the circumferential direction within the annular magnetic core 28a, the annular magnetic core 28a is constructed by winding the silicone steel plate band like a spiral shape so as to laminate in the diametrical direction, for reducing the eddy current loss. It may be constructed by a magnetic material having a great specific resistance in addition.

The magnetic resistance of each of the magnetic flux paths fluctuates due to various factors, and if the difference of the magnetic resistance between the main magnetic flux path and the bypass magnetic flux path becomes large, the magnetic flux short amount between the magnetic flux paths is increased, and the magnetic force preventing the displacement of the excitation portion becomes large. In the present embodiment, the magnetic resistances of the main magnetic flux path and the bypass magnetic flux path are equalized to each other by regulating the magnitude of the gap within the bypass magnetic flux path, the magnetic flux leakage between both the magnetic flux paths are held down in correspondence to the magnetic resistance change of the magnetic flux path due to various factors, and the magnetic force preventing the displacement is held down.

Further, in the present embodiment, the magnetic resistance between the main magnetic flux path and the bypass magnetic flux path is always made larger than the difference between the magnetic resistance of the main magnetic flux path and the magnetic resistance of the bypass magnetic flux path, in each of the operating states by controlling the magnetic resistance of the bypass magnetic flux path. The gap length between the annular magnetic core 28a and the bypass magnetic pole extension portion 289 is changed by driving the worm gear 28c shown in Fig. 28 by the step motor which is not illustrated so as to rotate the annular magnetic core 28a and displace the annular magnetic core 28a in the axial direction by the screw mechanism with respect to the magnetic core support 28b.

In Fig. 28, reference symbol 1j denotes a load cell. If the magnetic resistance between the main magnetic flux path and the bypass magnetic flux path is deflected from the minimum magnetic force condition, the field magnet 282 is exposed to a magnetic force displacing in a direction of increasing the opposed area between the magnetic pole (the magnetic material salient pole extension portion 294 or the bypass magnetic pole 296) and the field magnet 282 in the side having the smaller magnetic resistance. Since the actuator 1f intends to keep the position in the axial direction, the pressure within the push rod 1e is changed, and it is possible to detect the magnetic force by the load cell 1j. Since the magnetic force is in proportion to the difference of the magnetic resistance between the main magnetic flux path and the bypass magnetic flux path, the gap length between the annular magnetic core 28b and the bypass magnetic pole extension portion 289 is changed by driving the worm gear 28c by the step motor which is not illustrated so as to keep the magnetic force within the predetermined range so as to rotate the annular magnetic core 28a and displace the annular magnetic core 28b in the axial direction by the screw mechanism with respect to the magnetic core support 28b. Since the magnetic resistances of both the magnetic flux paths can be always maintained close to the minimum magnetic force condition, it is possible to hold down the magnetic flux leakage between both the magnetic flux paths, and it is possible to achieve the precise magnetic flux amount control.

A description will be given of a rotary electric machine system appropriately controlling the output by controlling the magnetic flux amount by using the block diagram in Fig. 8. A description will be given of an electric motor system appropriately controlling a rotating force by using the rotary electric machine as an electric motor and carrying out the field weakening control. The control device 85 drives the actuator 1f via the control signal 86 so as to displace the excitation portion in a rightward direction and reduce an area in which the field magnet 282 and the magnetic material salient pole extension portion 294 are opposed small, at a time when the rotating speed corresponding to the output 83 becomes larger than a predetermined value so as to make the magnetic flux amount flowing in the armature small. After the displacement control, the actuator 1f is stopped so as to keep the position of the excitation portion. When the rotating speed becomes smaller than the predetermined value so as to make the magnetic flux amount flowing in the armature large, the area in which the field magnet 282 and the magnetic material salient pole extension portion 294 are opposed is enlarged by driving the actuator 1f via the control signal 86 and displacing the excitation portion in the leftward direction. After the displacement control, the actuator 1f is stopped so as to keep the position of the excitation portion.

A description will be given of a constant voltage generator system controlling a generated voltage to a predetermined voltage by using the rotary electric machine as a generator and carrying out a field weakening control. The control device 85 drives the actuator 1f via the control signal 86 so as to displace the excitation portion in the rightward direction and reduce the area in which the field magnet 282 and the magnetic material salient pole extension portion 294 are opposed small, at a time when the generated power corresponding to the output 83 becomes larger than a predetermined value so as to make the magnetic flux amount flowing in the armature small. After the displacement control, the actuator 1f is stopped so as to keep the position of the excitation portion. When the generated power becomes smaller than the predetermined value so as to make the magnetic flux amount flowing in the armature large, the area in which the field magnet 282 and the magnetic material salient pole extension portion 294 are opposed is enlarged by driving the actuator 1f via the control signal 86 and displacing the excitation portion in the leftward direction. After the displacement control, the actuator 1f is stopped so as to keep the position of the excitation portion.

### Embodiment 8

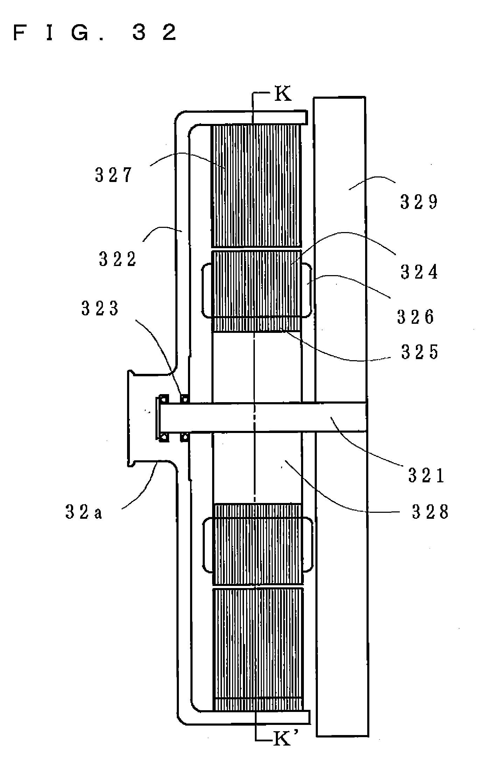

A description will be given of an eighth embodiment of the rotary electric machine system in accordance with the present invention with reference to Figs.32 to 34. The eighth embodiment is a rotary electric machine system of a radial gap structure and an outer rotor structure, and the excitation portion is arranged within the rotor and controls the magnetic flux amount by utilizing a centrifugal force.

Fig. 32 shows an embodiment in which the present invention is applied to the rotary electric machine of the outer rotor structure, and the surface magnetic pole portion and the excitation portion are arranged in the rotor existing in an outer circumference. A fixed shaft 321 is fixed to a base plate 329, and the armature is fixed to the fixed shaft 321. A rotor housing 322 is rotatably supported to the fixed shaft 321 via a bearing 323, and a field portion 327 including the surface magnetic pole portion and the excitation portion is arranged in an inner circumferential side thereof. Reference symbol 32a denotes a pulley portion provided in the rotor housing 322 of the rotor for transmitting a rotating force to an external device. The armature is constructed by a cylindrical magnetic yoke 325 on an armature support portion 328, a magnetic material tooth 324, and an armature coil 326.

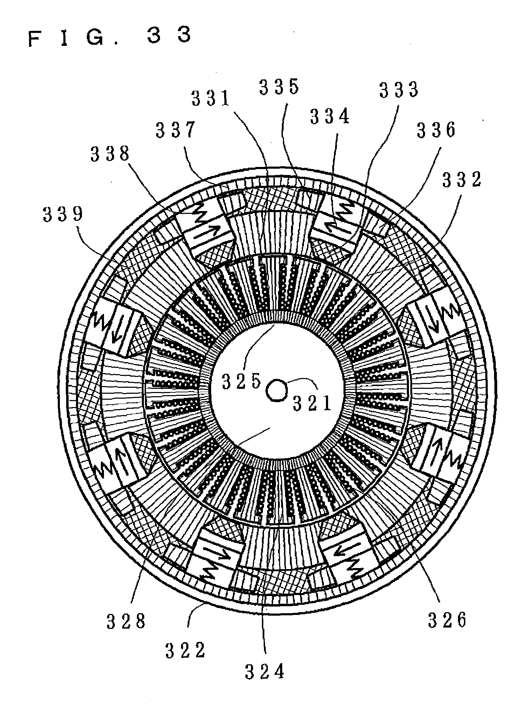

Fig. 33 shows a cross sectional view of the armature and the rotor along a line K-K' in Fig. 32, and is shown by attaching reference numerals to a part of constructing portions for explaining a mutual relationship. The armature is constructed by a cylindrical magnetic yoke 325 fixed to the armature support portion 328, a plurality of magnetic material teeth 324 extending in a diametrical direction from the cylindrical magnetic yoke 325 and having a magnetic gap in a circumferential direction, and the armature coil 326 wound around the magnetic material tooth 324. In the present embodiment, it is constructed by twenty four armature coils 326, and they are connected in three phases. The magnetic material tooth 324 and the cylindrical magnetic yoke 325 are constructed by being punched from a silicone steel plate by a predetermined mold, and being thereafter laminated, and the armature coil 326 is wound therearound.

In Fig. 33, the field portion 327 is arranged in an inner circumferential side of the rotor housing 322 so as to be opposed to the magnetic material tooth 324. Within the field portion 327, the magnetic material salient poles are arranged in the opposed surface to the magnetic material tooth 324 of the surface magnetic pole portion so as to be comparted by the magnetic gap portion at an equal interval in the circumferential direction, the adjacent magnetic material salient poles are represented by reference numerals 351 and 332, and the magnetic gap portion is represented by reference numeral 331. The surface magnetic pole portion has a bypass magnetic pole in an outer circumferential portion in an extending direction of the magnetic material salient pole, a field magnet 334 is arranged between the extension portions of the adjacent magnetic material salient poles 331 and 332 and between adjacent bypass magnetic poles 335 and 336 so as to be slidable in the diametrical direction, and an annular magnetic core 337 is arranged via the bypass magnetic poles 335 and 336 and a micro gap. Reference numeral 338 denotes a spring energizing the field magnet 334 in an inner diameter direction, and reference numeral 339 denotes a non-magnetic material portion. In this structure, the field magnet 334 corresponds to the excitation portion.

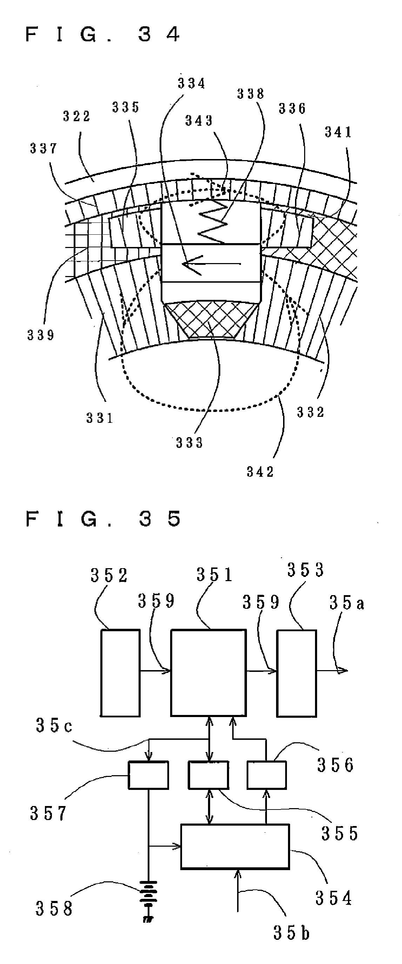

Fig. 34 is a cross sectional view enlarging a structure in the circumference of the field magnet 334 and explains a shunt control of the magnetic flux. The main magnetic flux path corresponding to one of two magnetic circuits connected to the field magnet 334 in parallel is a magnetic flux path to which the magnetic flux from the field magnet 334 flows back via the magnetic material salient pole 331, the magnetic material tooth 324 and the magnetic material salient pole 332, the other bypass magnetic flux path is a magnetic flux path to which the magnetic flux from the field magnet 334 flows back via the bypass magnetic pole 335, the cylindrical magnetic core 337 and the bypass magnetic pole 336, and the magnetic fluxes flowing in the main magnetic flux path and the bypass magnetic flux path are respectively shown by dotted lines 342 and 343. In the present embodiment, in an average operating condition of the rotary electric machine, an opposed area and a gap length of a micro gap 341 between the bypass magnetic poles 335 and 336 and the cylindrical magnetic core 337 are set as a magnetic resistance regulating portion. Further, since a sum of an area in which the field magnet 334 is opposed to the magnetic material salient poles 331 and 332 and an area in which it is opposed to the bypass magnetic poles 335 and 336 is always constant, a magnetic force preventing the field magnet 334 from displacing in the diametrical direction is small.

When the rotor is in a rest state or at a low rotating speed, the spring 338 energizes the field magnet 334 in an inner diameter direction, most of the areas of the field magnet 334 is opposed to the magnetic material salient poles 331 and 332, and the magnetic flux amount flowing in the main magnetic flux path 342 is made maximum. If the rotating speed of the rotor is increased, and the centrifugal force acting on the field magnet 334 displaces the field magnet 334 to the outer circumferential side against the spring 338, thereby increasing the area in which the field magnet 334 is opposed to the bypass magnetic poles 335 and 336. The magnetic flux amount of the main magnetic flux path 342 passing through the magnetic material tooth 324 side is approximately in proportion to the opposed area to the field magnet 334, the extension portion of the magnetic material salient pole 331, and the extension portion of the magnetic material salient pole 332, and is controlled in such a manner that the magnetic flux amount of the main magnetic flux path 342 is increased at a low rotating speed of the rotor, and the magnetic flux amount of the main magnetic flux path 342 is reduced at a high rotating speed. A relationship between the magnetic flux amount 342 flowing in the main magnetic flux path and the rotating speed is set on the basis of a friction coefficient between the field magnet 334 and the circumference which is set for reducing a mass of the field magnet 334, a characteristic of the spring 338 and an unnecessary vibration.

### Embodiment 9

A description will be given of a ninth embodiment in accordance with the present invention with reference to Fig. 35. The ninth embodiment is a rotary electric machine system using the rotary electric machine system in accordance with the first embodiment as a generator doubling as an electric motor of a hybrid car.

In the drawing, reference numeral 351 denotes a rotary electric machine shown in the first embodiment, the rotary electric machine 351 has a rotating shaft 359 connected to an engine 352 of the hybrid car by a belt so as to transmit a rotating force, and the rotating force of the rotating shaft 359 is transmitted to a drive shaft 35a via a transmission 353. A control device 354 receives a command 35b from a superior control apparatus, drives the rotary electric machine 351 as an electric motor via a drive circuit 355, and controls a magnetic flux amount of the rotary electric machine 351 via a magnetic flux control circuit 356. Further, the control device 354 is structured such as to receive the command 35b from the superior control device, rectify a generated power appearing in a leader line 35c of the armature coil 16 via a rectifying circuit 357, and charge a battery 358.

The control device 354 drives the rotary electric machine 351 as an electric motor via the drive circuit 355 on the basis of an instruction of the command 35b, assists a rotation of the engine 352 or rotationally drives a rotating shaft 359 by itself, and contributes to a driving force of the hybrid car via the drive shaft 35a. In the case that it is necessary to reinforce a magnet torque in a low rotating speed region, the control device 354 feeds a minimum magnetic force current to the armature coil 16 via the drive circuit 355 in a time zone of a magnetic flux amount control section 72 so as to effectively equalize the magnetic resistances of the main magnetic flux path and the bypass magnetic flux path to each other, and enlarges the opposed area between the extension portion of the magnetic material salient pole 21 and the field magnet 24 by displacing the excitation portion 18 via the actuator 1f in such a manner as to enlarge the magnetic flux amount flowing in the armature via the magnetic flux amount control circuit 356. In the case of the weakening field in a high rotating speed region, the control device 354 feeds the minimum magnetic force current to the armature coil 16 via the drive circuit 355 in the time zone of the magnetic flux amount control section 72 so as to effectively equalize the magnetic resistances of the main magnetic flux path and the bypass magnetic flux path, and reduces the opposed area between the extension portion of the magnetic material salient pole 21 and the field magnet 24 by displacing the excitation portion 18 via the actuator 1f in such a manner as to reduce the magnetic flux amount flowing in the armature via the magnetic flux amount control circuit 356.

When it is possible to drive the hybrid car only by the rotating force of the engine 352, the generated power appearing in the leader line 35c of the armature coil 16 is converted into a direct current via the rectifying circuit 357 on the basis of the command 35b, and the battery 358 is charged. In this case, the control device 354 feeds the minimum magnetic force current to the armature coil 16 via the drive circuit 355 in the time zone of the magnetic flux amount control section 72 so as to effectively equalize the magnetic resistances of the main magnetic flux path and the bypass magnetic flux path, and controls the actuator 1f via the magnetic flux amount control circuit 356 in such a manner as to come to an optimum voltage charging the battery 358. A converter converting the generated voltage is not necessary by setting the rotary electric machine system to the constant voltage generator system in the case of charging the battery 358. Further, even in the case that the battery 358 is constructed by plural kinds of batteries having different kinds of electric voltages, an expensive converter can be made unnecessary by attaching a switch circuit so as to control the generated voltage which is optimum for the respective battery.

The present embodiment effectively serves as an energy recovery system at a time of braking the hybrid car. When receiving an instruction for regenerative braking through the command 35b, the control device 354 feeds the minimum magnetic force current to the armature coil 16 via the drive circuit 355 in the time zone of the magnetic flux amount control section 72 so as to effectively equalize the magnetic resistances of the main magnetic flux path and the bypass magnetic flux path, displaces the excitation portion 18 via the actuator 1f in such a manner as to enlarge the magnetic flux amount flowing in the armature via the magnetic flux amount control circuit 356 so as to enlarge the opposed area between the extension portion of the magnetic material salient pole 21 and the field magnet 24, and charges the battery 358 by the generated power. In the case of having a plurality of batteries 358, the magnetic flux amount appearing in the armature is controlled by controlling the actuator 1f via the magnetic flux amount control circuit 356 in such a manner that the generated voltage in conformity to the charging voltage of the battery 358 having a highest charging surplus capacity can be obtained. Since the rotary electric machine 351 has such a physical constitution as to be used as the generator for driving, it can generate a sufficient braking force as the generator for the regenerative braking.

The present embodiment is the rotary electric machine system in which the present invention is used as the electric motor doubling as the generator for the hybrid car, however, may be of course a rotary electric machine system in an electric vehicle. In this case, the engine 352 of the hybrid car is removed in the embodiment mentioned above, and the energy recovery system at a time of driving and braking is constructed only by the rotary electric machine system in accordance with the present invention.

The description is given of the rotary electric machine system in accordance with the present invention by listing up the embodiments. These embodiments show the examples achieving the points and the purposes of the present invention, and do not limit the scope of the present invention. It is matter of course that the system achieving the points and the purposes of the present invention can be completed by combining the embodiments or combining the parts of the embodiments. For example, in the embodiments mentioned above, the armature is shown as the structure having the magnetic material tooth, however, the structure example in which the magnetic material tooth is not arranged exists in the rotary electric machine of the conventional axial gap structure. Further, the example in which the magnetic material tooth is not provided by arranging the armature coil in which the armature structure is print wired on a cylindrical magnetic yoke also exists in the radial gap structure. The present invention can be applied regardless of with or without the magnetic material tooth, and it is possible to employ the optimum armature structure in accordance with the specification of the rotary electric system. It is matter of course that the system achieving the point and the purpose of the present invention can be completed by combining the embodiments mentioned above or combining the parts of the embodiments.

### INDUSTRIAL APPLICABILITY

The rotary electric machine system in accordance with the present invention is structured such as to be capable of easily controlling the magnetic flux amount between the field portion and the armature by changing the structure of the magnetic magnetization of the rotary electric machine utilizing the conventional magnetic torque, and reluctance torque. The rotary electric machine system can enlarge the practicable rotating speed range, can further improve the power generating function and can control the power generating function, in addition that it can be utilized as the electric motor having the high output in the same manner as the conventional rotary electric machine. In the case of being used in an electric motor system doubling as a generator of a movable body, it is possible to improve a comprehensive energy consumption by enabling an energy recovery at a time of braking in addition that it is possible to expect a use in the larger rotating speed range than the conventional one as the electric motor for driving. Further, since the generated voltage can be controlled fixedly in the wide rotating speed range as the constant voltage generator system, the constant voltage control circuit is not necessary, the converter can be made unnecessary for charging the plural kinds of batteries having the different electric voltages, and it is possible to reduce a whole system cost.

## Claims

1. A rotary electric machine system comprising a rotary electric machine having an armature including an armature coil, and a field portion including a plurality of magnetic material salient poles which are relatively rotatable while being opposed to the armature and arranged in a circumferential direction while being opposed to the armature, **characterized in that** a surface magnetic pole portion and an excitation portion are arranged in the field portion, a plurality of magnetic material salient poles are arranged in a circumferential direction in an opposed surface to the armature and a magnetic material salient pole extension portion and a bypass magnetic pole are arranged in an opposed surface to the excitation portion in the surface magnetic pole portion, the excitation portion has a field magnet and is opposed to the magnetic material salient pole extension portion and the bypass magnetic pole at least in one magnetic pole of an N pole and an S pole of the field magnet, and is arranged so as to magnetize the adjacent magnetic material salient poles to different poles from each other, a main magnetic flux path in which a magnetic flux flowing into the magnetic material salient pole extension portion from one magnetic pole of the field magnet flows back to the other magnetic pole of the field magnet via the armature and the adjacent magnetic material salient pole, and a bypass magnetic flux path in which a magnetic flux flowing into the bypass magnetic pole flows back to the other magnetic pole of the field magnet mainly within the field portion are connected to the field magnet in parallel, any of the surface magnetic pole portion and the excitation portion serves as a movable magnetic pole portion, the movable magnetic pole portion is structured such as to be relatively displace with respect to a remainder in such a manner as to change each of an area in which the field magnet is opposed to the magnetic material salient pole extension portion and an area in which the field magnet is opposed to the bypass magnetic pole while a sum of said areas are kept constant, and the movable magnetic pole portion is displaced in correspondence to an output of the rotary electric machine system in such a manner that said output is optimized, whereby a magnetic flux amount flowing in the armature is controlled.

2. The rotary electric machine system according to claim 1, **characterized in that** a minimum magnetic force condition is set such that a value obtained by dividing a magnetic resistance of the bypass magnetic flux path by the number of series field magnets included in the bypass magnetic flux path is approximately equal to a value obtained by dividing a magnetic resistance of the main magnetic flux path by the number of series of field magnets included within the main magnetic flux path.

3. The rotary electric machine system according to claim 1, **characterized in that** the bypass magnetic flux path including the bypass magnetic pole is structured such as to include a material having a greater eddy current loss than the magnetic material salient pole in such a manner that an alternating current magnetic flux is hard to pass.

4. The rotary electric machine system according to claim 1, **characterized in that** the magnetic flux path from the field magnet to the magnetic material salient pole is structured such as to include a material having a greater eddy current loss than the magnetic material salient pole in such a manner that an alternating current magnetic flux is hard to pass.

5. The rotary electric machine system according to claim 1, **characterized in that** a magnetic resistance between the main magnetic flux path and the bypass magnetic flux path is structured such as to become larger than a difference between the magnetic resistance of the main magnetic flux path and the magnetic resistance of the bypass magnetic flux path.

6. The rotary electric machine system according to claim 1, **characterized in that** the bypass magnetic pole is arranged in an extending direction of the magnetic material salient pole in the surface magnetic pole portion, the field magnet having a magnetization in a circumferential direction is arranged between the adjacent magnetic material salient pole extension portions and between the adjacent bypass magnetic poles, the adjacent field magnets are arranged so as to be inverted in their magnetization directions to each other in such a manner as to magnetize the adjacent magnetic material salient poles to different poles from each other, the adjacent bypass magnetic poles are structured such as to have a magnetic connection path therebetween, and the excitation portion is structured as a movable magnetic pole portion such as to be capable of displacing within a surface which is orthogonal to the circumferential direction.

7. The rotary electric machine system according to claim 1, **characterized in that** the field portion and the armature are opposed in a diametrical direction, the magnetic material salient pole extension portion has periodical cut portions in an axial direction to arrange the bypass magnetic poles in the cut portions, the field magnet having the magnetizations in the circumferential direction and a non-magnetic material are periodically arranged in an axial direction alternately in the excitation portion, the field magnet is arranged between the adjacent magnetic material salient pole extension portions in the circumferential direction and between the adjacent bypass magnetic poles, the adjacent field magnets in the circumferential direction are arranged so as to be inverted in their magnetization directions to each other in such a manner as to magnetize the adjacent magnetic material salient poles to different poles from each other, the adjacent bypass magnetic poles are structured such as to have a magnetic connection path therebetween, and the excitation portion is structured as a movable magnetic pole portion such as to be capable of displacing in an axial direction.

8. The rotary electric machine system according to claim 1, **characterized in that** the surface magnetic pole portion and the excitation portion are arranged in such a manner as to relatively rotate and displace around an axis, a first magnetic material salient pole extension portion, a bypass magnetic pole and a second magnetic material salient pole extension portion are sequentially arranged repeatedly in a circumferential direction in a surface opposed to the excitation portion in the surface magnetic pole portion, and the bypass magnetic pole is arranged in such a manner as to be opposed to the second magnetic material salient pole extension portion via a micro gap, and is arranged such that a magnetic flux flowing into the first magnetic material salient pole extension portion from one magnetic pole of the field magnet flows back to the other magnetic pole of the field magnet via the armature, the second magnetic material salient pole and the second magnetic material salient pole extension portion, and a magnetic flux flowing into the bypass magnetic pole from one magnetic pole of the field magnet flows back within the field portion to the other magnetic pole of the field magnet via the second magnetic material salient pole extension portion.

9. The rotary electric machine system according to claim 1, **characterized in that** the surface magnetic pole portion and the excitation portion are arranged in such a manner as to relatively rotate and displace around an axis, the field magnet is arranged in a cylindrical magnetic core in the excitation portion so as to be arranged in such a manner that one magnetic pole of the field magnet is opposed to the magnetic material salient pole extension portion and the bypass magnetic pole within the surface magnetic pole portion, and the bypass magnetic pole is arranged in such a manner as to have a magnetic connection path in the cylindrical magnetic core, and is arranged such that a magnetic flux flowing into the magnetic material salient pole extension portion from one magnetic pole of the field magnet flows back to the other magnetic pole of the field magnet via the armature, the adjacent magnetic material salient pole and the adjacent magnetic material salient pole extension portion, and a magnetic flux flowing into the bypass magnetic pole from one magnetic pole of the field magnet flows back within the field portion to the other magnetic pole of the field magnet via the cylindrical magnetic core.

10. The rotary electric machine system according to claim 1, **characterized in that** the surface magnetic pole portion and the excitation portion are arranged in such a manner as to relatively rotate and displace around an axis, the magnetic material salient pole extension portion and the bypass magnetic pole are sequentially arranged in an opposed surface to the excitation portion in the surface magnetic pole portion so as to be repeated in the circumferential direction, and are arranged in such a manner as to have a magnetic connection path between the adjacent bypass magnetic poles, and the field magnet is arranged in a cylindrical magnetic core in the excitation portion so as to be arranged in such a manner that one magnetic pole of the field magnet is opposed to the magnetic material salient pole extension portion and the bypass magnetic pole within the surface magnetic pole portion, and is arranged such that a magnetic flux flowing into the magnetic material salient pole extension portion from one magnetic pole of the field magnet flows back to the other magnetic pole of the field magnet via the armature, the adjacent magnetic material salient pole and the adjacent magnetic material salient pole extension portion, and a magnetic flux flowing into the bypass magnetic pole from one magnetic pole of the field magnet flows back within the field portion to the other magnetic pole of the field magnet via the adjacent bypass magnetic pole.

11. The rotary electric machine system according to claim 1, further comprising a magnetic resistance regulating means for regulating the magnetic resistance of the main magnetic flux path or the bypass magnetic flux path, **characterized in that** the magnetic resistance of the main magnetic flux path or the bypass magnetic flux path is regulated in such a manner as to make a force necessary for displacing the movable magnetic pole portion small.

12. The rotary electric machine system according to claim 11, **characterized in that** the magnetic resistance of the bypass magnetic flux path and the magnetic resistance of the main magnetic flux path are regulated to the minimum magnetic force condition by the magnetic resistance regulating means at a time of displacing the movable magnetic pole portion.

13. The rotary electric machine system according to claim 11, **characterized in that** the magnetic resistance of the main magnetic flux path is regulated to be small or the magnetic resistance of the bypass magnetic flux path is regulated to be large by the magnetic resistance regulating means based on the minimum magnetic force condition at a time of increasing the magnetic flux amount flowing in the armature, and the magnetic resistance of the main magnetic flux path is regulated to be large or the magnetic resistance of the bypass magnetic flux path is regulated to be small by the magnetic resistance regulating means based on the minimum magnetic force condition at a time of reducing the magnetic flux amount flowing in the armature, and the movable magnetic pole portion is simultaneously displaced.

14. The rotary electric machine system according to claim 11, further comprising a magnetic force detecting means for detecting a magnetic force applied to the movable magnetic pole portion on the basis of the magnetic resistances of the main magnetic flux path and the bypass magnetic flux path being deflected from the minimum magnetic force condition, **characterized in that** a relationship between a parameter relating to the magnetic resistance regulating means and changed intermittently, or said parameter changing during a normal operation and said magnetic force is monitored, and said parameter reducing said magnetic force is set as a minimum magnetic force condition parameter.

15. The rotary electric machine system according to claim 11, **characterized in that** the magnetic resistance regulating means is constructed by a gap length regulating means regulating a gap length in a gap arranged within the bypass magnetic flux path, and the magnetic resistance of the bypass magnetic flux path is regulated in such a manner as to make a force necessary for displacing the movable magnetic pole portion small.

16. The rotary electric machine system according to claim 11, **characterized in that** the magnetic resistance regulating means is constructed by a magnetic resistance regulating coil wound around the bypass magnetic flux path, and the magnetic resistance of the bypass magnetic flux path is regulated by feeding a predetermined electric current to the magnetic resistance regulating coil in such a manner as to make a force necessary for displacing the movable magnetic pole portion small.

17. The rotary electric machine system according to claim 11, **characterized in that** the magnetic resistance regulating means is constructed by a means for regulating the magnetic resistance of the main magnetic flux path by feeding a predetermined electric current in a direction of accelerating or decelerating the rotor to the armature coil, and the magnetic resistance of the main magnetic flux path is effectively regulated by feeding a predetermined electric current to the armature coil in such a manner as to make a force necessary for displacing the movable magnetic pole portion small at a time of displacing the movable magnetic pole portion.

18. The rotary electric machine system according to claim 11, **characterized in that** the magnetic resistance regulating means is constructed by a predetermined constant current load, the constant current load is connected to the armature coil at a time of displacing the movable magnetic pole portion, a predetermined electric current is applied on the basis of an induced voltage in such a manner as to make a force necessary for said displacement of the movable magnetic pole portion small, and the magnetic resistance of the main magnetic flux path is effectively regulated.

19. The rotary electric machine system according to claim 1, further comprising a displacement regulating means of the movable magnetic pole portion, **characterized in that** a relative displacement amount of the movable magnetic pole portion is regulated within a range in which each of an area in which the field magnet is opposed to the magnetic material salient pole extension portion and an area in which the field magnet is opposed to the bypass magnetic pole is changed while a sum of the areas are kept constant.

20. The rotary electric machine system according to claim 1, further comprising a means for keeping a displacement position of the movable magnetic pole portion, **characterized in that** magnetic flux amount flowing in the armature is intermittently controlled.

21. The rotary electric machine system according to claim 1, **characterized in that** the surface magnetic pole portion is structured such as to be displaced in a circumferential direction with respect to the excitation portion, and an opposed area between the field magnet and the magnetic material salient pole extension portion is structured such as to be increased at a time when the surface magnetic pole portion relatively displaces in a rotating direction of the rotor with respect to the excitation portion.

22. The rotary electric machine system according to claim 1, **characterized in that** the surface magnetic pole portion is structured such as to be displaced in a circumferential direction with respect to the excitation portion, further comprising a position keeping mechanism for keeping a position of the surface magnetic pole portion with respect to the excitation portion, and **characterized in that** the surface magnetic pole portion is displaced in the circumferential direction by feeding the electric current to the armature coil in such a manner as to rotationally drive the rotor as well as temporarily loosening a holding force of the surface magnetic pole portion by the position keeping mechanism at a time of rotationally displacing the surface magnetic pole portion with respect to the excitation portion.

23. The rotary electric machine system according to claim 1, **characterized in that** the magnetic material salient pole and the magnetic gap portion are arranged alternately in the circumferential direction in the surface opposed to the armature in the surface magnetic pole portion so as to be opposed to the armature.

24. The rotary electric machine system according to claim 1, **characterized in that** the magnetic material salient pole and a permanent magnet having a magnetization in an approximately circumferential direction are arranged alternately in the circumferential direction in a surface opposed to the armature in the surface magnetic pole portion, the permanent magnets which are adjacent in such a manner as to magnetize the adjacent magnetic material salient poles in an inverse direction to each other are arranged so as to inverse the magnetizations to each other, and polarities which the excitation portion and the permanent magnet magnetize the magnetic material salient poles are arranged in such a manner as to become identical.

25. The rotary electric machine system according to claim 1, **characterized in that** an assembled permanent magnet is set to an equivalent permanent magnet in which permanent magnet plates having the same magnetization in an approximately circumferential direction are arranged in both side surfaces of an intermediate magnetic material salient pole, the magnetic material salient pole and the assembled permanent magnet are arranged alternately in the circumferential direction in a surface opposed to the armature in the surface magnetic pole portion, the assembled permanent magnets which are adjacent in such a manner as to magnetize the adjacent magnetic material salient poles to inverse direction to each other are arranged so as to inverse the magnetizations, and the polarities which the excitation portion and the assembled permanent magnet magnetize the magnetic material salient poles are arranged so as to be identical.

26. The rotary electric machine system according to claim 1, further comprising a control device, and having a rotating force as an input and a generated power as an output, **characterized in that** the movable magnetic pole portion is displaced so as to make an area in which the field magnet and the magnetic material salient pole extension portion are opposed small at a time when a generated voltage induced by the armature coil is larger than a predetermined value, and the movable magnetic pole portion is displaced so as to make the area in which the field magnet and the magnetic material salient pole extension portion are opposed large at a time when the generated voltage is smaller than the predetermined value, whereby the generated voltage is controlled to the predetermined value, by means of the control device.

27. The rotary electric machine system according to claim 1, further comprising a control device, and having an electric current fed to the armature coil as an input and a rotating force as an output, **characterized in that** the movable magnetic pole portion is displaced so as to make an area in which the field magnet and the magnetic material salient pole extension portion are opposed small at a time when a rotating speed is larger than a predetermined value so as to reduce a magnetic flux amount flowing in the armature, and the movable magnetic pole portion is displaced so as to make the area in which the field magnet and the magnetic material salient pole extension portion are opposed large at a time when the rotating speed is smaller than the predetermined value so as to increase the magnetic flux amount flowing in the armature, whereby the rotating force is appropriately controlled, by means of the control device.

28. The rotary electric machine system according to claim 1, further comprising a control device, and having an electric current fed to the armature coil as an input and a rotating force as an output, **characterized in that** the movable magnetic pole portion is displaced by the control device so as to make a magnetic flux amount flowing in the armature large in the case of reducing the rotating speed, whereby an area in which the field magnet and the magnetic material salient pole extension portion are opposed is enlarged, and a rotational energy is picked up as a generated power.

29. A magnetic flux amount control method of controlling a magnetic flux amount flowing in an armature of a rotary electric machine having an armature including an armature coil, a surface magnetic pole portion including a plurality of magnetic material salient poles which are relatively rotatable while being opposed to the armature and arranged in a circumferential direction while being opposed to the armature, and an excitation portion including field magnets arranged in such a manner as to magnetize adjacent magnetic material salient poles to inverse polarities to each other, comprising the steps of arranging one magnetic pole of the field magnet opposed to a magnetic material salient pole extension portion and a bypass magnetic pole arranged in a side of the surface magnetic pole portion opposed to the excitation portion, connecting a main magnetic flux path by which a magnetic flux flowing into the magnetic material salient pole extension portion from one magnetic pole of the field magnet flows back to the other magnetic pole via the armature and the adjacent magnetic material salient pole, and a bypass magnetic flux path by which a magnetic flux flowing into the bypass magnetic pole from one magnetic pole of the field magnet flows back to the other magnetic pole mainly within the field portion in parallel to the field magnet, structuring a movable magnetic pole portion so as to be capable of relatively dispalcing with respect to a remainder in such a manner as to change each of an area in which the field magnet is opposed to the magnetic material salient pole extension portion and an area in which the field magnet is opposed to the bypass magnetic pole while keeping a sum of the area constant, on the assumption that any one of the surface magnetic pole portion and the excitation portion is the movable magnetic pole portion, and displacing the movable magnetic pole portion so as to control a magnetic flux amount flowing in the armature.

30. The magnetic flux amount control method according to claim 29, further comprising the steps of setting a minimum magnetic force condition in which a value obtained by dividing a magnetic resistance of the bypass magnetic flux path by the number of the series field magnets included within the bypass magnetic flux path is approximately equal to a value obtained by dividing a magnetic resistance of the main magnetic flux path by the number of the series field magnets included within the main magnetic flux path to each other.

31. The magnetic flux amount control method according to claim 29, further comprising a magnetic resistance regulating means for regulating a magnetic resistance of the main magnetic flux path or the bypass magnetic flux path, and comprising the steps of regulating the magnetic resistance of the main magnetic flux path or the bypass magnetic flux path in such a manner as to make a force necessary for displacing the movable magnetic pole portion small.

32. The magnetic flux amount control method according to claim 31, further comprising the steps of regulating the magnetic resistance of the bypass magnetic flux path and the magnetic resistance of the main magnetic flux path to the minimum magnetic force condition by the magnetic resistance regulating means at a time of displacing the movable magnetic pole portion.

33. The magnetic flux amount control method according to claim 31, further comprising the steps that the magnetic resistance regulating means regulates the magnetic resistance of the main magnetic flux path small or the magnetic resistance of the bypass magnetic flux path large in accordance with the minimum magnetic force condition at a time of increasing the magnetic flux amount flowing in the armature, and the magnetic resistance regulating means regulates the magnetic resistance of the main magnetic flux path large or the magnetic resistance of the bypass magnetic flux path small in accordance with the minimum magnetic force condition at a time of reducing the magnetic flux amount flowing in the armature, and simultaneously the movable magnetic pole portion is displaced.

34. The magnetic flux amount control method according to claim 31, further comprising a detecting means of a magnetic force applied to the movable magnetic pole portion on the basis of the magnetic resistances of the main magnetic flux path and the bypass magnetic flux path being deflected from the minimum magnetic force condition, and comprising the steps of monitoring a relationship between a parameter relating to an intermittently changed magnetic resistance regulating means, or said parameter changing during a normal operation and the magnetic force applied to the movable magnetic pole portion, and setting said parameter making the magnetic force applied to the movable magnetic pole portion small as a minimum magnetic force condition parameter.
